(19)

Europäisches
Patentamt
European
Patent Office
Office européen
des brevets

(11) **EP 4 099 076 A1**

(12) **EUROPEAN PATENT APPLICATION**
published in accordance with Art. 153(4) EPC

(43) Date of publication:
**07.12.2022 Bulletin 2022/49**

(21) Application number: **20921054.1**

(22) Date of filing: **10.09.2020**

(51) International Patent Classification (IPC):
**G02B 15/16** (2006.01)

(52) Cooperative Patent Classification (CPC):
**G02B 15/16; G02B 15/167; G02B 15/177**

(86) International application number:
**PCT/CN2020/114566**

(87) International publication number:
**WO 2021/169245 (02.09.2021 Gazette 2021/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.02.2020 CN 202010132392**

(71) Applicant: **Huawei Technologies Co., Ltd.**
**Shenzhen, Guangdong 518129 (CN)**

(72) Inventors:
• **YAO, Xiuwen**
**Shenzhen, Guangdong 518129 (CN)**
• **ZHOU, Shaopan**
**Shenzhen, Guangdong 518129 (CN)**
• **JIA, Yuanlin**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **ZOOM LENS, CAMERA MODULE AND MOBILE TERMINAL**

(57) A zoom lens, a camera module (200), and a mobile terminal, which are used in a mobile terminal such as a mobile phone or a tablet computer, are provided to improve photographing quality of the zoom lens. The zoom lens includes a first lens group (G1) with negative focal power, a second lens group (G2) with positive focal power, and a third lens group (G3) with negative focal power that are sequentially arranged from an object side to an image side. The first lens group (G1) is a fixed lens group. The second lens group (G2) is a zoom lens group and slides along an optical axis on an image side of the first lens group (G1). The third lens group (G3) is a compensation lens group and slides along the optical axis on an image side of the second lens group (G2). In addition, the zoom lens may further include a fixed fourth lens group (G4) located on an image side of the third lens group (G3). When the zoom lens zooms from a wide-angle state to a telephoto state, both the second lens group (G2) and the third lens group (G3) move towards the object side. In addition, a distance between the third lens group (G3) and the second lens group (G2) first decreases and then increases. This can implement continuous zoom of the zoom lens, and improve photographing quality of the zoom lens.

FIG. 2

EP 4 099 076 A1

**Description**

**CROSS-REFERENCE TO RELATED APPLICATIONS**

This application claims priority to Chinese Patent Application No. 202010132392.2, filed with the China National Intellectual Property Administration on February 29, 2020 and entitled "ZOOM LENS, CAMERA MODULE, AND MOBILE TERMINAL", which is incorporated herein by reference in its entirety.

**TECHNICAL FIELD**

This application relates to the field of terminal technologies, and in particular, to a zoom lens, a camera module, and a mobile terminal.

**BACKGROUND**

With popularization and development of smartphones, mobile phone photographing becomes a photographing manner commonly used by people, and requirements for mobile phone photographing technologies are increasingly high, for example, a wider zoom range, higher resolution, and higher imaging quality.

To obtain a wider zoom range, a "jump-type" zoom adjustment manner is generally used for highmagnification optical zoom of a lens of a mobile phone in the market. For example, a plurality of lenses with different focal lengths are mounted, and cooperate with algorithm-based digital zoom, to implement hybrid optical zoom. However, this zoom manner cannot implement real continuous zoom. In a zoom process of the mobile phone, imaging definition is poor within a focal length range in which focal length ranges of the plurality of lenses are discontinuous, and photographing definition is lower than the real continuous zoom. Therefore, photographing quality of the zoom lens is affected.

**SUMMARY**

This application provides a zoom lens, a camera module, and a mobile terminal, to improve photographing quality of the zoom lens.

According to a first aspect, a zoom lens is provided. The zoom lens is used in a mobile terminal such as a mobile phone or a tablet computer. The zoom lens includes a plurality of lens groups. These lens groups include a first lens group, a second lens group, and a third lens group that are arranged along an object side to an image side. The first lens group is a lens group with negative focal power, the second lens group is a lens group with positive focal power, and the third lens group is a lens group with negative focal power. In the foregoing lens groups, the first lens group is a fixed lens group, and the second lens group and the third lens group are configured to move along an optical axis to adjust a focal length when the zoom lens zooms. The second lens group is a zoom lens group and slides along the optical axis on an image side of the first lens group. The third lens group is a compensation lens group and slides along the optical axis on an image side of the second lens group. When the zoom lens zooms from a wide-angle state to a telephoto state, both the second lens group and the third lens group move towards the object side. In addition, a distance between the third lens group and the second lens group first decreases and then increases. This can implement continuous zoom of the zoom lens, and improve photographing quality of the zoom lens.

In a specific implementation, to ensure that the zoom lens has a good continuous zoom capability, a total quantity N of lenses in the first lens group, the second lens group, and the third lens group meets:

$$7 \leq N \leq 11.$$

In a specific implementation, to enable the zoom lens to have good imaging quality, lenses included in the zoom lens meet:

**N $\leq$ a quantity of aspheric surfaces $\leq$ 2N, where the quantity of aspheric surfaces is a quantity of aspheric** surfaces of all lenses included in the zoom lens, to improve imaging quality.

In addition to the foregoing form of three lens groups, a form of four lens groups may alternatively be used. For example, in a specific implementation, the zoom lens further includes a fourth lens group, and the fourth lens group is located on an image side of the third lens group. The fourth lens group is a lens group with positive focal power, and the fourth lens group is a fixed lens group. This can further improve imaging definition of the zoom lens and improve photographing quality.

In a specific implementation, to ensure that the zoom lens has a good continuous zoom capability, a total quantity N of lenses in the first lens group, the second lens group, the third lens group, and the fourth lens group meets:

$$7 \le N \le 13.$$

Regardless of a zoom lens having three lens groups or a zoom lens having four lens groups, the following limitation is optional.

In a specific implementation, to enable the zoom lens to have good imaging quality, lenses included in the zoom lens meet:

**N $\le$ a quantity of aspheric surfaces $\le$ 2N, where the quantity of aspheric surfaces is a quantity of aspheric** surfaces of all lenses included in the zoom lens, to improve imaging quality.

In a specific implementation, to ensure that the zoom lens has a good continuous zoom capability, a focal **length f1 of the first lens group and a focal length ft at a telephoto end of the zoom lens meet $0.2 \le |f1/ft| \le 0.9$.**

A focal length f2 of the second lens group and the focal length ft meet **$0.10 \le |f2/ft| \le 0.6$.**

A focal length f3 of the third lens group and the focal length ft meet **$0.10 \le |f3/ft| \le 0.7$.**

In a specific implementation, the first lens group to the third lens group may be combined in different manners. For example:

Sequentially arranged from the object side to the image side: the first lens group G1 with negative focal power, where a ratio of the focal length f1 of the first lens group G1 to the focal length ft at the telephoto end of the zoom lens is |f1/ft| = 0.579; the second lens group G2 with positive focal power, where a ratio of the focal length f2 of the second lens group G2 to the focal length ft at the telephoto end of the zoom lens is |f2/ft| = 0.293; and the third lens group G3 with negative focal power, where a ratio of the focal length f3 of the third lens group G3 to the focal length ft at the telephoto end of the zoom lens is |f3/ft| = 0.308.

Sequentially arranged from the object side to the image side: the first lens group G1 with negative focal power, where a ratio of the focal length f1 of the first lens group G1 to the focal length ft at the telephoto end of the zoom lens is |f1/ft| = 0.573; the second lens group G2 with positive focal power, where a ratio of the focal length f2 of the second lens group G2 to the focal length ft at the telephoto end of the zoom lens is |f2/ft| = 0.282; and the third lens group G3 with negative focal power, where a ratio of the focal length f3 of the third lens group G3 to the focal length ft at the telephoto end of the zoom lens is |f3/ft| = 0.147.

Sequentially arranged from the object side to the image side: the first lens group G1 with negative focal power, where the ratio of the focal length f1 of the first lens group G1 to the focal length ft at the telephoto end of the zoom lens is |f1/ft| = 0.605; the second lens group G2 with positive focal power, where the ratio of the focal length f2 of the second lens group G2 to the focal length ft at the telephoto end of the zoom lens is |f2/ft| = 0.283; and the third lens group G3 with negative focal power, where the ratio of the focal length f3 of the third lens group G3 to the focal length ft at the telephoto end of the zoom lens is |f3/ft| = 0.298.

Sequentially arranged from the object side to the image side: the first lens group G1 with negative focal power, where the ratio of the focal length f1 of the first lens group G1 to the focal length ft (namely, a focal length when the zoom lens is in the telephoto state) at the telephoto end of the zoom lens is |f1/ft| = 0.796; the second lens group G2 with positive focal power, where the ratio of the focal length f2 of the second lens group G2 to the focal length ft at the telephoto end of the zoom lens is |f2/ft| = 0.309; and the third lens group G3 with negative focal power, where the ratio of the focal length f3 of the third lens group G3 to the focal length ft at the telephoto end of the zoom lens is |f3/ft| = 0.597.

Sequentially arranged from the object side to the image side: the first lens group G1 with negative focal power, where the ratio of the focal length f1 of the first lens group G1 to the focal length ft at the telephoto end of the zoom lens is |f1/ft| = 0.556; the second lens group G2 with positive focal power, where the ratio of the focal length f2 of the second lens group G2 to the focal length ft at the telephoto end of the zoom lens is |f2/ft| = 0.241; the third lens group G3 with negative focal power, where the ratio of the focal length f3 of the third lens group G3 to the focal length ft at the telephoto end of the zoom lens is |f3/ft| = 0.211; and the fourth lens group G4 with positive focal power, where a ratio of a focal length f4 of the fourth lens group G4 to the focal length ft at the telephoto end of the zoom lens is |f4/ft| = 0.286.

Sequentially arranged from the object side to the image side: the first lens group G1 with negative focal power, where the ratio of the focal length f1 of the first lens group G1 to the focal length ft at the telephoto end of the zoom lens is |f1/ft| = 0.579; the second lens group G2 with positive focal power, where the ratio of the focal length f2 of the second lens group G2 to the focal length ft at the telephoto end of the zoom lens is |f2/ft| = 0.260; the third lens group G3 with negative focal power, where the ratio of the focal length f3 of the third lens group G3 to the focal length ft at the telephoto end of the zoom lens is |f3/ft| = 0.205; and the fourth lens group G4 with positive focal power, where the ratio of the focal length f4 of the fourth lens group G4 to the focal length ft at the telephoto end of the zoom lens is |f4/ft| = 0.307.

Sequentially arranged from the object side to the image side: the first lens group G1 with negative focal power, where the ratio of the focal length f1 of the first lens group G1 to the focal length ft at the telephoto end of the zoom lens is |f1/ft| = 0.634; the second lens group G2 with positive focal power, where the ratio of the focal length f2 of the second lens group G2 to the focal length ft at the telephoto end of the zoom lens is |f2/ft| = 0.228; the third lens group G3 with negative focal power, where the ratio of the focal length f3 of the third lens group G3 to the focal length ft at the telephoto

end of the zoom lens is |f3/ft| = 0.171; and the fourth lens group G4 with positive focal power, where the ratio of the focal length f4 of the fourth lens group G4 to the focal length ft at the telephoto end of the zoom lens is |f4/ft| = 0.570.

Sequentially arranged from the object side to the image side: the first lens group G1 with negative focal power, where the ratio of the focal length f1 of the first lens group G1 to the focal length ft at the telephoto end of the zoom lens is |f1/ft| = 0.447; the second lens group G2 with positive focal power, where the ratio of the focal length f2 of the second lens group G2 to the focal length ft at the telephoto end of the zoom lens is |f2/ft| = 0.217; the third lens group G3 with negative focal power, where the ratio of the focal length f3 of the third lens group G3 to the focal length ft at the telephoto end of the zoom lens is |f3/ft| = 0.202; and the fourth lens group G4 with positive focal power, where the ratio of the focal length f4 of the fourth lens group G4 to the focal length ft at the telephoto end of the zoom lens is |f4/ft| = 0.881.

Sequentially arranged from the object side to the image side: the first lens group G1 with negative focal power, where the ratio of the focal length f1 of the first lens group G1 to the focal length ft at the telephoto end of the zoom lens is |f1/ft| = 0.71; the second lens group G2 with positive focal power, where the ratio of the focal length f2 of the second lens group G2 to the focal length ft at the telephoto end of the zoom lens is |f2/ft| = 0.23; the third lens group G3 with negative focal power, where the ratio of the focal length f3 of the third lens group G3 to the focal length ft at the telephoto end of the zoom lens is |f3/ft| = 0.335; and the fourth lens group G4 with positive focal power, where the ratio of the focal length f4 of the fourth lens group G4 to the focal length ft at the telephoto end of the zoom lens is |f4/ft| = 0.384.

In a specific implementation, a movement stroke L1 of the second lens group along the optical axis and a total length TTL of the zoom lens from a surface closest to the object side to an imaging plane meet $0.12 \leq |L1/TTL| \leq 0.35$.

In a specific implementation, a movement stroke L2 of the third lens group along the optical axis and the total length TTL of the zoom lens from the surface closest to the object side to the imaging plane meet $0.08 \leq |L2/TTL| \leq 0.3$.

In a specific implementation, the second lens group includes at least one lens with negative focal power, to correct aberration.

In a specific implementation, the zoom lens further includes a prism or a mirror reflector. The prism or the mirror reflector is located on an object side of the first lens group. The prism or the mirror reflector is configured to deflect a light ray to the first lens group. This can implement periscope photographing, to more flexibly design an installation position and an installation direction of the zoom lens.

In a specific implementation, a lens of each lens group in the zoom lens has a cut for reducing a height of the lens. This can reduce space occupied by the zoom lens and increase luminous flux.

In a specific implementation, a height h in a vertical direction of a lens included in each lens group in the zoom lens meets:

$4 \text{ mm} \leq h \leq 6 \text{ mm}$, to fit installation space of a mobile terminal such as a mobile phone.

In a specific implementation, to ensure the luminous flux and the space occupied, a maximum aperture diameter d of a lens included in each lens group in the zoom lens meets:

$4 \text{ mm} \leq d \leq 12 \text{ mm}$.

In a specific implementation, a difference between a chief ray angle when the zoom lens is in a wide-angle state and a chief ray angle when the zoom lens is in a telephoto state is less than or equal to 6°.

In a specific implementation, an object distance of the zoom lens ranges from infinity to 40 mm.

In a specific implementation, a range of a ratio of a half-image height IMH to an effective focal length ft at the telephoto end of the zoom lens meets $0.02 \leq |IMH/ft| \leq 0.20$.

In a specific embodiment, the effective focal length ft at the telephoto end and an effective focal length fw at a wide-angle end of the zoom lens meet $1 \leq |ft/fw| \leq 3.7$.

According to a second aspect, a camera module is provided. The camera module includes a camera chip and the zoom lens according to any one of the first aspect and the implementations of the first aspect. A light ray passes through the zoom lens and strikes the camera chip. A second lens group is configured to implement zoom, and a third lens group is configured to implement focusing through focal length compensation. This can achieve continuous zoom and improve photographing quality of the zoom lens.

According to a third aspect, a mobile terminal is provided. The mobile terminal may be a mobile phone, a tablet computer, or the like. The mobile terminal includes a housing, and the zoom lens according to any one of the first aspect and the implementations of the first aspect and disposed in the housing according to any one of the foregoing implementations. A second lens group is configured to implement zoom, and a third lens group is configured to implement focusing through focal length compensation. This can achieve continuous zoom and improve photographing quality of the zoom lens.

## BRIEF DESCRIPTION OF DRAWINGS

FIG. 1 is a sectional view of an example of a mobile terminal in which a zoom lens is used according to an embodiment of this application;

FIG. 2 is an example of a zoom lens having three lens groups according to an embodiment of this application;

FIG. 3 is a diagram of an example of a structure of a lens in a first lens group in FIG. 2;

FIG. 4 is an example of a first specific zoom lens;

FIG. 5 is a zoom process of the zoom lens shown in FIG. 4;

FIG. 6a shows axial aberration curves of the zoom lens shown in FIG. 4 in a wide-angle state W;

FIG. 6b shows axial aberration curves of the zoom lens shown in FIG. 4 in a first intermediate focal length state M1;

FIG. 6c shows axial aberration curves of the zoom lens shown in FIG. 4 in a second intermediate focal length state M2;

FIG. 6d shows axial aberration curves of the zoom lens shown in FIG. 4 in a telephoto state T;

FIG. 7a shows lateral chromatic aberration curves of the zoom lens shown in FIG. 4 in the wide-angle state W;

FIG. 7b shows lateral chromatic aberration curves of the zoom lens shown in FIG. 4 in the first intermediate focal length state M1;

FIG. 7c shows lateral chromatic aberration curves of the zoom lens shown in FIG. 4 in the second intermediate focal length state M2;

FIG. 7d shows lateral chromatic aberration curves of the zoom lens shown in FIG. 4 in the telephoto state T;

FIG. 8a shows optical distortion curves of the zoom lens shown in FIG. 4 in the wide-angle state W;

FIG. 8b shows optical distortion percentages of the zoom lens shown in FIG. 4 in the wide-angle state W;

FIG. 9a shows optical distortion curves of the zoom lens shown in FIG. 4 in the first intermediate focal length state M1;

FIG. 9b shows optical distortion percentages of the zoom lens shown in FIG. 4 in the first intermediate focal length state M1;

FIG. 10a shows optical distortion curves of the zoom lens shown in FIG. 4 in the second intermediate focal length state M2;

FIG. 10b shows optical distortion percentages of the zoom lens shown in FIG. 4 in the second intermediate focal length state M2;

FIG. 11a shows optical distortion curves of the zoom lens shown in FIG. 4 in the telephoto state T;

FIG. 11b shows optical distortion percentages of the zoom lens shown in FIG. 4 in the telephoto state T;

FIG. 12 is an example of a second specific zoom lens;

FIG. 13 is a zoom process of the zoom lens shown in FIG. 12;

FIG. 14a shows axial aberration curves of the zoom lens shown in FIG. 12 in a wide-angle state W;

FIG. 14b shows axial aberration curves of the zoom lens shown in FIG. 12 in a first intermediate focal length state M1;

FIG. 14c shows axial aberration curves of the zoom lens shown in FIG. 12 in a second intermediate focal length state M2;

FIG. 14d shows axial aberration curves of the zoom lens shown in FIG. 12 in a telephoto state T;

FIG. 15a shows lateral chromatic aberration curves of the zoom lens shown in FIG. 12 in the wide-angle state W;

FIG. 15b shows lateral chromatic aberration curves of the zoom lens shown in FIG. 12 in the first intermediate focal length state M1;

FIG. 15c shows lateral chromatic aberration curves of the zoom lens shown in FIG. 12 in the second intermediate focal length state M2;

FIG. 15d shows lateral chromatic aberration curves of the zoom lens shown in FIG. 12 in the telephoto state T;

FIG. 16a shows optical distortion curves of the zoom lens shown in FIG. 12 in the wide-angle state W;

FIG. 16b shows optical distortion percentages of the zoom lens shown in FIG. 12 in the wide-angle state W;

FIG. 17a shows optical distortion curves of the zoom lens shown in FIG. 12 in the first intermediate focal length state M1;

FIG. 17b shows optical distortion percentages of the zoom lens shown in FIG. 12 in the first intermediate focal length state M1;

FIG. 18a shows optical distortion curves of the zoom lens shown in FIG. 12 in the second intermediate focal length state M2;

FIG. 18b shows optical distortion percentages of the zoom lens shown in FIG. 12 in the second intermediate focal length state M2;

FIG. 19a shows optical distortion curves of the zoom lens shown in FIG. 12 in the telephoto state T;

FIG. 19b shows optical distortion percentages of the zoom lens shown in FIG. 12 in the telephoto state T;

FIG. 20 is an example of a third specific zoom lens;

FIG. 21 is a zoom process of the zoom lens shown in FIG. 20;

FIG. 22a shows axial aberration curves of the zoom lens shown in FIG. 20 in a wide-angle state W;

FIG. 22b shows axial aberration curves of the zoom lens shown in FIG. 20 in a first intermediate focal length state M1;

FIG. 22c shows axial aberration curves of the zoom lens shown in FIG. 20 in a second intermediate focal length state M2;

FIG. 22d shows axial aberration curves of the zoom lens shown in FIG. 20 in a telephoto state T;

FIG. 23a shows lateral chromatic aberration curves of the zoom lens shown in FIG. 20 in the wide-angle state W;

FIG. 23b shows lateral chromatic aberration curves of the zoom lens shown in FIG. 20 in the first intermediate focal length state M1;

FIG. 23c shows lateral chromatic aberration curves of the zoom lens shown in FIG. 20 in the second intermediate focal length state M2;

FIG. 23d shows lateral chromatic aberration curves of the zoom lens shown in FIG. 20 in the telephoto state T;

FIG. 24a shows optical distortion curves of the zoom lens shown in FIG. 20 in the wide-angle state W;

FIG. 24b shows optical distortion percentages of the zoom lens shown in FIG. 20 in the wide-angle state W;

FIG. 25a shows optical distortion curves of the zoom lens shown in FIG. 20 in the first intermediate focal length state M1;

FIG. 25b shows optical distortion percentages of the zoom lens shown in FIG. 20 in the first intermediate focal length state M1;

FIG. 26a shows optical distortion curves of the zoom lens shown in FIG. 20 in the second intermediate focal length state M2;

FIG. 26b shows optical distortion percentages of the zoom lens shown in FIG. 20 in the second intermediate focal length state M2;

FIG. 27a shows optical distortion curves of the zoom lens shown in FIG. 20 in the telephoto state T;

FIG. 27b shows optical distortion percentages of the zoom lens shown in FIG. 20 in the telephoto state T;

FIG. 28 is an example of a fourth specific zoom lens;

FIG. 29 is a zoom process of the zoom lens shown in FIG. 28;

FIG. 30a shows axial aberration curves of the zoom lens shown in FIG. 28 in a wide-angle state W;

FIG. 30b shows axial aberration curves of the zoom lens shown in FIG. 28 in an intermediate focal length state M;

FIG. 30c shows axial aberration curves of the zoom lens shown in FIG. 28 in a telephoto state T;

FIG. 31a shows lateral chromatic aberration curves of the zoom lens shown in FIG. 28 in the wide-angle state W;

FIG. 31b shows lateral chromatic aberration curves of the zoom lens shown in FIG. 28 in the intermediate focal length state M;

FIG. 31c shows lateral chromatic aberration curves of the zoom lens shown in FIG. 28 in the telephoto state T;

FIG. 32a shows optical distortion curves of the zoom lens shown in FIG. 28 in the wide-angle state W;

FIG. 32b shows optical distortion percentages of the zoom lens shown in FIG. 28 in the wide-angle state W;

FIG. 33a shows optical distortion curves of the zoom lens shown in FIG. 28 in the intermediate focal length state M;

FIG. 33b shows optical distortion percentages of the zoom lens shown in FIG. 28 in the intermediate focal length state M;

FIG. 34a shows optical distortion curves of the zoom lens shown in FIG. 28 in the telephoto state T;

FIG. 34b shows optical distortion percentages of the zoom lens shown in FIG. 28 in the telephoto state T;

FIG. 35 is an example of a fifth specific zoom lens;

FIG. 36 is a zoom process of the zoom lens shown in FIG. 35;

FIG. 37a shows axial aberration curves of the zoom lens shown in FIG. 35 in a wide-angle state W;

FIG. 37b shows axial aberration curves of the zoom lens shown in FIG. 35 in a first intermediate focal length state M1;

FIG. 37c shows axial aberration curves of the zoom lens shown in FIG. 35 in a second intermediate focal length state M2;

FIG. 37d shows axial aberration curves of the zoom lens shown in FIG. 35 in a telephoto state T;

FIG. 38a shows lateral chromatic aberration curves of the zoom lens shown in FIG. 35 in the wide-angle state W;

FIG. 38b shows lateral chromatic aberration curves of the zoom lens shown in FIG. 35 in the first intermediate focal length state M1;

FIG. 38c shows lateral chromatic aberration curves of the zoom lens shown in FIG. 35 in the second intermediate focal length state M2;

FIG. 38d shows lateral chromatic aberration curves of the zoom lens shown in FIG. 35 in the telephoto state T;

FIG. 39a shows optical distortion curves of the zoom lens shown in FIG. 35 in the wide-angle state W;

FIG. 39b shows optical distortion percentages of the zoom lens shown in FIG. 35 in the wide-angle state W;

FIG. 40a shows optical distortion curves of the zoom lens shown in FIG. 35 in the first intermediate focal length state M1;

FIG. 40b shows optical distortion percentages of the zoom lens shown in FIG. 35 in the first intermediate focal length state M1;

FIG. 41a shows optical distortion curves of the zoom lens shown in FIG. 35 in the second intermediate focal length state M2;

FIG. 41b shows optical distortion percentages of the zoom lens shown in FIG. 35 in the second intermediate focal length state M2;

FIG. 42a shows optical distortion curves of the zoom lens shown in FIG. 35 in the telephoto state T;

FIG. 42b shows optical distortion percentages of the zoom lens shown in FIG. 35 in the telephoto state T;

FIG. 43 is an example of a sixth specific zoom lens;

FIG. 44 is a zoom process of the zoom lens shown in FIG. 43;

FIG. 45a shows axial aberration curves of the zoom lens shown in FIG. 43 in a wide-angle state W;

FIG. 45b shows axial aberration curves of the zoom lens shown in FIG. 43 in a first intermediate focal length state M1;

FIG. 45c shows axial aberration curves of the zoom lens shown in FIG. 43 in a second intermediate focal length state M2;

FIG. 45d shows axial aberration curves of the zoom lens shown in FIG. 43 in a telephoto state T;

FIG. 46a shows lateral chromatic aberration curves of the zoom lens shown in FIG. 43 in the wide-angle state W;

FIG. 46b shows lateral chromatic aberration curves of the zoom lens shown in FIG. 43 in the first intermediate focal length state M1;

FIG. 46c shows lateral chromatic aberration curves of the zoom lens shown in FIG. 43 in the second intermediate focal length state M2;

FIG. 46d shows lateral chromatic aberration curves of the zoom lens shown in FIG. 43 in the telephoto state T;

FIG. 47a shows optical distortion curves of the zoom lens shown in FIG. 43 in the wide-angle state W;

FIG. 47b shows optical distortion percentages of the zoom lens shown in FIG. 43 in the wide-angle state W;

FIG. 48a shows optical distortion curves of the zoom lens shown in FIG. 43 in the first intermediate focal length state M1;

FIG. 48b shows optical distortion percentages of the zoom lens shown in FIG. 43 in the first intermediate focal length state M1;

FIG. 49a shows optical distortion curves of the zoom lens shown in FIG. 43 in the second intermediate focal length state M2;

FIG. 49b shows optical distortion percentages of the zoom lens shown in FIG. 43 in the second intermediate focal length state M2;

FIG. 50a shows optical distortion curves of the zoom lens shown in FIG. 43 in the telephoto state T;

FIG. 50b shows optical distortion percentages of the zoom lens shown in FIG. 43 in the telephoto state T;

FIG. 51 is an example of a seventh specific zoom lens;

FIG. 52 is a zoom process of the zoom lens shown in FIG. 51;

FIG. 53a shows axial aberration curves of the zoom lens shown in FIG. 51 in a wide-angle state W;

FIG. 53b shows axial aberration curves of the zoom lens shown in FIG. 51 in a first intermediate focal length state M1;

FIG. 53c shows axial aberration curves of the zoom lens shown in FIG. 51 in a second intermediate focal length state M2;

FIG. 53d shows axial aberration curves of the zoom lens shown in FIG. 51 in a telephoto state T;

FIG. 54a shows lateral chromatic aberration curves of the zoom lens shown in FIG. 51 in the wide-angle state W;

FIG. 54b shows lateral chromatic aberration curves of the zoom lens shown in FIG. 51 in the first intermediate focal length state M1;

FIG. 54c shows lateral chromatic aberration curves of the zoom lens shown in FIG. 51 in the second intermediate focal length state M2;

FIG. 54d shows lateral chromatic aberration curves of the zoom lens shown in FIG. 51 in the telephoto state T;

FIG. 55a shows optical distortion curves of the zoom lens shown in FIG. 51 in the wide-angle state W;

FIG. 55b shows optical distortion percentages of the zoom lens shown in FIG. 51 in the wide-angle state W;

FIG. 56a shows optical distortion curves of the zoom lens shown in FIG. 51 in the first intermediate focal length state M1;

FIG. 56b shows optical distortion percentages of the zoom lens shown in FIG. 51 in the first intermediate focal length state M1;

FIG. 57a shows optical distortion curves of the zoom lens shown in FIG. 51 in the second intermediate focal length state M2;

FIG. 57b shows optical distortion percentages of the zoom lens shown in FIG. 51 in the second intermediate focal length state M2;

FIG. 58a shows optical distortion curves of the zoom lens shown in FIG. 51 in the telephoto state T;

FIG. 58b shows optical distortion percentages of the zoom lens shown in FIG. 51 in the telephoto state T;

FIG. 59 is an example of an eighth specific zoom lens;

FIG. 60 is a zoom process of the zoom lens shown in FIG. 59;

FIG. 61a shows axial aberration curves of the zoom lens shown in FIG. 59 in a wide-angle state W;

FIG. 61b shows axial aberration curves of the zoom lens shown in FIG. 59 in a first intermediate focal length state M1;

FIG. 61c shows axial aberration curves of the zoom lens shown in FIG. 59 in a second intermediate focal length state M2;

FIG. 61d shows axial aberration curves of the zoom lens shown in FIG. 59 in a telephoto state T;

FIG. 62a shows lateral chromatic aberration curves of the zoom lens shown in FIG. 59 in the wide-angle state W;
FIG. 62b shows lateral chromatic aberration curves of the zoom lens shown in FIG. 59 in the first intermediate focal length state M1;
FIG. 62c shows lateral chromatic aberration curves of the zoom lens shown in FIG. 59 in the second intermediate focal length state M2;
FIG. 62d shows lateral chromatic aberration curves of the zoom lens shown in FIG. 59 in the telephoto state T;
FIG. 63a shows optical distortion curves of the zoom lens shown in FIG. 59 in the wide-angle state W;
FIG. 63b shows optical distortion percentages of the zoom lens shown in FIG. 59 in the wide-angle state W;
FIG. 64a shows optical distortion curves of the zoom lens shown in FIG. 59 in the first intermediate focal length state M1;
FIG. 64b shows optical distortion percentages of the zoom lens shown in FIG. 59 in the first intermediate focal length state M1;
FIG. 65a shows optical distortion curves of the zoom lens shown in FIG. 59 in the second intermediate focal length state M2;
FIG. 65b shows optical distortion percentages of the zoom lens shown in FIG. 59 in the second intermediate focal length state M2;
FIG. 66a shows optical distortion curves of the zoom lens shown in FIG. 59 in the telephoto state T;
FIG. 66b shows optical distortion percentages of the zoom lens shown in FIG. 59 in the telephoto state T;
FIG. 67 is an example of a ninth specific zoom lens;
FIG. 68 is a zoom process of the zoom lens shown in FIG. 67;
FIG. 69a shows axial aberration curves of the zoom lens shown in FIG. 67 in a wide-angle state W;
FIG. 69b shows axial aberration curves of the zoom lens shown in FIG. 67 in a first intermediate focal length state M1;
FIG. 69c shows axial aberration curves of the zoom lens shown in FIG. 67 in a second intermediate focal length state M2;
FIG. 69d shows axial aberration curves of the zoom lens shown in FIG. 67 in a telephoto state T;
FIG. 70a shows lateral chromatic aberration curves of the zoom lens shown in FIG. 67 in the wide-angle state W;
FIG. 70b shows lateral chromatic aberration curves of the zoom lens shown in FIG. 67 in the first intermediate focal length state M1;
FIG. 70c shows lateral chromatic aberration curves of the zoom lens shown in FIG. 67 in the second intermediate focal length state M2;
FIG. 70d shows lateral chromatic aberration curves of the zoom lens shown in FIG. 67 in the telephoto state T;
FIG. 71a shows optical distortion curves of the zoom lens shown in FIG. 67 in the wide-angle state W;
FIG. 71b shows optical distortion percentages of the zoom lens shown in FIG. 67 in the wide-angle state W;
FIG. 72a shows optical distortion curves of the zoom lens shown in FIG. 67 in the first intermediate focal length state M1;
FIG. 72b shows optical distortion percentages of the zoom lens shown in FIG. 67 in the first intermediate focal length state M1;
FIG. 73a shows optical distortion curves of the zoom lens shown in FIG. 67 in the second intermediate focal length state M2;
FIG. 73b shows optical distortion percentages of the zoom lens shown in FIG. 67 in the second intermediate focal length state M2;
FIG. 74a shows optical distortion curves of the zoom lens shown in FIG. 67 in the telephoto state T;
FIG. 74b shows optical distortion percentages of the zoom lens shown in FIG. 67 in the telephoto state T;
FIG. 75 shows another zoom lens;
FIG. 76 is a schematic diagram of application of the zoom lens shown in FIG. 60 in a mobile phone; and
FIG. 77 shows another zoom lens.

## DESCRIPTION OF EMBODIMENTS

For ease of understanding a zoom lens provided in embodiments of this application, English abbreviations and related nouns in this application have the following meanings.

A lens with positive focal power has a positive focal length and converges light rays.

A lens with negative focal power has a negative focal length and diverges light rays.

Fixed lens group: In embodiments of this application, a fixed lens group is a lens group with a fixed position in a zoom lens.

Zoom lens group: In embodiments of this application, a zoom lens group is a lens group that is in a zoom lens and that adjusts a focal length of the zoom lens by moving.

Compensation lens group: In embodiments of this application, a compensation lens group is a lens group that moves collaboratively with a zoom lens group and that is used to compensate for a focus adjustment range of the zoom lens group.

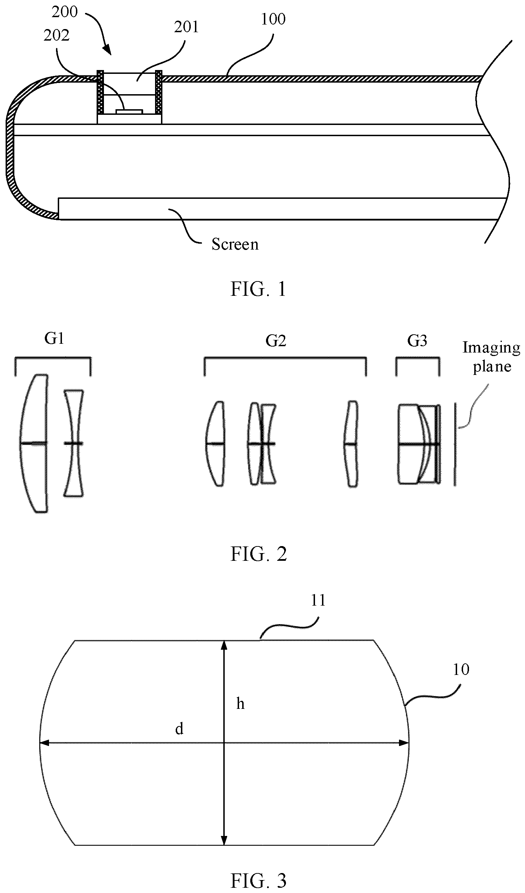

An imaging plane is a carrier surface that is located on image sides of all lenses in a zoom lens and that is of an image formed after light successively passes through the lenses in the zoom lens. For a position of the imaging plane, refer to FIG. 2.

F-number: An F-number/aperture is a ratio (a reciprocal of a relative aperture) of a focal length of a zoom lens to an aperture diameter of the zoom lens. A smaller aperture F -number indicates more light passing through the lens per unit time period. A larger aperture F -number indicates a smaller depth of field and blurring of a background of a photo. This effect is similar to that of a long-focus zoom lens.

FOV: field of view.

TTL: A total track length is specifically a total length from a surface closest to an object side to an imaging plane. TTL is a main factor that forms a camera height.

CRA: chief ray angle.

IMH: image height. A half-image height is a height from an imaging edge to a center of an imaging plane.

To facilitate understanding of the zoom lens provided in embodiments of this application, an application scenario of the zoom lens provided in embodiments of this application is first described. The zoom lens provided in embodiments of this application is used in a camera module of a mobile terminal. The mobile terminal may be a common mobile terminal such as a mobile phone or a tablet computer. FIG. 1 is a sectional view of a mobile phone. Refer to FIG. 1. FIG. 1 is a sectional view of the mobile phone. A lens 201 of a camera module 200 is fastened to a housing 100 of the mobile terminal, and a camera chip 202 is fastened in the housing 100. During use, a light ray passes through the lens 201 and strikes the camera chip 202, and the camera chip 202 converts an optical signal into an electrical signal and performs imaging, to implement photographing effect. To obtain a wider zoom range, jump-type digital zoom is generally used in a camera module 200 in a conventional technology. To be specific, a plurality of (for example, two to three) lenses with different focal lengths are mounted, and cooperate with algorithm-based digital zoom, to implement hybrid optical zoom. However, the jump-type digital zoom is based on a plurality of cameras with different focal lengths, and continuous zoom is implemented through algorithm processing. This is not real continuous zoom, and imaging definition is poor in some focal length ranges. To resolve the foregoing technical problem, a zoom lens is provided in embodiments of this application.

To facilitate understanding of the zoom lens provided in embodiments of this application, the following describes the zoom lens provided in embodiments of this application with reference to specific accompanying drawings and embodiments.

FIG. 2 is an example of a zoom lens having three lens groups according to an embodiment of this application. Refer to FIG. 2. The zoom lens includes three lens groups: a first lens group G1, a second lens group G2, and a third lens group G3 that are arranged along an object side to an image side. The first lens group G1 is a lens group with negative focal power, the second lens group G2 is a lens group with positive focal power, and the third lens group G3 is a lens group with negative focal power. A lens group with positive focal power has a positive focal length and converges light rays, and a lens group with negative focal power has a negative focal length and diverges light rays.

Still refer to FIG. 2. In the foregoing three lens groups, the first lens group G1 is a fixed lens group. For example, a position of the first lens group G1 is fixed relative to the housing 100 in FIG. 1, that is, the position of the first lens group G1 is fixed relative to an imaging plane. The second lens group G2 and the third lens group G3 may move along an optical axis of the zoom lens relative to the first lens group G1. Specifically, the second lens group G2 slides along the optical axis of the zoom lens on an image side of the first lens group G1. The third lens group G3 slides along the optical axis of the zoom lens on an image side of the second lens group G2. The second lens group G2 serves as a zoom lens group to greatly adjust a focal length, to implement zoom. The third lens group G3 serves as a compensation lens group to slightly adjust the focal length, to implement focusing. Therefore, the second lens group G2 has a larger stroke than the third lens group G3.

FIG. 3 shows a lens 10 of the first lens group G1 in FIG. 2, where d is a maximum aperture diameter of the lens 10, h is a height of the lens 10, and the maximum aperture diameter d is a maximum diameter of the lens 10. Two opposite sides (or one side) of the lens 10 have a cut 11, to reduce a height of the lens 10, so that h is less than d. In this embodiment of this application, a lens structure similar to that shown in FIG. 3 is used in each lens in the first lens group G1, the second lens group G2, and the third lens group G3. Luminous flux may be greater than that of a circular lens whose diameter is h, and a size in a height direction may be less than that of a circular lens whose diameter is d. A maximum aperture diameter of a lens in the first lens group G1, the second lens group G2, and the third lens **group G3 meets 4 mm $\leq$ maximum aperture diameter d $\leq$ 12** mm. A maximum aperture diameter of a lens in the foregoing lens groups may be of a size such as 4 mm, 8 mm, 8.8 mm, 9.6 mm, 9.888 mm, 10 mm, or 12 mm, so that the zoom lens can balance an amount of light passing through the zoom lens and space occupied by the zoom lens. In addition, in the first lens group G1, the second lens group G2, and the third lens group G3, lenses of each lens group have a cut similar to the cut 11 of the lens 10. For example, a height in a vertical direction of each lens meets 4 mm ≤ **height in a vertical direction ≤ 6 mm. For example, the height in the vertical direction may be 4 mm, 5 mm, or 6 mm,** to reduce a height of the zoom lens, so that the zoom lens can be used in a scenario with small space, such as a mobile phone.

To facilitate understanding of effect of the zoom lens provided in this embodiment of this application, the following describes imaging effect of the zoom lens in detail with reference to a specific embodiment.

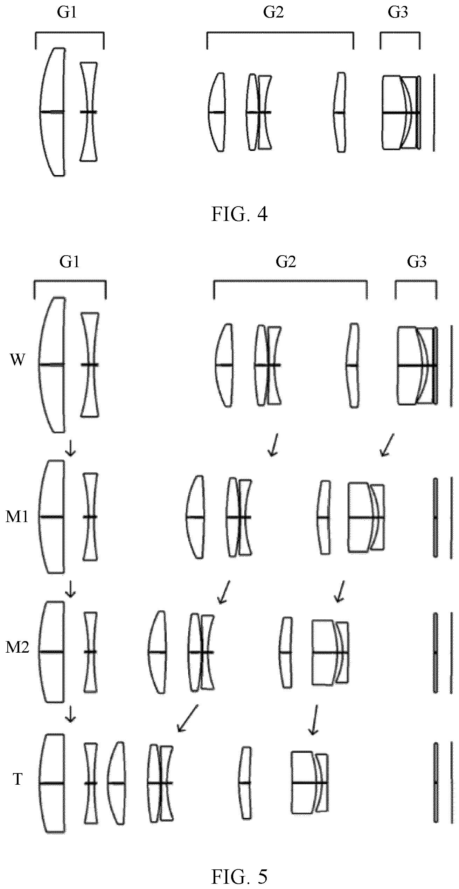

FIG. 4 is an example of a first specific zoom lens. The zoom lens sequentially includes the following from an object side to an image side: a first lens group G1 with negative focal power, where a ratio of a focal length f1 of the first lens group G1 to a focal length ft (namely, a focal length when the zoom lens is in a telephoto state) at a telephoto end of the zoom lens is |f1/ft| = 0.579; a second lens group G2 with positive focal power, where a ratio of a focal length f2 of the second lens group G2 to the focal length ft at the telephoto end of the zoom lens is |f2/ft| = 0.293; and a third lens group G3 with negative focal power, where a ratio of a focal length f3 of the third lens group G3 to the focal length ft at the telephoto end of the zoom lens is |f3/ft| = 0.308.

Still refer to FIG. 4. The zoom lens includes eight lenses with focal power, and includes 10 aspheric surfaces in total. The first lens group G1 includes two lenses sequentially distributed from the object side to the image side, and the two lenses are with positive and negative focal power respectively. The second lens group G2 sequentially includes four lenses sequentially distributed from the object side to the image side, and the four lenses are with positive, positive, negative, and positive focal power respectively. The third lens group G3 includes two lenses sequentially distributed from the object side to the image side, and the two lenses are with positive and negative focal power respectively. The second lens group G2 includes at least one lens with negative focal power, to eliminate an aberration. In addition, the zoom lens further has a stop (not shown in FIG. 4). The stop is located on an object side of the second lens group G2, but is not limited thereto. Alternatively, the stop may be disposed on an image side or an object side of the first lens group G1, or may be disposed on an image side or an object side of the third lens group G3. A maximum aperture diameter of a lens in the first lens group G1, the second lens group G2, and the third lens group G3 is 9.888 mm.

Subsequently, refer to Table 1a and Table 1b. Table 1a shows a surface curvature, a thickness (Thickness), a refractive index (nd), and an abbe coefficient (vd) of each lens of the zoom lens shown in FIG. 4 in a wide-angle state. R1 to R16 in a table header on a left column indicate 16 surfaces of the eight lenses from the object side to the image side. For example, R1 indicates a surface on an object side of a first lens from the object side, R2 indicates a surface on an image side of the first lens from the object side, R3 indicates a surface on an object side of a second lens from the object side, R4 indicates a surface on an image side of the second lens from the object side, and so on. In the table header of the top row, R indicates a curvature of a corresponding lens surface. In thickness (Thickness), d1 to d8 indicate thicknesses of the eight lenses respectively from the object side to the image side, in mm. In addition, a1 to a8 indicate distances between every two adjacent lenses (or between a lens and an imaging plane) respectively from the object side to the image side. For example, a1 indicates a size of a gap between the first lens and the second lens, a2 indicates a size of a gap between the second lens and a third lens, and so on. Finally, a8 indicates a size of a gap between an eighth lens and the imaging plane, in mm. Moreover, n1 to n8 indicate refractive indexes of the eight lenses respectively from the object side to the image side, and v1 to v8 indicate abbe coefficients of the eight lenses respectively from the object side to the image side. Table 1b shows aspheric coefficients of aspheric surfaces of the lenses.

**Table 1a**

|  | R | Thickness | | nd | | vd | |
|---|---|---|---|---|---|---|---|
| R1 | 13.412 | d1 | 1.8 | n1 | 1.67 | v1 | 19.2 |
| R2 | 167.655 | a1 | 1.847 | | | | |
| R3 | -13.107 | d2 | 0.4 | n2 | 1.90 | v2 | 31.3 |
| R4 | 20.280 | a2 | 9 | | | | |
| R5 | 6.285 | d3 | 1.285 | n3 | 1.54 | v3 | 56.0 |
| R6 | -28.038 | a3 | 1.676 | | | | |
| R7 | 16.951 | d4 | 0.943 | n4 | 1.54 | v4 | 56.0 |
| R8 | -14.786 | a4 | 0.080 | | | | |
| R9 | -37.994 | d5 | 0.400 | n5 | 1.67 | v5 | 19.2 |
| R10 | 8.983 | a5 | 5.332 | | | | |

(continued)

|  | R | Thickness | | nd | | vd | |
|---|---|---|---|---|---|---|---|
| R11 | 8.705 | d6 | 0.821 | n6 | 1.67 | v6 | 19.2 |
| R12 | 19.433 | a6 | 2.997 | | | | |
| R13 | -36.499 | d7 | 1.800 | n7 | 1.67 | v7 | 19.2 |
| R14 | -6.977 | a7 | 0.410 | | | | |
| R15 | -4.749 | d8 | 0.400 | n8 | 1.88 | v8 | 19.2 |
| R16 | -127.677 | a8 | 0.080 | | | | |

**Table 1b**

| Aspheric coefficient | | | | | | | |
|---|---|---|---|---|---|---|---|
| | Type | K | A2 | A3 | A4 | A5 | A6 |
| R1 | Even aspheric | 0.00E+00 | 8.84E-05 | 4.04E-07 | 2.39E-07 | -8.48E-09 | 3.25E-10 |
| R2 | Even aspheric | 0.00E+00 | -6.00E-05 | 1.76E-06 | -6.24E-08 | 1.12E-08 | -1.17E-10 |
| R5 | Even aspheric | 0.00E+00 | -1.97E-04 | 1.06E-05 | -7.24E-07 | 3.84E-08 | 4.42E-10 |
| R6 | Even aspheric | 0.00E+00 | 5.22E-04 | 9.80E-06 | -4.02E-07 | 2.72E-08 | -1.76E-10 |
| R9 | Even aspheric | 0.00E+00 | 3.37E-04 | 1.58E-05 | 1.68E-06 | -3.63E-07 | 2.71E-09 |
| R10 | Even aspheric | 0.00E+00 | 7.04E-04 | 5.67E-05 | 4.003E-06 | -2.33E-07 | -1.92E-08 |
| R11 | Even aspheric | 0.00E+00 | -1.61E-03 | -7.30E-05 | -3.87E-06 | 1.80E-07 | -3.51E-08 |
| R12 | Even aspheric | 0.00E+00 | -1.53E-03 | -9.21E-05 | 2.92E-07 | -3.22E-07 | -1.39E-09 |
| R13 | Even aspheric | 0.00E+00 | 1.60E-03 | 8.05E-06 | 2.62E-05 | -331E-06 | 2.10E-07 |
| R14 | Even aspheric | 0.00E+00 | 7.91E-04 | -9.71E-06 | 2.56E-05 | -3.57E-06 | 2.37E-07 |

In the 10 aspheric surfaces of the zoom lens shown in Table 1b, surface types z of all the even aspheric surfaces may be defined according to, but not limited to, the following aspheric surface formula:

$$z = \frac{cr^2}{1 + \sqrt{1 - Kc^2r^2}} + A_2r^4 + A_3r^6 + A_4r^8 + A_5r^{10} + A_6r^{12}$$

where
z is a vector height of the aspheric surface, r is a radial coordinate of the aspheric surface, c is a spherical curvature of a vertex on the aspheric surface, K is a conic constant, and A2, A3, A4, A5, and A6 are aspheric coefficients.

Because the zoom lens has the 10 aspheric surfaces, the aspheric surfaces may be flexibly designed, and a good aspheric surface type may be designed based on an actual requirement, to improve imaging quality.

A structure of the zoom lens shown in FIG. 4 is used for light to pass through. A ratio |TTL/ft| of a total length TTL of the zoom lens from a surface closest to the object side to the imaging plane to the effective focal length ft at the telephoto end of the zoom lens may reach 0.912. A small total optical length may be used to achieve a long focal length. A ratio |IMH/ft| of a half-image height IMH to the effective focal length ft at the telephoto end of the zoom lens may reach 0.08955.

As shown in FIG. 4, a position of the first lens group G1 is fixed relative to the imaging plane, and the second lens group G2 and the third lens group G3 move along an optical axis, to implement continuous zoom.

FIG. 5 is a zoom process of the zoom lens shown in FIG. 4. The zoom lens has four focal length states: W indicates the wide-angle state, M1 indicates a first intermediate focal length state, M2 indicates a second intermediate focal length state, and T indicates the telephoto state. The wide-angle state of the zoom lens corresponds to the following relative positions of the lens groups. The third lens group G3 is close to the imaging plane, and the second lens group G2 is close to an object side of the third lens group G3. When the zoom lens zooms from the wide-angle state W to the first intermediate focal length state M1, the second lens group G2 moves towards the first lens group G1, and the third lens group G3 moves towards the second lens group G2. When the zoom lens zooms from the first intermediate focal length state M1 to the second intermediate focal length state M2, the second lens group G2 continues to move towards the first lens group G1, and the third lens group G3 continues to move towards the second lens group G2. When the zoom lens zooms from the second intermediate focal length state M2 to the telephoto state T, the second lens group G2 continues to move towards the first lens group G1, and the third lens group G3 continues to move towards the second lens group G2.

It can be seen from FIG. 5 that when the zoom lens zooms from the wide-angle state W to the telephoto state T, both the second lens group G2 and the third lens group G3 keep moving towards the object side, but a distance between the third lens group G3 and the second lens group G2 first decreases and then increases, to implement continuous zoom. The second lens group G2 serves as a zoom lens group, and a ratio |L1/TTL| of a movement stroke L1 of the second lens group G2 along the optical axis to a total length TTL of the zoom lens from the surface closest to the object side to the imaging plane is 0.26178. The third lens group G3 serves as a compensation lens group, and a ratio |L2/TTL| of a movement stroke L2 of the third lens group G3 along the optical axis to the total length TTL of the zoom lens from the surface closest to the object side to the imaging plane is 0.256.

Refer to Table 1c and Table 1d correspondingly. Table 1c shows basic parameters of the zoom lens, and Table 1d shows spacing distances between the lens groups of the zoom lens in the wide-angle state W, the first intermediate focal length state M1, the second intermediate focal length state M2, and the telephoto state T.

**Table 1c**

|  | W | M1 | M2 | T |
|---|---|---|---|---|
| Focal length F | 11.5 mm | 17 mm | 24 mm | 33.5 mm |
| F-number | 2.54 | 3.44 | 4.28 | 5.10 |
| Half-image height IMH | 3 mm | 3 mm | 3 mm | 3 mm |
| Half FOV | 15° | 10.012° | 7.085° | 5.086° |
| BFL | 1.37 mm | 5.003 mm | 7.665 mm | 9.223 mm |
| TTL | 30.56 mm | 30.56 mm | 30.56 mm | 30.56 mm |
| Designed wavelength | 650 nm, 610 nm, 555 nm, 510 nm, and 470 nm | | | |

**Table 1d**

|  | W | M1 | M2 | T |
|---|---|---|---|---|
| a2 | 9 mm | 6.864 mm | 4.049 mm | 1.00 mm |
| a6 | 2.997 mm | 1.5 mm | 1.652 mm | 3.144 mm |
| a8 | 0.080 mm | 3.713 mm | 6.375 mm | 9.933 mm |

Simulation is performed on the zoom lens shown in FIG. 4. The following describes imaging effect of the zoom lens with reference to the accompanying drawings.

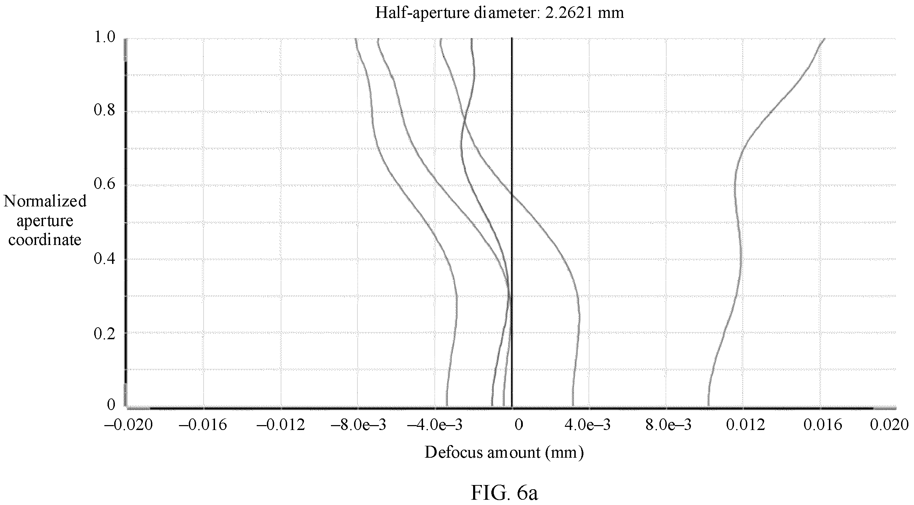

FIG. 6a shows axial aberration curves of the zoom lens shown in FIG. 4 in the wide-angle state W. Five curves respectively indicate simulation results of light with wavelengths of 650 nm, 610 nm, 555 nm, 510 nm, and 470 nm at focus depth positions when a half-aperture diameter is 2.2621 mm. It can be seen from FIG. 6a that, at any specific normalized aperture coordinate, a difference between defocus amounts of curves corresponding to every two different wavelengths is less than 0.026 mm. In other words, axial aberrations of the zoom lens in the wide-angle state W are controlled within a small range.

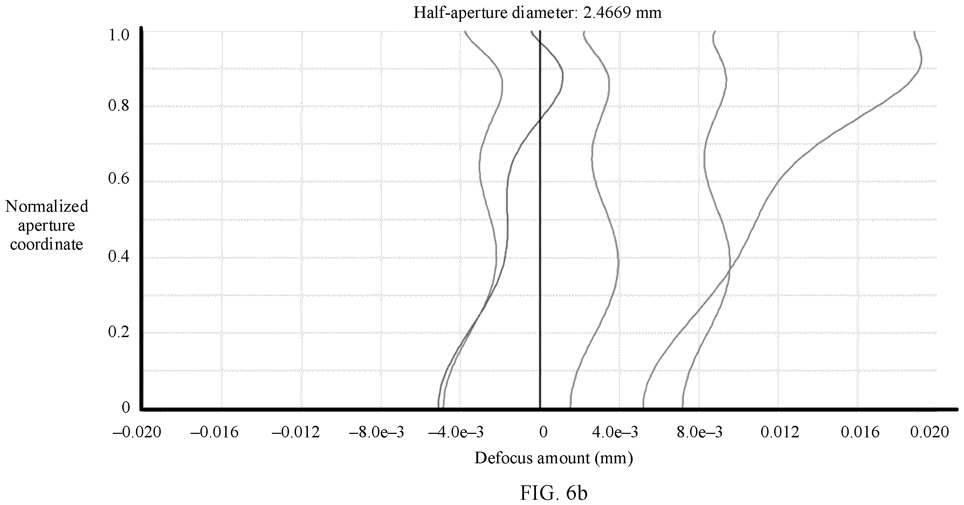

FIG. 6b shows axial aberration curves of the zoom lens shown in FIG. 4 in the first intermediate focal length state M1. Five curves respectively indicate simulation results of light with wavelengths of 650 nm, 610 nm, 555 nm, 510 nm, and 470 nm at focus depth positions when a half-aperture diameter is 2.4669 mm. It can be seen from FIG. 6b that, at any specific normalized aperture coordinate, a difference between defocus amounts of curves corresponding to every two different wavelengths is less than 0.024 mm. In other words, axial aberrations of the zoom lens in the first intermediate focal length state M1 are controlled within a small range.

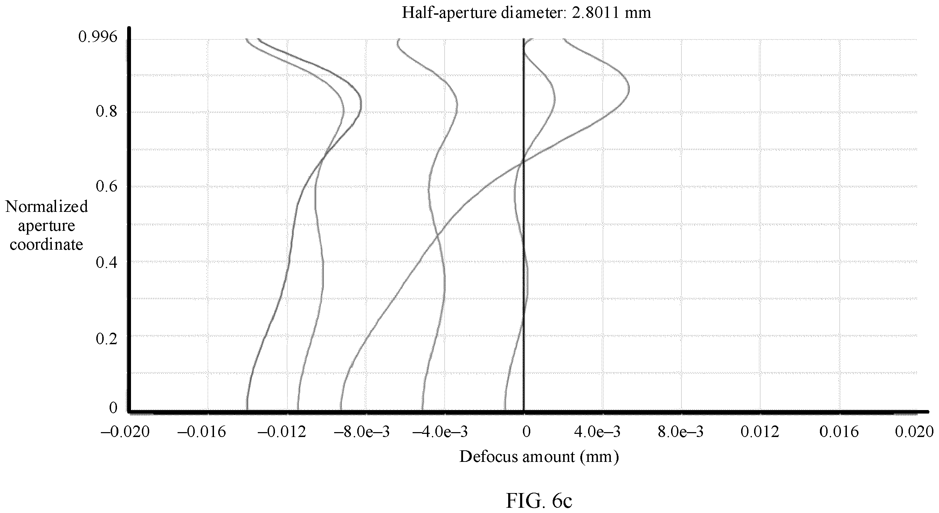

FIG. 6c shows axial aberration curves of the zoom lens shown in FIG. 4 in the second intermediate focal length state M2. Five curves respectively indicate simulation results of light with wavelengths of 650 nm, 610 nm, 555 nm, 510 nm, and 470 nm at focus depth positions when a half-aperture diameter is 2.8011 mm. It can be seen from FIG. 6c that, at any specific normalized aperture coordinate, a difference between defocus amounts of curves corresponding to every two different wavelengths is less than 0.020 mm. In other words, axial aberrations of the zoom lens in the second intermediate focal length state M2 are controlled within a small range.

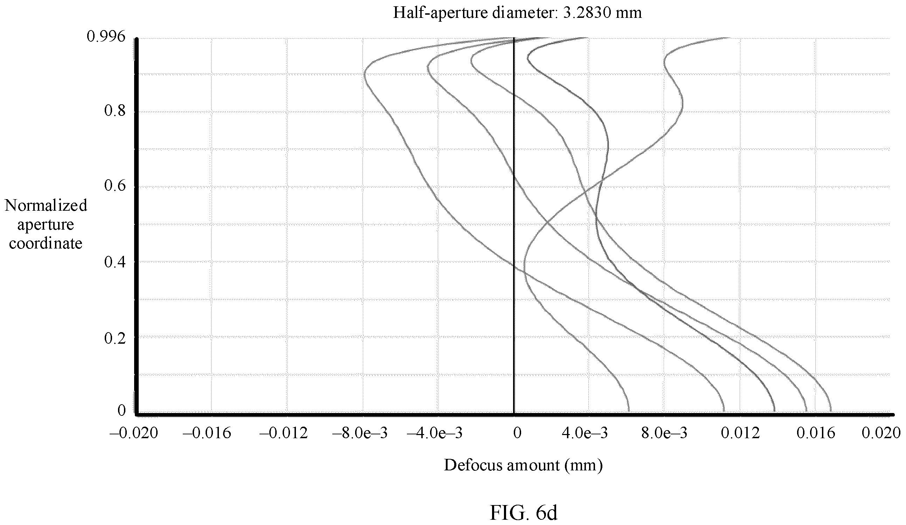

FIG. 6d shows axial aberration curves of the zoom lens shown in FIG. 4 in the telephoto state T. Five curves respectively indicate simulation results of light with wavelengths of 650 nm, 610 nm, 555 nm, 510 nm, and 470 nm at focus depth positions when a half-aperture diameter is 3.2830 mm. It can be seen from FIG. 6d that, at any specific normalized aperture coordinate, a difference between defocus amounts of curves corresponding to every two different wavelengths is less than 0.020 mm. In other words, axial aberrations of the zoom lens in the telephoto state T are controlled within a small range.

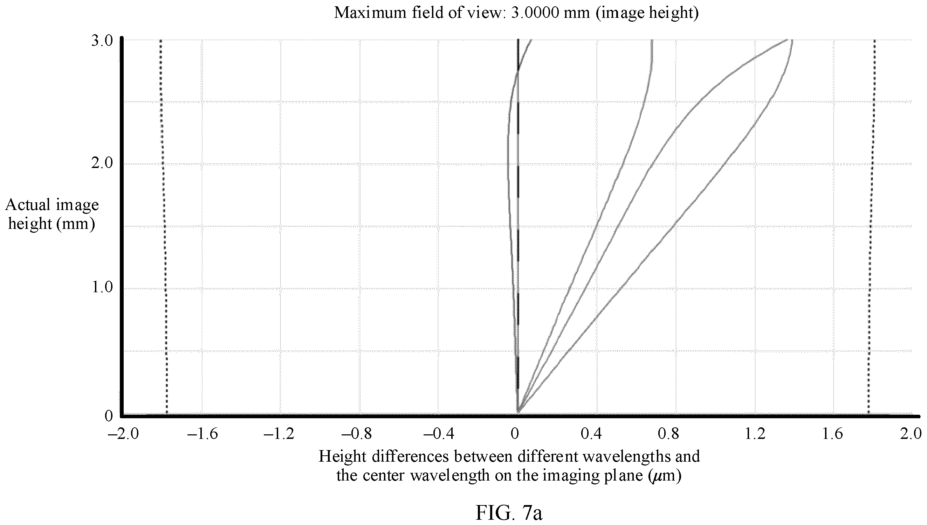

FIG. 7a shows lateral chromatic aberration curves of the zoom lens in the wide-angle state W. Five solid curves in FIG. 7a are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 7a that lateral chromatic aberrations of five light rays are all within the diffraction limit range.

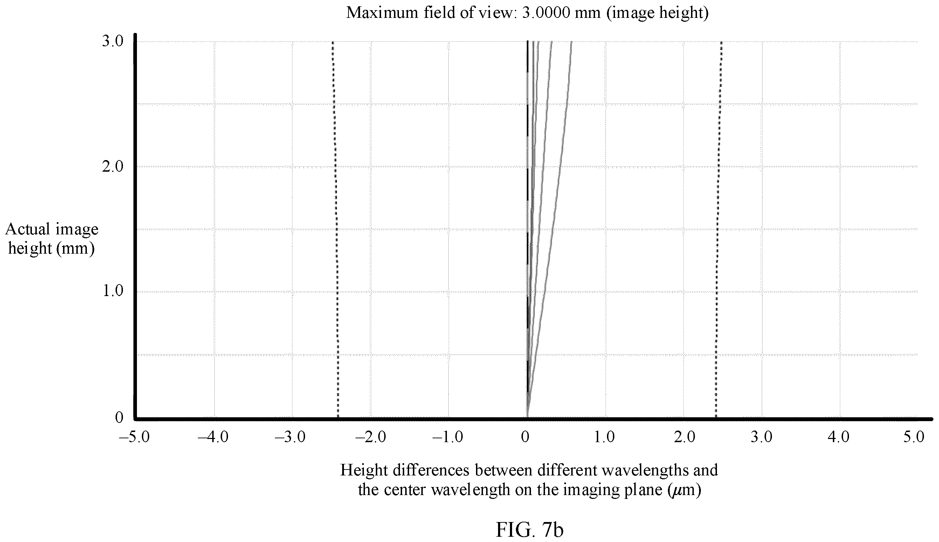

FIG. 7b shows lateral chromatic aberration curves of the zoom lens in the first intermediate focal length state M1. Five solid curves in FIG. 7b are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 7b that lateral chromatic aberrations of five light rays are all within the diffraction limit range.

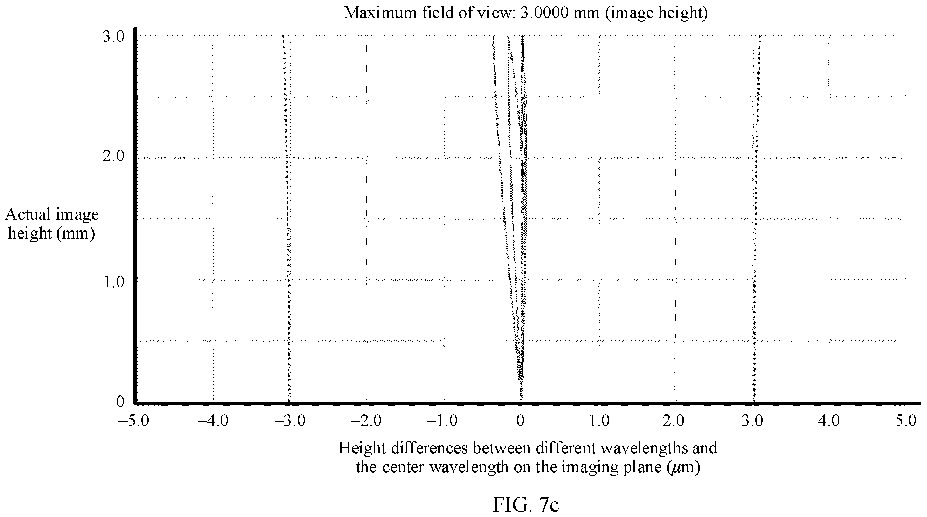

FIG. 7c shows lateral chromatic aberration curves of the zoom lens in the second intermediate focal length state M2. Five solid curves in FIG. 7c are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 7c that lateral chromatic aberrations of five light rays are all within the diffraction limit range.

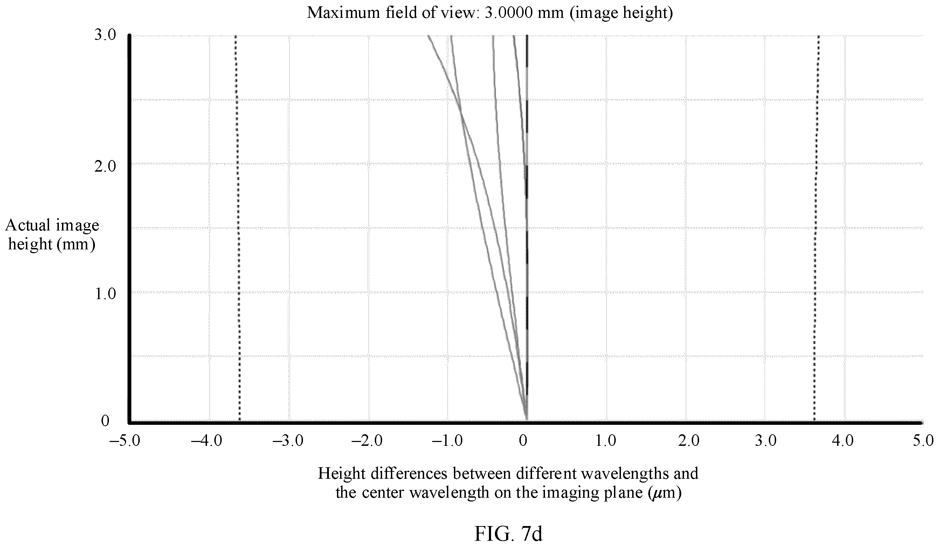

FIG. 7d shows lateral chromatic aberration curves of the zoom lens in the telephoto state T. Five solid curves in FIG. 7d are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 7d that lateral chromatic aberrations of five light rays are all within the diffraction limit range.

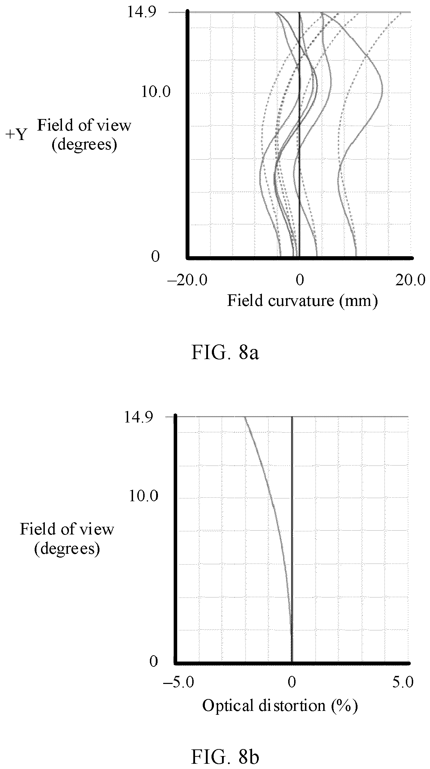

FIG. 8a shows optical distortion curves of the zoom lens in the wide-angle state W, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 8a that the differences between imaging deformations and ideal shapes are very small. FIG. 8b is obtained by calculating percentages of imaging deformations to ideal shapes of the light rays in FIG. 8a. It can be seen from FIG. 8b that optical distortions can be controlled within a range less than 2.2%.

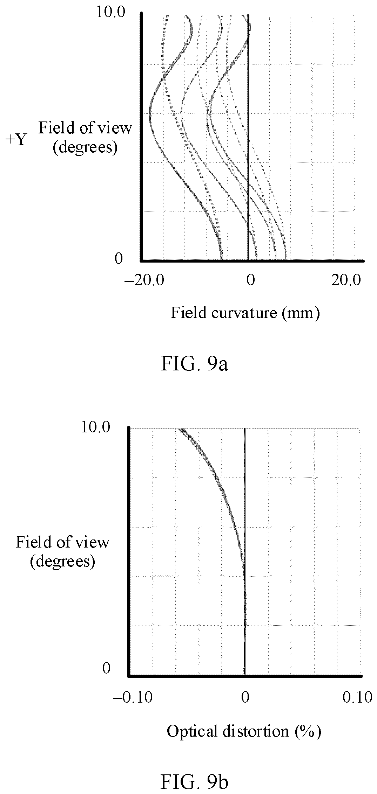

FIG. 9a shows optical distortion curves of the zoom lens in the first intermediate focal length state M1, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 9a that the differences between imaging deformations and ideal shapes are very small. FIG. 9b is obtained by calculating percentages of imaging deformations to ideal shapes of the light rays in FIG. 9a. It can be seen from FIG. 9b that optical distortions can be controlled within a range less than 0.06%.

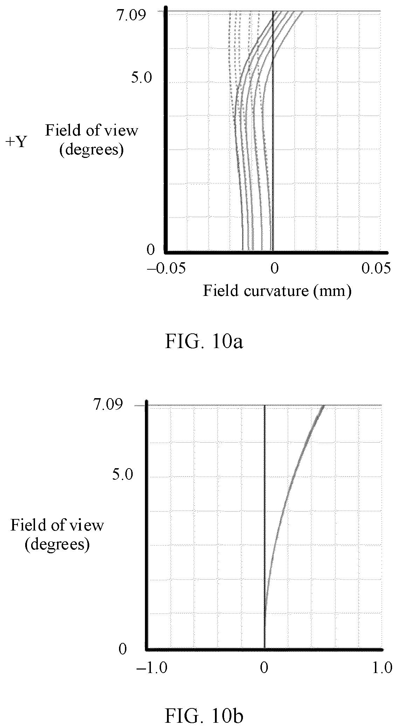

FIG. 10a shows optical distortion curves of the zoom lens in the second intermediate focal length state M2, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 10a that the differences between imaging deformations and ideal shapes are very small. FIG. 10b is obtained by calculating percentages of imaging deformations to ideal shapes of the light rays in FIG. 10a. It can be seen from FIG. 10b that optical distortions can be controlled within a range less than 0.6%.

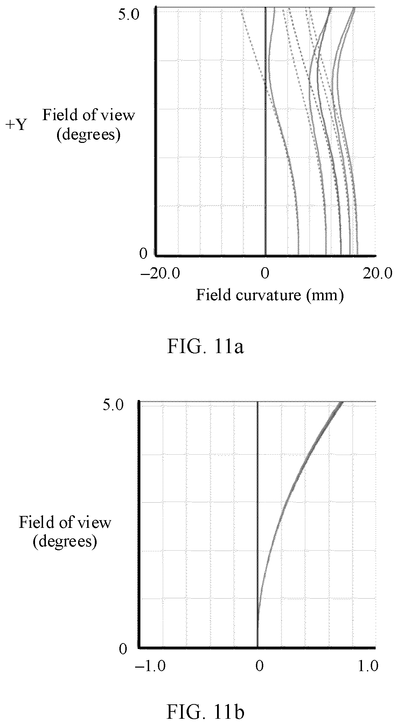

FIG. 11a shows optical distortion curves of the zoom lens in the telephoto state T, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 11a that the differences between imaging deformations and ideal shapes are very small. FIG. 11b is obtained by calculating percentages of imaging deformations to ideal shapes of the light rays in FIG. 11a. It can be seen from FIG. 11b that optical distortions can be controlled within a range less than 0.8%.

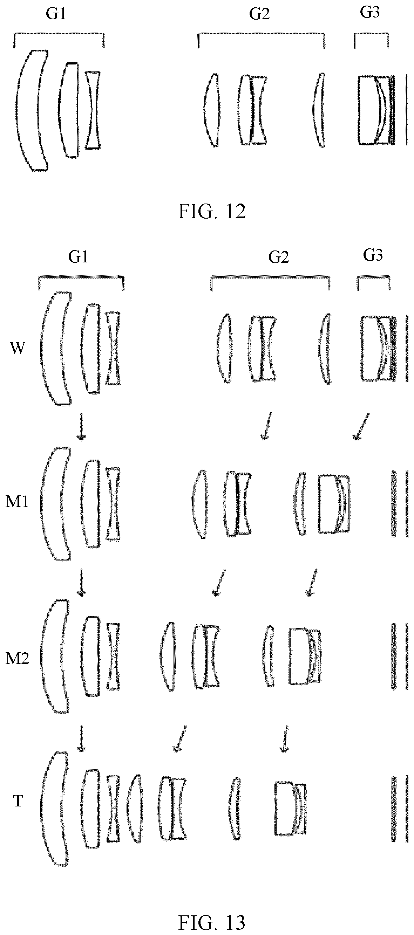

FIG. 12 is an example of a second specific zoom lens. The zoom lens sequentially includes the following from an object side to an image side: a first lens group G1 with negative focal power, where a ratio of a focal length f1 of the first lens group G1 to a focal length ft (namely, a focal length when the zoom lens is in a telephoto state) at a telephoto end of the zoom lens is |f1/ft| = 0.573; a second lens group G2 with positive focal power, where a ratio of a focal length f2 of the second lens group G2 to the focal length ft at the telephoto end of the zoom lens is |f2/ft| = 0.282; and a third lens group G3 with negative focal power, where a ratio of a focal length f3 of the third lens group G3 to the focal length ft at the telephoto end of the zoom lens is |f3/ft| = 0.147.

Still refer to FIG. 12. The zoom lens includes nine lenses with focal power, and includes 12 aspheric surfaces in total. The first lens group G1 includes three lenses sequentially distributed from the object side to the image side, the three lenses are with positive, positive, and negative focal power respectively, and a first lens from the object side to the image side is a positive meniscus lens with a convex surface that bulges towards the object side. The second lens group G2 includes four lenses sequentially distributed from the object side to the image side, and the four lenses are with positive, positive, negative, and positive focal power respectively. The third lens group G3 includes two lenses sequentially distributed from the object side to the image side, and the two lenses are with positive and negative focal power respectively. The second lens group G2 includes at least one lens with negative focal power, to eliminate an aberration. In addition, the zoom lens further has a stop (not shown in FIG. 12). The stop is located on an object side of the second lens group G2, but is not limited thereto. Alternatively, the stop may be disposed on an image side or an object side of the first lens group G1, or may be disposed on an image side or an object side of the third lens group G3. A maximum aperture diameter of a lens in the first lens group G1, the second lens group G2, and the third lens group G3 is 10 mm.

Subsequently, refer to Table 2a and Table 2b. Table 2a shows a surface curvature, a thickness (Thickness), a refractive index (nd), and an abbe coefficient (vd) of each lens of the zoom lens shown in FIG. 12 in a wide-angle state. For meanings of the parameters in Table 2a, refer to introduction in a corresponding part in Table 1a. Table 1b shows aspheric coefficients of aspheric surfaces of the lenses.

**Table 2a**

|  | R | Thickness | | nd | | vd | |
|---|---|---|---|---|---|---|---|
| R1 | 13.501 | d1 | 1.8 | n1 | 1.54 | v1 | 56 |
| R2 | 20.025 | a1 | 1.748 | | | | |
| R3 | 11.969 | d2 | 1.544 | n2 | 1.66 | v2 | 20.4 |
| R4 | 77.071 | a2 | 1.183 | | | | |
| R5 | -10.290 | d3 | 0.4 | n3 | 1.91 | v3 | 35.3 |
| R6 | 18.347 | a3 | 1 | | | | |
| R7 | 6.250 | d4 | 1.234 | n4 | 1.54 | v4 | 56.0 |
| R8 | -21.442 | a4 | 1.568 | | | | |
| R9 | 10.958 | d5 | 1.213 | n5 | 1.54 | v5 | 56.0 |
| R10 | -16.983 | a5 | 0.08 | | | | |
| R11 | -24.937 | d6 | 0.534 | n6 | 1.66 | v6 | 20.4 |
| R12 | 6.849 | a6 | 4.495 | | | | |
| R13 | 7.628 | d7 | 0.701 | n7 | 1.66 | v7 | 20.4 |
| R14 | 21.247 | a7 | 3.415 | | | | |
| R15 | -32.639 | d8 | 1.8 | n8 | 1.66 | v8 | 20.4 |
| R16 | -7.286 | a8 | 0.444 | | | | |
| R17 | -4.677 | d9 | 0.4 | n9 | 1.88 | v9 | 40.8 |
| R18 | -34.496 | a9 | 7.745 | | | | |

**Table 2b**

| Aspheric coefficient | | | | | | | |
|---|---|---|---|---|---|---|---|
| | Type | K | A2 | A3 | A4 | A5 | A6 |
| R1 | Even aspheric | 0.00E+00 | 3.80E-04 | 4.50E-06 | 1.23E-07 | 1.55E-09 | -5.05E-12 |
| R2 | Even aspheric | 0.00E+00 | 4.50E-04 | 7.31E-06 | -7.50E-08 | 1.84E-08 | -6.36E-10 |
| R3 | Even aspheric | 0.00E+00 | 4.93E-05 | 2.24E-06 | 1.74E-08 | -3.50E-09 | -1.20E-09 |
| R4 | Even aspheric | 0.00E+00 | -2.75E-04 | -7.53E-07 | 2.40 E-07 | -5.43E-08 | 9.09E-10 |
| R7 | Even aspheric | 0.00E+00 | -7.82E-05 | 1.87E-05 | -5.11E-07 | 5.98E-08 | 8.78E-10 |
| R8 | Even aspheric | 0.00E+00 | 7.59E-04 | 1.41E-05 | -9.68E-07 | 8.93E-08 | -2.48E-09 |
| R11 | Even aspheric | 0.00E+00 | 4.70E-04 | 2.32E-06 | -5.32E-06 | -1.06E-07 | -2.10E-10 |
| R12 | Even aspheric | 0.00E+00 | 6.35E-04 | 7.29E-05 | 1.06E-06 | -1.01E-06 | 2.43E-08 |
| R13 | Even aspheric | 0.00E+00 | -9.69E-04 | 2.31E-05 | 2.15E-06 | 4.43E-07 | -4.15E-08 |
| R14 | Even aspheric | 0.00E+00 | -6.38E-04 | 1.35E-05 | 3.99E-06 | 2.93E-07 | -3.88E-08 |
| R15 | Even aspheric | 0.00E+00 | 1.74E-03 | 2.22E-05 | 1.81E-05 | -2.16E-06 | 1.48E-07 |
| R16 | Even aspheric | 0.00E+00 | 8.17E-04 | -9.76E-06 | 1.92E-05 | -2.80E-06 | 1.98E-07 |

In the 12 aspheric surfaces of the zoom lens shown in Table 2b, surface types z of all the even aspheric surfaces may be defined according to, but not limited to, the following aspheric surface formula:

$$z = \frac{cr^2}{1 + \sqrt{1 - Kc^2 r^2}} + A_2 r^4 + A_3 r^6 + A_4 r^8 + A_5 r^{10} + A_6 r^{12}$$

,

where
z is a vector height of the aspheric surface, r is a radial coordinate of the aspheric surface, c is a spherical curvature of a vertex on the aspheric surface, K is a conic constant, and A2, A3, A4, A5, and A6 are aspheric coefficients.

Because the zoom lens has the 12 aspheric surfaces, the aspheric surfaces may be flexibly designed, and a good aspheric surface type may be designed based on an actual requirement, to improve imaging quality.

A structure of the zoom lens shown in FIG. 12 is used for light to pass through. A ratio |TTL/ft| of a total length TTL of the zoom lens from a surface closest to the object side to the imaging plane to the effective focal length ft at the telephoto end of the zoom lens may reach 0.973. A small total optical length may be used to achieve a long focal length. A ratio |IMH/ft| of a half-image height IMH to the effective focal length ft at the telephoto end of the zoom lens may reach 0.08988.

As shown in FIG. 12, a position of the first lens group G1 is fixed relative to the imaging plane, and the second lens group G2 and the third lens group G3 move along an optical axis, to implement continuous zoom.

FIG. 13 is a zoom process of the zoom lens shown in FIG. 12. The zoom lens has four focal length states: W indicates the wide-angle state, M1 indicates a first intermediate focal length state, M2 indicates a second intermediate focal length state, and T indicates the telephoto state. The wide-angle state T of the zoom lens corresponds to the following relative positions of the lens groups. The third lens group G3 is close to the imaging plane, and the second lens group G2 is close to an object side of the third lens group G3. When the zoom lens zooms from the wide-angle state W to the first intermediate focal length state M1, the second lens group G2 moves towards the first lens group G1, and the third lens group G3 moves towards the second lens group G2. When the zoom lens zooms from the first intermediate focal length state M1 to the second intermediate focal length state M2, the second lens group G2 continues to move towards the first lens group G1, and the third lens group G3 continues to move towards the second lens group G2. When the zoom lens zooms from the second intermediate focal length state M2 to the telephoto state T, the second lens group G2 continues to move towards the first lens group G1, and the third lens group G3 continues to move towards the second lens group G2.

It can be seen from FIG. 13 that when the zoom lens zooms from the wide-angle state W to the telephoto state T, both the second lens group G2 and the third lens group G3 keep moving towards the object side, but a distance between the third lens group G3 and the second lens group G2 first decreases and then increases, to implement continuous zoom. The second lens group G2 serves as a zoom lens group, and a ratio |L1/TTL| of a movement stroke L1 of the second lens group G2 along the optical axis to a total length TTL of the zoom lens from the surface closest to the object side to the imaging plane is 0.2454. The third lens group G3 serves as a compensation lens group, and a ratio |L2/TTL| of a movement stroke L2 of the third lens group G3 along the optical axis to the total length TTL of the zoom lens from the surface closest to the object side to the imaging plane is 0.23512.

Refer to Table 2c and Table 2d correspondingly. Table 2c shows basic parameters of the zoom lens, and Table 2d shows spacing distances between the lens groups of the zoom lens in the wide-angle state W, the first intermediate focal length state M1, the second intermediate focal length state M2, and the telephoto state T.

**Table 2c**

|  | W | M1 | M2 | T |
|---|---|---|---|---|
| Focal length F | 11.5 mm | 17 mm | 24 mm | 33.5 mm |
| F-number | 2.43 | 3.27 | 4.03 | 4.76 |
| Half-image height IMH | 3 mm | 3 mm | 3 mm | 3 mm |
| Half FOV | 14.7° | 9.982° | 7.081° | 5.088° |
| BFL | 1.37 mm | 5.146 mm | 7.748 mm | 9.035 mm |
| TTL | 32.6 mm | 32.6 mm | 32.6 mm | 32.6 mm |
| Designed wavelength | 650 nm, 610 nm, 555 nm, 510 nm, and 470 nm | | | |

**Table 2d**

|  | W | M1 | M2 | T |
|---|---|---|---|---|
| a3 | 9 mm | 6.804 mm | 3.994 mm | 1.00 mm |
| a7 | 3.080 mm | 1.5 mm | 1.707 mm | 3.415 mm |
| a9 | 0.080 mm | 3.856 mm | 6.458 mm | 7.745 mm |

Simulation is performed on the zoom lens shown in FIG. 12. The following describes imaging effect of the zoom lens with reference to the accompanying drawings.

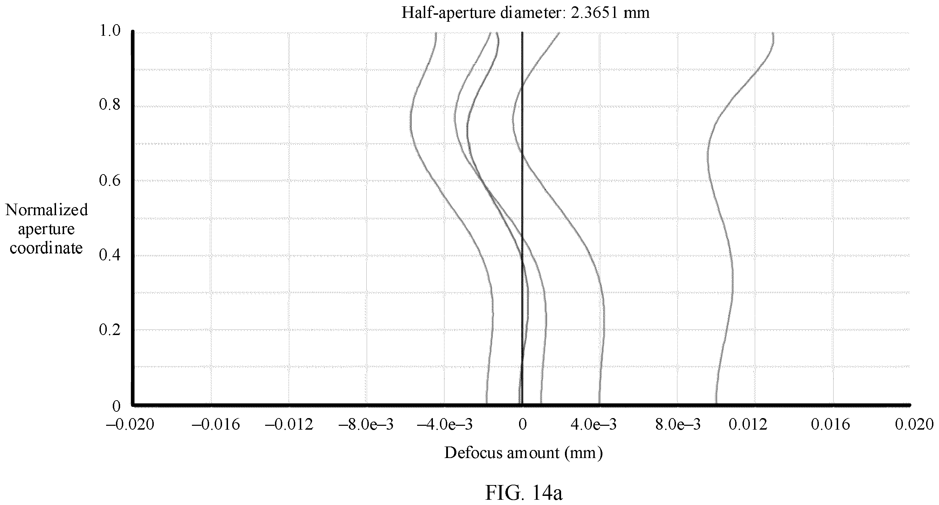

FIG. 14a shows axial aberration curves of the zoom lens shown in FIG. 12 in the wide-angle state W. Five curves respectively indicate simulation results of light with wavelengths of 650 nm, 610 nm, 555 nm, 510 nm, and 470 nm at focus depth positions when a half-aperture diameter is 2.3651 mm. It can be seen from FIG. 14a that, at any specific normalized aperture coordinate, a difference between defocus amounts of curves corresponding to every two different wavelengths is less than 0.020 mm. In other words, axial aberrations of the zoom lens in the wide-angle state W are controlled within a small range.

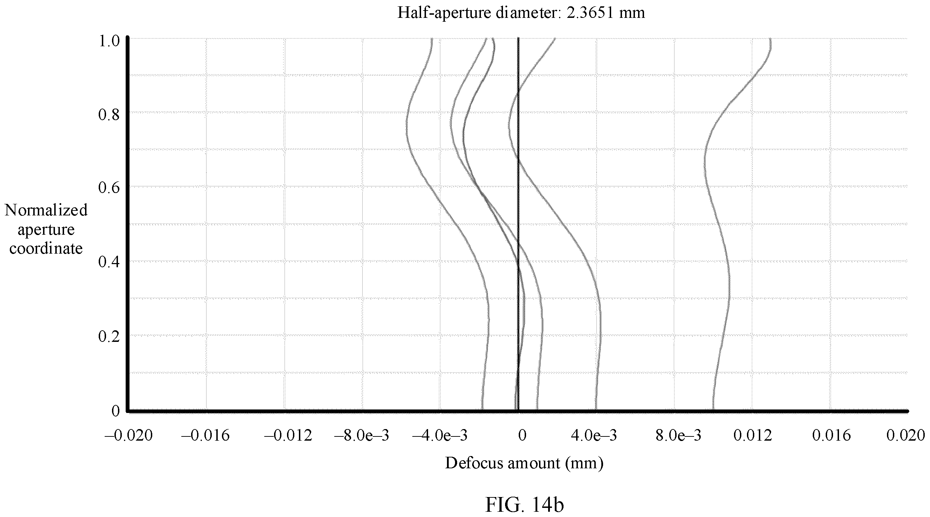

FIG. 14b shows axial aberration curves of the zoom lens shown in FIG. 12 in the first intermediate focal length state M1. Five curves respectively indicate simulation results of light with wavelengths of 650 nm, 610 nm, 555 nm, 510 nm, and 470 nm at focus depth positions when a half-aperture diameter is 2.3651 mm. It can be seen from FIG. 14b that, at any specific normalized aperture coordinate, a difference between defocus amounts of curves corresponding to every two different wavelengths is less than 0.020 mm. In other words, axial aberrations of the zoom lens in the first intermediate focal length state M1 are controlled within a small range.

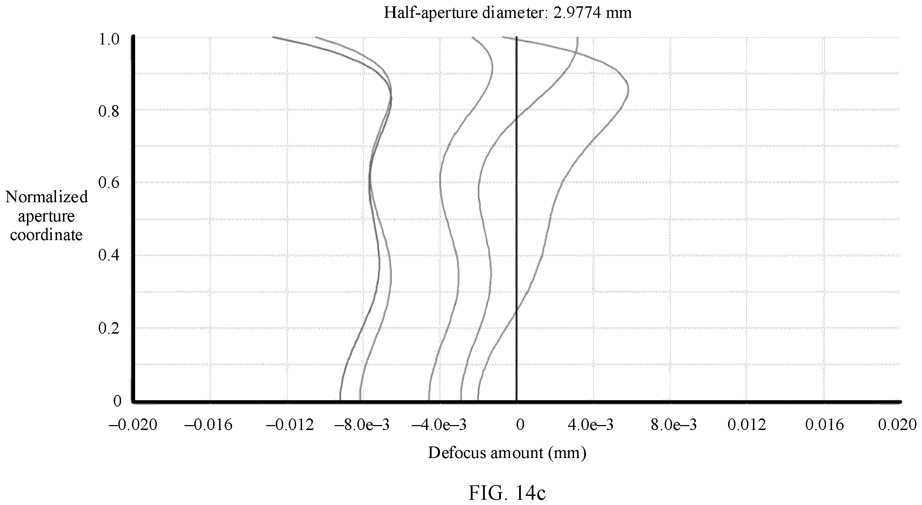

FIG. 14c shows axial aberration curves of the zoom lens shown in FIG. 12 in the second intermediate focal length state M2. Five curves respectively indicate simulation results of light with wavelengths of 650 nm, 610 nm, 555 nm, 510 nm, and 470 nm at focus depth positions when a half-aperture diameter is 2.9774 mm. It can be seen from FIG. 14c that, at any specific normalized aperture coordinate, a difference between defocus amounts of curves corresponding to every two different wavelengths is less than 0.020 mm. In other words, axial aberrations of the zoom lens in the second intermediate focal length state M2 are controlled within a small range.

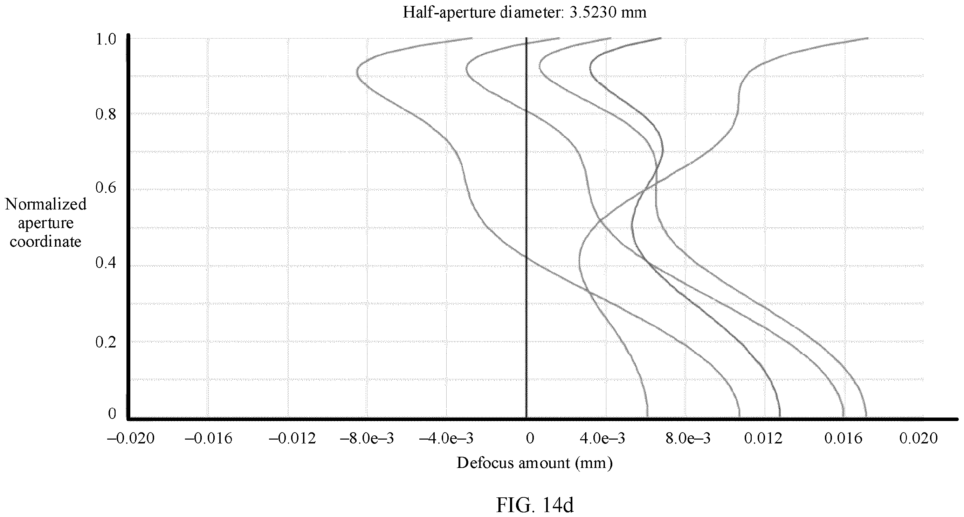

FIG. 14d shows axial aberration curves of the zoom lens shown in FIG. 12 in the telephoto state T. Five curves respectively indicate simulation results of light with wavelengths of 650 nm, 610 nm, 555 nm, 510 nm, and 470 nm at focus depth positions when a half-aperture diameter is 3.5230 mm. It can be seen from FIG. 14d that, at any specific normalized aperture coordinate, a difference between defocus amounts of curves corresponding to every two different wavelengths is less than 0.022 mm. In other words, axial aberrations of the zoom lens in the telephoto state T are controlled within a small range.

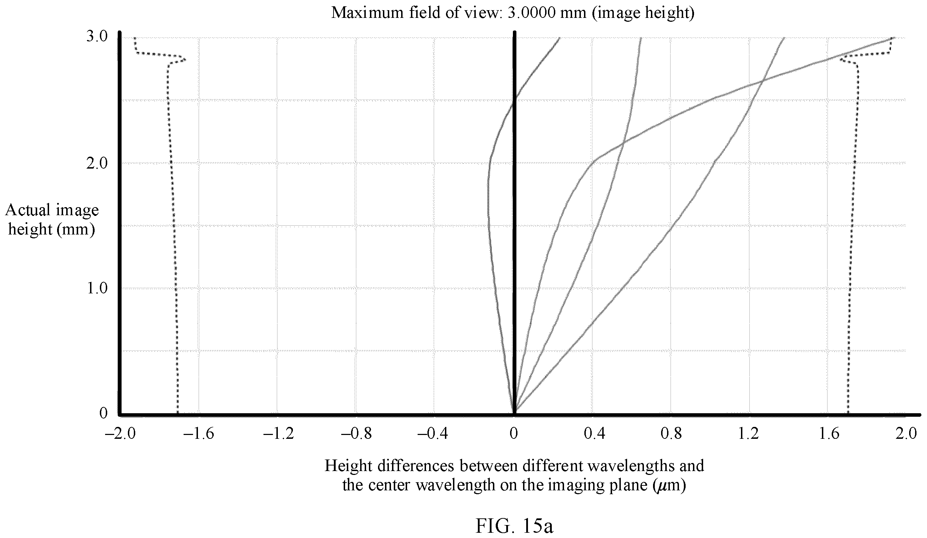

FIG. 15a shows lateral chromatic aberration curves of the zoom lens in the wide-angle state W. Five solid curves in FIG. 15a are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 15a that lateral chromatic aberrations of five light rays are all within the diffraction limit range.

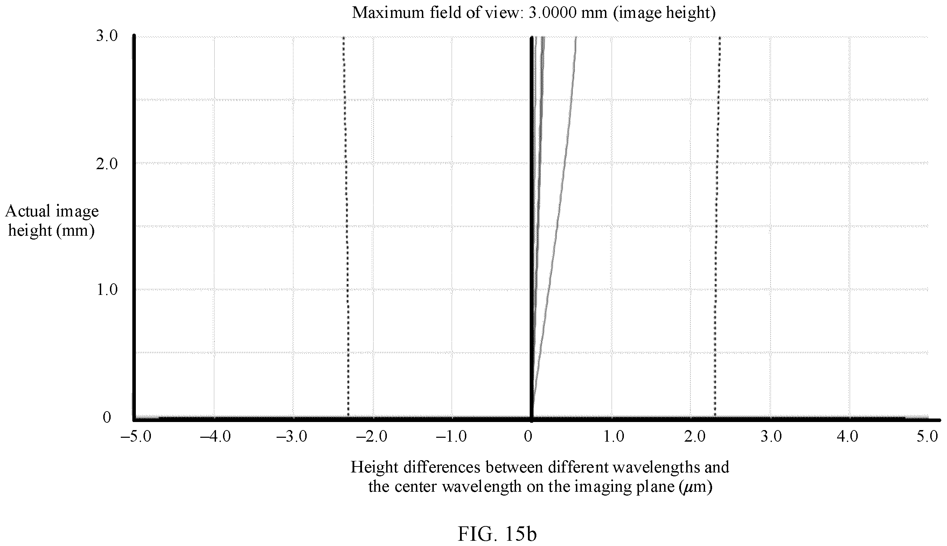

FIG. 15b shows lateral chromatic aberration curves of the zoom lens in the first intermediate focal length state M1. Five solid curves in FIG. 15b are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 15b that lateral chromatic aberrations of five light rays are all within the diffraction limit range.

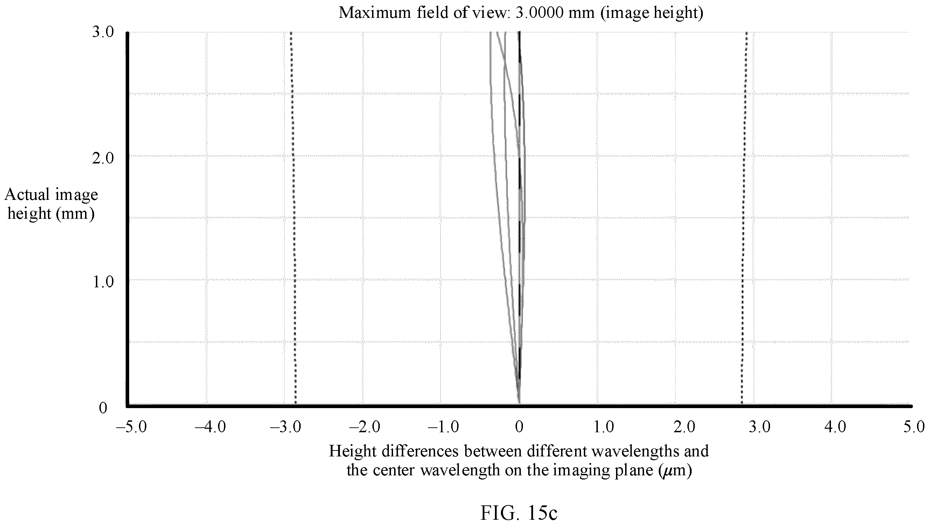

FIG. 15c shows lateral chromatic aberration curves of the zoom lens in the second intermediate focal length state M2. Five solid curves in FIG. 15c are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 15c that lateral chromatic aberrations of five light rays are all within the diffraction limit range.

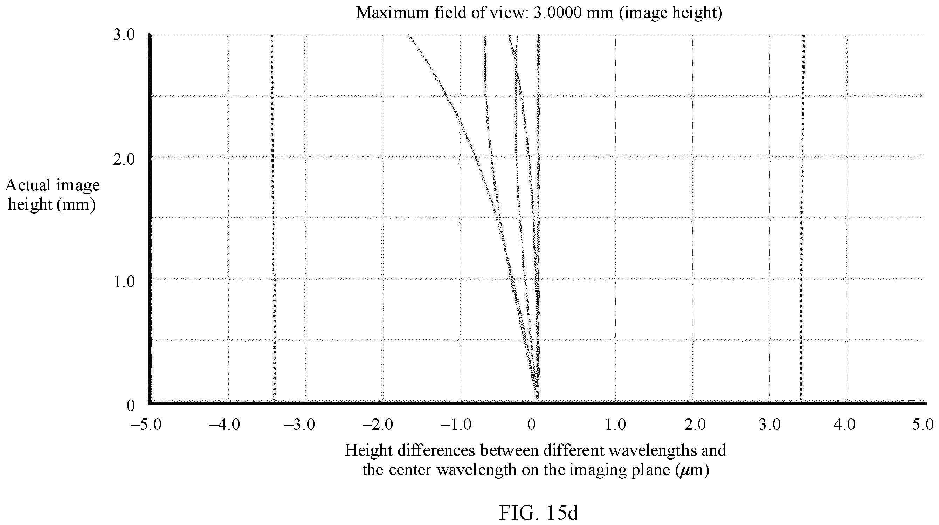

FIG. 15d shows lateral chromatic aberration curves of the zoom lens in the telephoto state T. Five solid curves in FIG. 15d are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 15d that lateral chromatic aberrations of five light rays are all within the diffraction limit range.

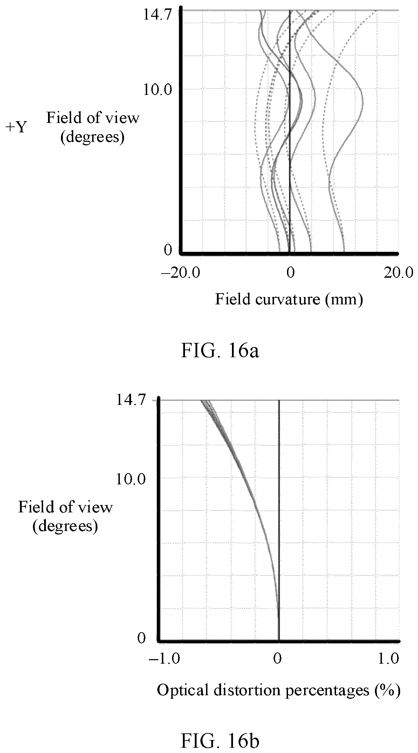

FIG. 16a shows optical distortion curves of the zoom lens in the wide-angle state W, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 16a that the differences between imaging deformations and ideal shapes are very small. FIG. 16b is obtained by calculating percentages of imaging deformations to ideal shapes of the light rays in FIG. 16a. It can be seen from FIG. 16b that optical distortions can be controlled within a range less than 0.8%.

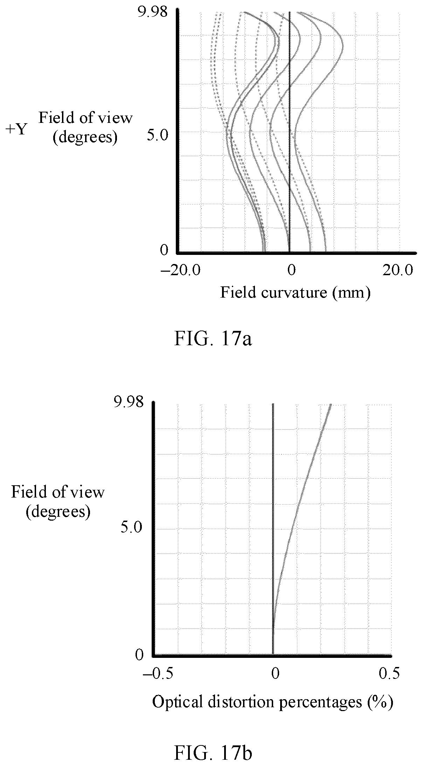

FIG. 17a shows optical distortion curves of the zoom lens in the first intermediate focal length state M1, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 17a that the differences between imaging deformations and ideal shapes are very small. FIG. 17b is obtained by calculating percentages of imaging deformations to ideal shapes of the light rays in FIG. 17a. It can be seen from FIG. 17b that optical distortions can be controlled within a range less than 0.3%.

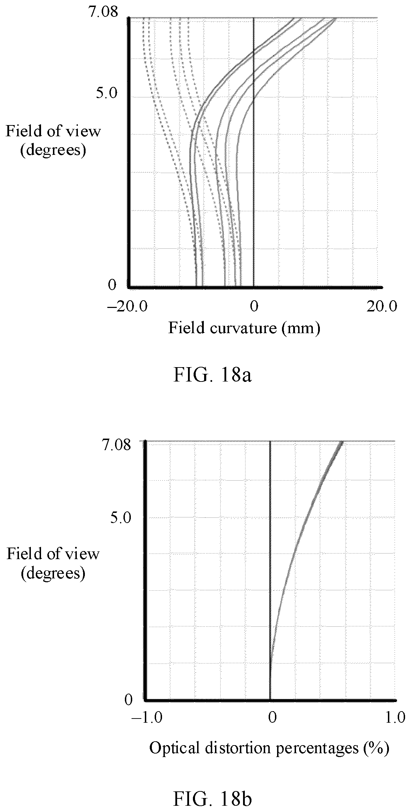

FIG. 18a shows optical distortion curves of the zoom lens in the second intermediate focal length state M2, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 18a that the differences between imaging deformations and ideal shapes are very small. FIG. 18b is obtained by calculating percentages of imaging deformations to ideal shapes of the light rays in FIG. 18a. It can be seen from FIG. 18b that optical distortions can be controlled within a range less than 0.6%.

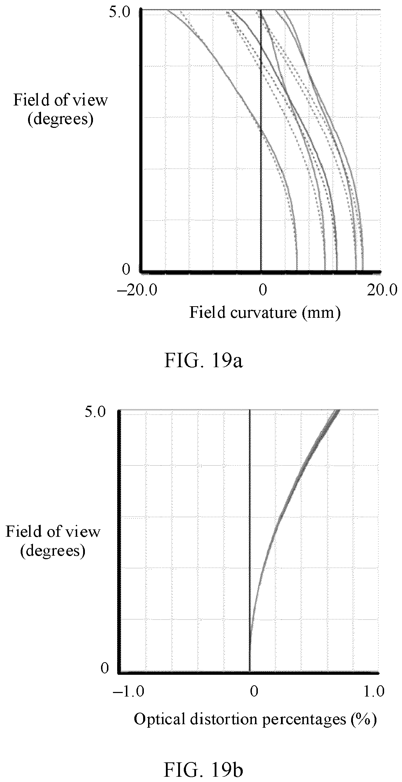

FIG. 19a shows optical distortion curves of the zoom lens in the telephoto state T, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 19a that the differences between imaging deformations and ideal shapes are very small. FIG. 19b is obtained by calculating percentages of imaging deformations to ideal shapes of the light rays in FIG. 19a. It can be seen from FIG. 19b that optical distortions can be controlled within a range less than 0.8%.

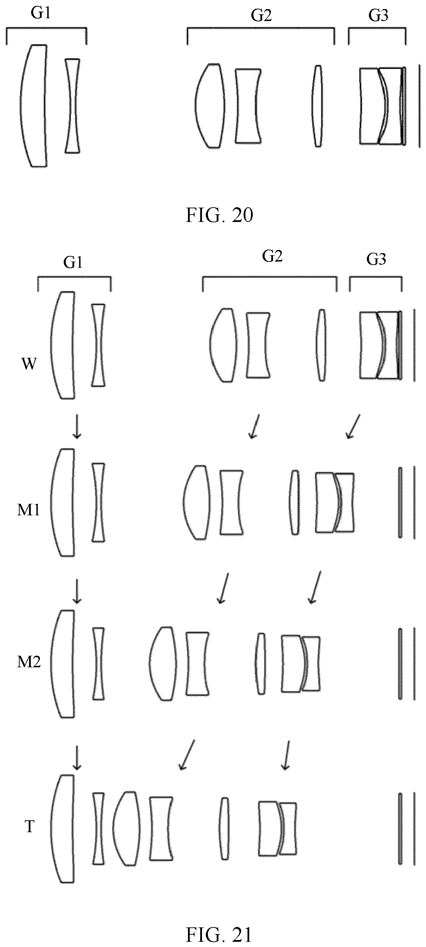

FIG. 20 is an example of a third specific zoom lens. The zoom lens sequentially includes the following from an object side to an image side: a first lens group G1 with negative focal power, where a ratio of a focal length f1 of the first lens group G1 to a focal length ft (namely, a focal length when the zoom lens is in a telephoto state) at a telephoto end of the zoom lens is |f1/ft| = 0.605; a second lens group G2 with positive focal power, where a ratio of a focal length f2 of the second lens group G2 to the focal length ft at the telephoto end of the zoom lens is |f2/ft| = 0.283; and a third lens group G3 with negative focal power, where a ratio of a focal length f3 of the third lens group G3 to the focal length ft at the telephoto end of the zoom lens is |f3/ft| = 0.298.

Still refer to FIG. 20. The zoom lens includes seven lenses with focal power, and includes 12 aspheric surfaces in total. The first lens group G1 includes two lenses sequentially distributed from the object side to the image side, the two lenses are with positive and negative focal power respectively, and a first lens from the object side to the image side is a positive meniscus lens with a convex surface that bulges towards the object side. The second lens group G2 includes three lenses sequentially distributed from the object side to the image side, and the three lenses are with positive, negative, and positive focal power respectively. The third lens group G3 includes two lenses sequentially distributed from the object side to the image side, and the two lenses are with positive and negative focal power respectively. The second lens group G2 includes at least one lens with negative focal power, to eliminate an aberration. In addition, the zoom lens further has a stop (not shown in FIG. 20). The stop is located on an object side of the second lens group G2, but is not limited thereto. Alternatively, the stop may be disposed on an image side or an object side of the first lens group G1, or may be disposed on an image side or an object side of the third lens group G3. A maximum aperture diameter of a lens in the first lens group G1, the second lens group G2, and the third lens group G3 is 8.8 mm.

Subsequently, refer to Table 3a and Table 3b. Table 3a shows a surface curvature, a thickness (Thickness), a refractive index (nd), and an abbe coefficient (vd) of each lens of the zoom lens shown in FIG. 20 in a wide-angle state. For meanings of the parameters in Table 3a, refer to introduction in a corresponding part in Table 1a. Table 3b shows aspheric coefficients of aspheric surfaces of the lenses.

**Table 3a**

| | R | Thickness | | nd | | vd | |
|---|---|---|---|---|---|---|---|
| R1 | 12.53 | d1 | 1.8 | n1 | 1.67 | v1 | 19.2 |
| R2 | 63.007 | a1 | 1.946 | | | | |
| R3 | -14.721 | d2 | 0.4 | n2 | 1.90 | v2 | 31.3 |
| R4 | 19.272 | a2 | 9 | | | | |
| R5 | 4.784 | d3 | 2.164 | n3 | 1.54 | v3 | 56.0 |
| R6 | -10.174 | a3 | 1.029 | | | | |
| R7 | -14.389 | d4 | 1.344 | n4 | 1.67 | v4 | 19.2 |
| R8 | 12.119 | a4 | 4.220 | | | | |
| R9 | 10.987 | d5 | 0.745 | n5 | 1.64 | v5 | 24.0 |
| R10 | -938.402 | a5 | 2.95 | | | | |
| R11 | -14.035 | d6 | 1.8 | n6 | 1.67 | v6 | 19.2 |
| R12 | -4.939 | a6 | 0.188 | | | | |
| R13 | -10.612 | d7 | 0.923 | n7 | 1.85 | v7 | 40.1 |
| R14 | 7.780 | a7 | 0.199 | | | | |

**Table 3b**

| Aspheric coefficient | | | | | | | | |
|---|---|---|---|---|---|---|---|---|
| | Type | K | A2 | A3 | A4 | A10 | A12 |
| R1 | Even aspheric | 0.00E+00 | 6.76E-05 | 2.92E-06 | 8.02E-08 | -2.78E-09 | 9.24E-11 |
| R2 | Even aspheric | 0.00E+00 | -5.83E-05 | 4.75E-06 | -9.49E-08 | 3.25E-09 | -4.22E-11 |
| R5 | Even aspheric | 0.00E+00 | -4.78E-04 | -1.17E-05 | -1.51E-06 | -2.32E-08 | -3.54E-09 |
| R6 | Even aspheric | 0.00E+00 | 9.84E-04 | -4.88E-07 | -1.13E-06 | 8.54E-09 | 1.02E-09 |
| R7 | Even aspheric | 0.00E+00 | 5.98E-04 | 9.84E-05 | 2.922E-06 | -4.96E-07 | 2.18E-08 |
| R8 | Even aspheric | 0.00E+00 | 1.60E-03 | 1.90E-04 | 1.89E-05 | -1.12E-06 | 1.43E-07 |
| R9 | Even aspheric | 0.00E+00 | -1.40E-03 | -8.25E-05 | 3.43E-07 | 1.59E-06 | -6.38E-08 |
| R10 | Even aspheric | 0.00E+00 | -1.22E-03 | -1.05E-04 | 3.62E-06 | 1.12E-06 | -4.29E-08 |
| R11 | Even aspheric | 0.00E+00 | 4.05E-03 | -2.52E-04 | 4.52E-05 | -4.33E-06 | 2.11E-07 |
| R12 | Even aspheric | 0.00E+00 | 5.43E-03 | -1.09E-03 | 2.83E-04 | -2.72E-05 | 8.57E-07 |

(continued)

| Aspheric coefficient | | | | | | | |
|---|---|---|---|---|---|---|---|
| | Type | K | A2 | A3 | A4 | A10 | A12 |
| R13 | Even aspheric | 0.00E+00 | -1.56E-02 | 1.20E-03 | 1.39E-04 | -2.49E-05 | 8.21E-07 |
| R14 | Even aspheric | 0.00E+00 | -1.77E-02 | 2.95E-03 | -3.44E-04 | 2.72E-05 | -1.05E-06 |

In the 12 aspheric surfaces of the zoom lens shown in Table 3b, surface types z of all the even aspheric surfaces may be defined according to, but not limited to, the following aspheric surface formula:

$$z = \frac{cr^2}{1 + \sqrt{1 - Kc^2r^2}} + A_2r^4 + A_3r^6 + A_4r^8 + A_5r^{10} + A_6r^{12}$$

,

where z is a vector height of the aspheric surface, r is a radial coordinate of the aspheric surface, c is a spherical curvature of a vertex on the aspheric surface, K is a conic constant, and A2, A3, A4, A5, and A6 are aspheric coefficients.

Because the zoom lens has the 12 aspheric surfaces, the aspheric surfaces may be flexibly designed, and a good aspheric surface type may be designed based on an actual requirement, to improve imaging quality.

A structure of the zoom lens shown in FIG. 20 is used. A ratio |TTL/ft| of a total length TTL of the zoom lens from a surface closest to the object side to the imaging plane to the effective focal length ft at the telephoto end of the zoom lens is 0.896. In view of this, a small total optical length may be used to achieve a long focal length. A ratio |IMH/ft| of a half-image height IMH to the effective focal length ft at the telephoto end of the zoom lens may reach 0.08961.

As shown in FIG. 20, a position of the first lens group G1 is fixed relative to the imaging plane, and the second lens group G2 and the third lens group G3 move along an optical axis, to implement continuous zoom.

FIG. 21 is a zoom process of the zoom lens shown in FIG. 20. The zoom lens has four focal length states: W indicates the wide-angle state, M1 indicates a first intermediate focal length state, M2 indicates a second intermediate focal length state, and T indicates the telephoto state. The wide-angle state T of the zoom lens corresponds to the following relative positions of the lens groups. The third lens group G3 is close to the imaging plane, and the second lens group G2 is close to an object side of the third lens group G3. When the zoom lens zooms from the wide-angle state W to the first intermediate focal length state M1, the second lens group G2 moves towards the first lens group G1, and the third lens group G3 moves towards the second lens group G2. When the zoom lens zooms from the first intermediate focal length state M1 to the second intermediate focal length state M2, the second lens group G2 continues to move towards the first lens group G1, and the third lens group G3 continues to move towards the second lens group G2. When the zoom lens zooms from the second intermediate focal length state M2 to the telephoto state T, the second lens group G2 continues to move towards the first lens group G1, and the third lens group G3 continues to move towards the second lens group G2.

It can be seen from FIG. 21 that when the zoom lens zooms from the wide-angle state W to the telephoto state T, both the second lens group G2 and the third lens group G3 keep moving towards the object side, but a distance between the third lens group G3 and the second lens group G2 first decreases and then increases, to implement continuous zoom. The second lens group G2 serves as a zoom lens group, and a ratio |L1/TTL| of a movement stroke L1 of the second lens group G2 along the optical axis to a total length TTL of the zoom lens from the surface closest to the object side to the imaging plane is 0.26667. The third lens group G3 serves as a compensation lens group, and a ratio |L2/TTL| of a movement stroke L2 of the third lens group G3 along the optical axis to the total length TTL of the zoom lens from the surface closest to the object side to the imaging plane is 0.27883.

Refer to Table 3c and Table 3d correspondingly. Table 3c shows basic parameters of the zoom lens, and Table 3d shows spacing distances between the lens groups of the zoom lens in the wide-angle state W, the first intermediate focal length state M1, the second intermediate focal length state M2, and the telephoto state T.

**Table 3c**

| | W | M1 | M2 | T |
|---|---|---|---|---|
| Focal length F | 11.5 mm | 17 mm | 24 mm | 33.5 mm |
| F-number | 2.5 | 3.38 | 4.23 | 5.07 |

(continued)

|  | W | M1 | M2 | T |
|---|---|---|---|---|
| Half-image height IMH | 3 mm | 3 mm | 3 mm | 3 mm |
| Half FOV | 14.8° | 10.03° | 7.115° | 5.106° |
| BFL | 1.489 mm | 5.129 mm | 7.735 mm | 9.854 mm |
| TTL | 30 mm | 30 mm | 30 mm | 30 mm |
| Designed wavelength | 650 nm, 610 nm, 555 nm, 510 nm, and 470 nm | | | |

**Table 3d**

|  | W | M1 | M2 | T |
|---|---|---|---|---|
| a2 | 9 mm | 6.804 mm | 4.00 mm | 1.00 mm |
| a5 | 2.950 mm | 1.508 mm | 1.500 mm | 2.586 mm |
| a7 | 0.199 mm | 3.839 mm | 6.645 mm | 8.564 mm |

Simulation is performed on the zoom lens shown in FIG. 20. The following describes imaging effect of the zoom lens with reference to the accompanying drawings.

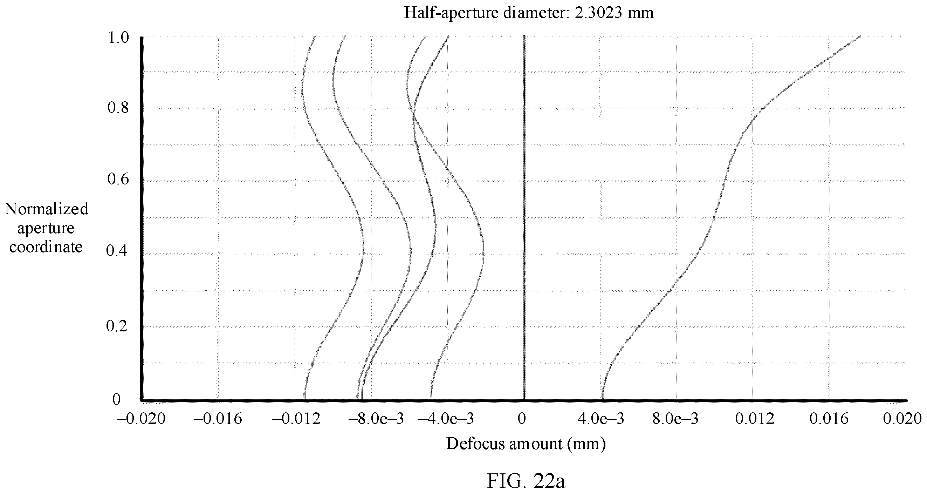

FIG. 22a shows axial aberration curves of the zoom lens shown in FIG. 20 in the wide-angle state W. Five curves respectively indicate simulation results of light with wavelengths of 650 nm, 610 nm, 555 nm, 510 nm, and 470 nm at focus depth positions when a half-aperture diameter is 2.3023 mm. It can be seen from FIG. 22a that, at any specific normalized aperture coordinate, a difference between defocus amounts of curves corresponding to every two different wavelengths is less than 0.030 mm. In other words, axial aberrations of the zoom lens in the wide-angle state W are controlled within a small range.

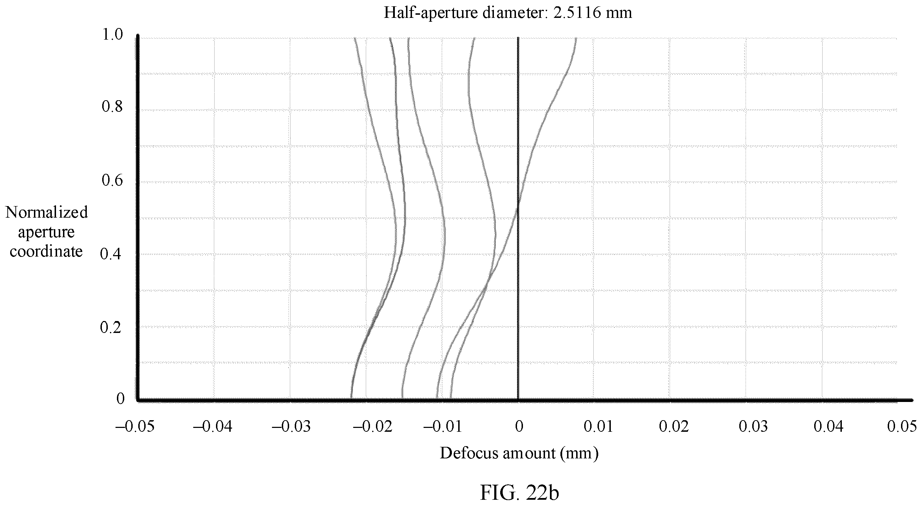

FIG. 22b shows axial aberration curves of the zoom lens shown in FIG. 20 in the first intermediate focal length state M1. Five curves respectively indicate simulation results of light with wavelengths of 650 nm, 610 nm, 555 nm, 510 nm, and 470 nm at focus depth positions when a half-aperture diameter is 2.5116 mm. It can be seen from FIG. 22b that, at any specific normalized aperture coordinate, a difference between defocus amounts of curves corresponding to every two different wavelengths is less than 0.030 mm. In other words, axial aberrations of the zoom lens in the first intermediate focal length state M1 are controlled within a small range.

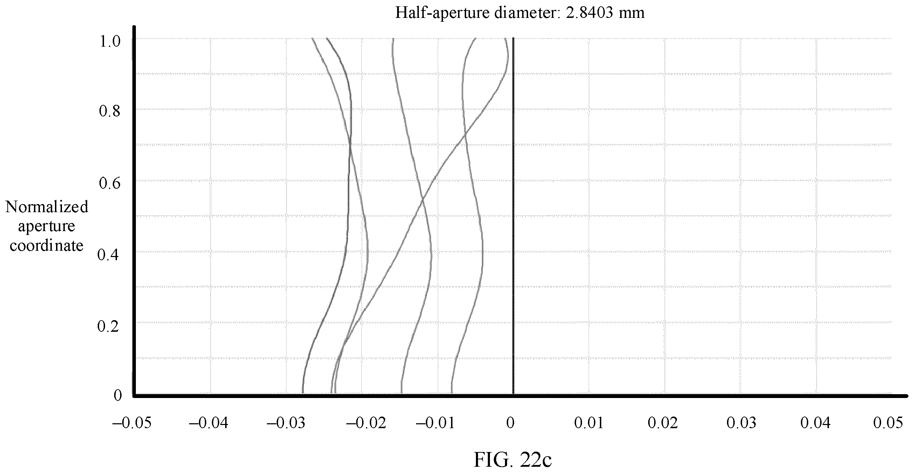

FIG. 22c shows axial aberration curves of the zoom lens shown in FIG. 20 in the second intermediate focal length state M2. Five curves respectively indicate simulation results of light with wavelengths of 650 nm, 610 nm, 555 nm, 510 nm, and 470 nm at focus depth positions when a half-aperture diameter is 2.8403 mm. It can be seen from FIG. 22c that, at any specific normalized aperture coordinate, a difference between defocus amounts of curves corresponding to every two different wavelengths is less than 0.03 mm. In other words, axial aberrations of the zoom lens in the second intermediate focal length state M2 are controlled within a small range.

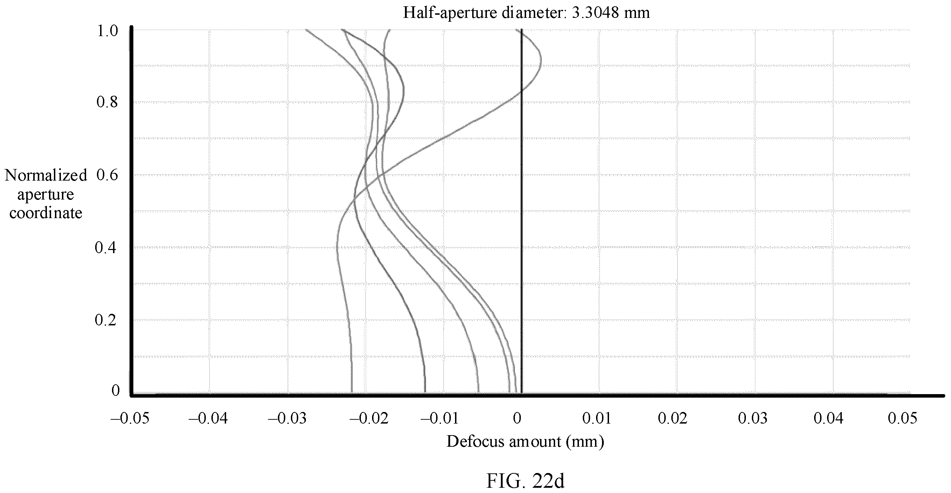

FIG. 22d shows axial aberration curves of the zoom lens shown in FIG. 20 in the telephoto state T. Five curves respectively indicate simulation results of light with wavelengths of 650 nm, 610 nm, 555 nm, 510 nm, and 470 nm at focus depth positions when a half-aperture diameter is 3.3048 mm. It can be seen from FIG. 22d that, at any specific normalized aperture coordinate, a difference between defocus amounts of curves corresponding to every two different wavelengths is less than 0.03 mm. In other words, axial aberrations of the zoom lens in the telephoto state T are controlled within a small range.

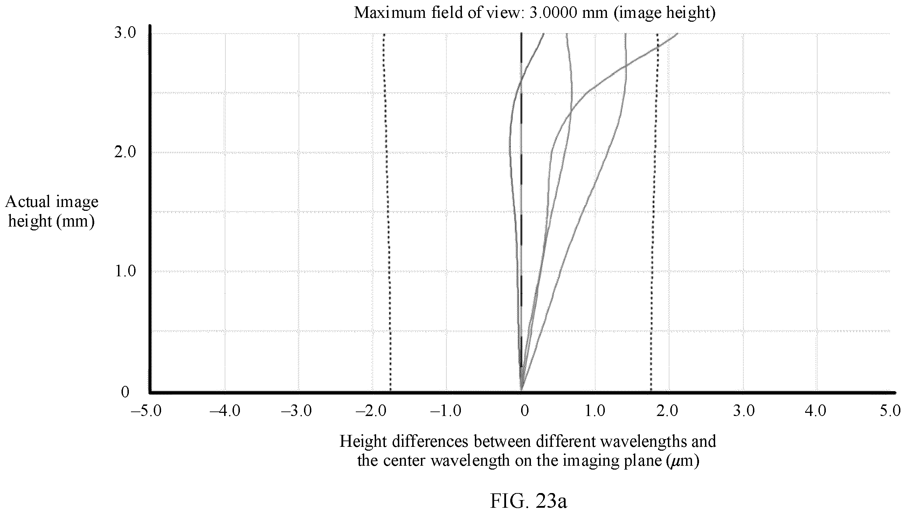

FIG. 23a shows lateral chromatic aberration curves of the zoom lens in the wide-angle state W. Five solid curves in FIG. 23a are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 23a that lateral chromatic aberrations of five light rays are all within the diffraction limit range.

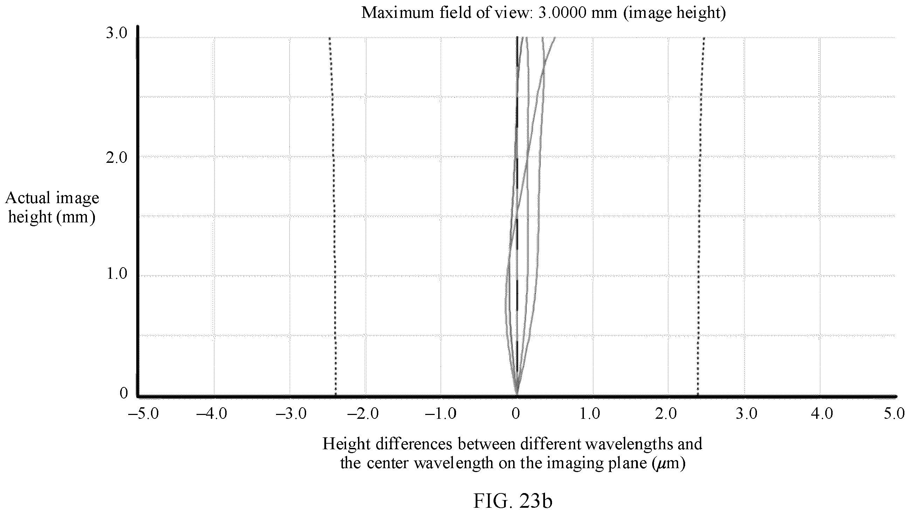

FIG. 23b shows lateral chromatic aberration curves of the zoom lens in the first intermediate focal length state M1. Five solid curves in FIG. 23b are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 23b that lateral chromatic aberrations of five light rays are all within the diffraction limit range.

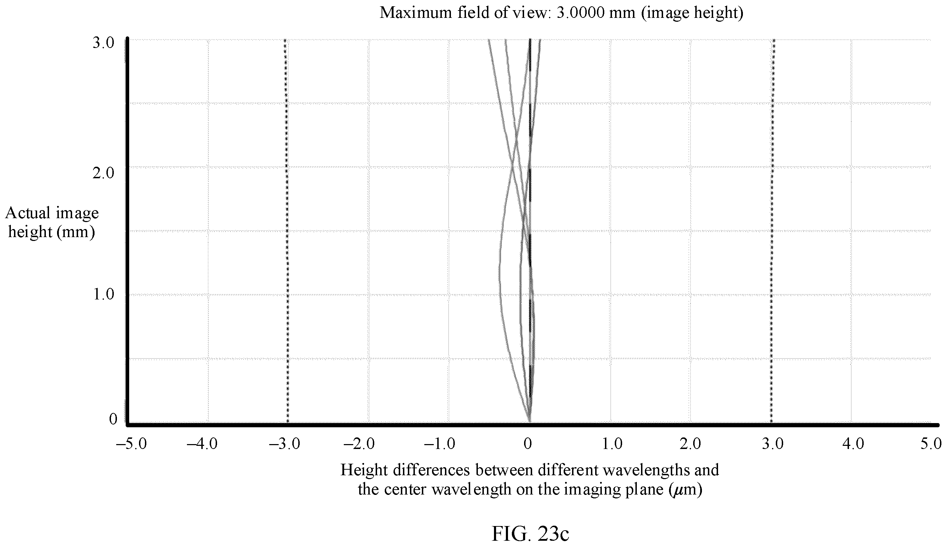

FIG. 23c shows lateral chromatic aberration curves of the zoom lens in the second intermediate focal length state M2. Five solid curves in FIG. 23c are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 23c that lateral chromatic aberrations of five light rays are all within the diffraction limit range.

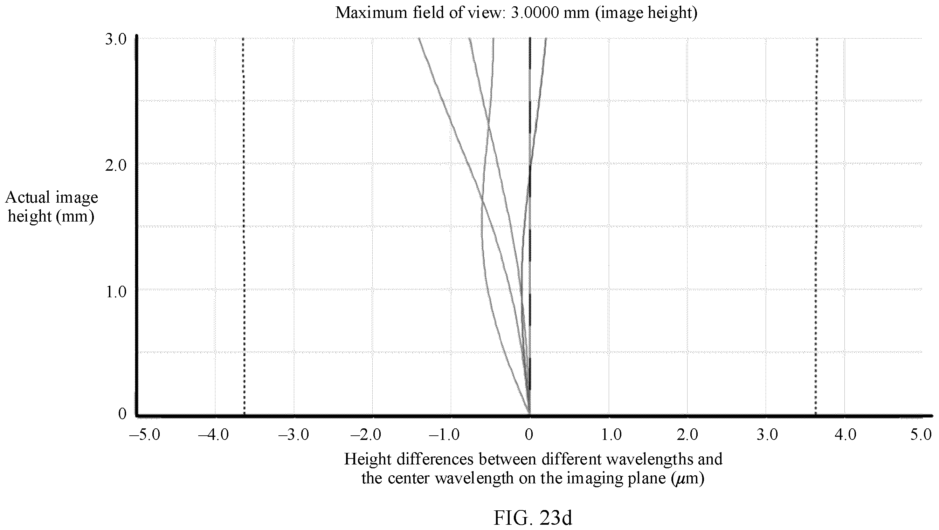

FIG. 23d shows lateral chromatic aberration curves of the zoom lens in the telephoto state T. Five solid curves in FIG. 23d are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 23d that lateral chromatic aberrations of five light rays are all within the diffraction limit range.

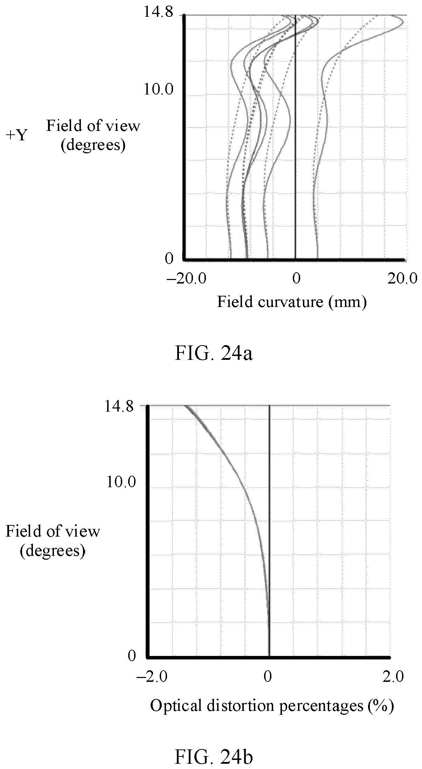

FIG. 24a shows optical distortion curves of the zoom lens in the wide-angle state W, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 24a that the differences between imaging deformations and ideal shapes are very small. FIG. 24b is obtained by calculating percentages of imaging deformations to ideal shapes of the light rays in FIG. 24a. It can be seen from FIG. 24b that optical distortions can be controlled within a range less than 1.6%.

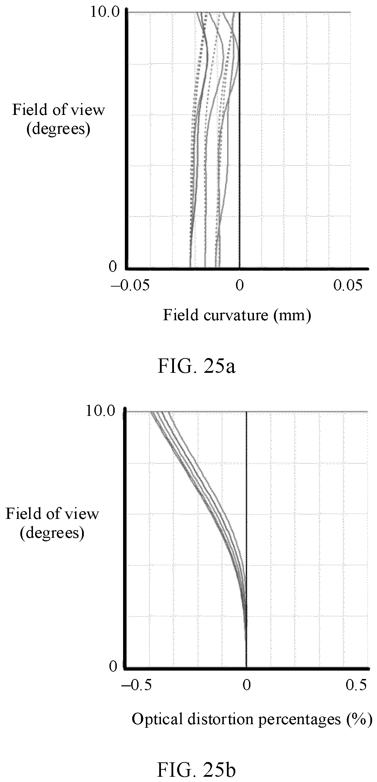

FIG. 25a shows optical distortion curves of the zoom lens in the first intermediate focal length state M1, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 25a that the differences between imaging deformations and ideal shapes are very small. FIG. 25b is obtained by calculating percentages of imaging deformations to ideal shapes of the light rays in FIG. 25a. It can be seen from FIG. 25b that optical distortions can be controlled within a range less than 0.4%.

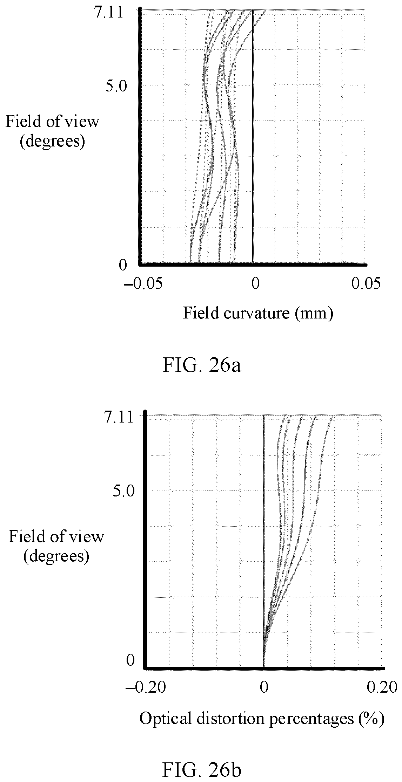

FIG. 26a shows optical distortion curves of the zoom lens in the second intermediate focal length state M2, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 26a that the differences between imaging deformations and ideal shapes are very small. FIG. 26b is obtained by calculating percentages of imaging deformations to ideal shapes of the light rays in FIG. 26a. It can be seen from FIG. 26b that optical distortions can be controlled within a range less than 1.2%.

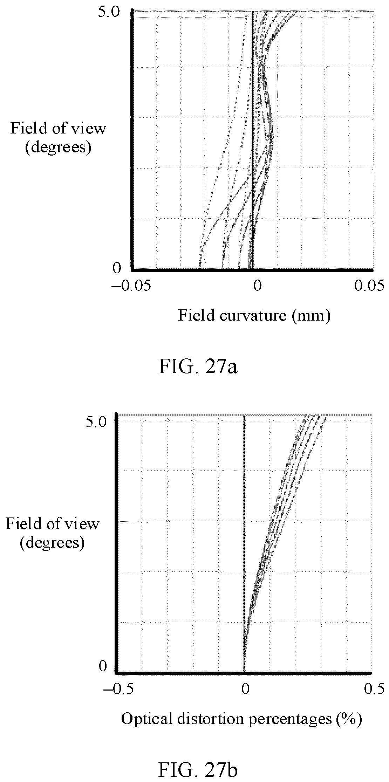

FIG. 27a shows optical distortion curves of the zoom lens in the telephoto state T, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 27a that the differences between imaging deformations and ideal shapes are very small. FIG. 27b is obtained by calculating percentages of imaging deformations to ideal shapes of the light rays in FIG. 27a. It can be seen from FIG. 27b that optical distortions can be controlled within a range less than 0.4%.

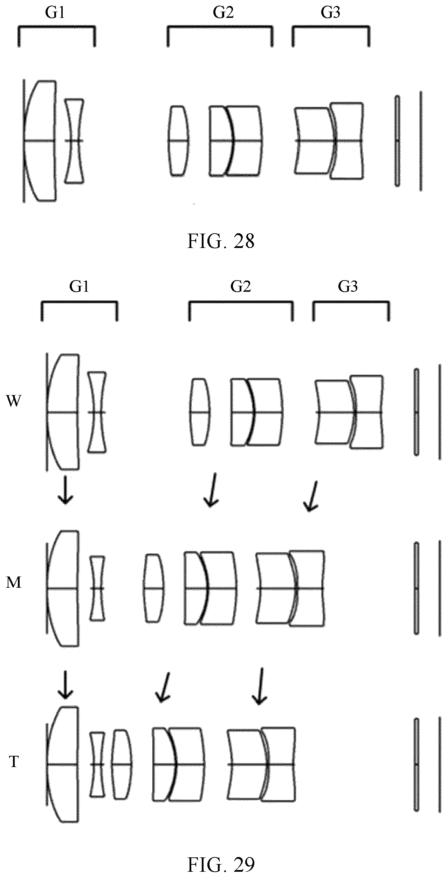

FIG. 28 is an example of a fourth specific zoom lens. The zoom lens sequentially includes the following from an object side to an image side: a first lens group G1 with negative focal power, where a ratio of a focal length f1 of the first lens group G1 to a focal length ft (namely, a focal length when the zoom lens is in a telephoto state) at a telephoto end of the zoom lens is $|f1/ft| = 0.796$; a second lens group G2 with positive focal power, where a ratio of a focal length f2 of the second lens group G2 to the focal length ft at the telephoto end of the zoom lens is $|f2/ft| = 0.309$; and a third lens group G3 with negative focal power, where a ratio of a focal length f3 of the third lens group G3 to the focal length ft at the telephoto end of the zoom lens is $|f3/ft| = 0.597$.

Still refer to FIG. 28. The zoom lens includes seven lenses with focal power, and includes 12 aspheric surfaces in total. The first lens group G1 includes two lenses sequentially distributed from the object side to the image side, and the two lenses are with positive and negative focal power respectively. The second lens group G2 includes three lenses sequentially distributed from the object side to the image side, and the three lenses are with positive, positive, and negative focal power respectively. The third lens group G3 includes two lenses sequentially distributed from the object side to the image side, and the two lenses are with positive and negative focal power respectively. The second lens group G2 includes at least one lens with negative focal power, to eliminate an aberration. In addition, the zoom lens further has a stop (not shown in FIG. 28). The stop is located on an object side of the second lens group G2, but is not limited thereto. Alternatively, the stop may be disposed on an image side or an object side of the first lens group G1, or may be disposed on an image side or an object side of the third lens group G3. A maximum aperture diameter of a lens in the first lens group G1, the second lens group G2, and the third lens group G3 is 9.788 mm.

Subsequently, refer to Table 4a and Table 4b. Table 4a shows a surface curvature, a thickness (Thickness), a refractive index (nd), and an abbe coefficient (vd) of each lens of the zoom lens shown in FIG. 28 in a wide-angle state. For meanings of the parameters in Table 4a, refer to introduction in a corresponding part in Table 1a. Table 4b shows aspheric coefficients of aspheric surfaces of the lenses.

**Table 4a**

|  | R | Thickness | | nd | | vd | |
|---|---|---|---|---|---|---|---|
| R1 | 12.135 | d1 | 2.571 | n1 | 1.83 | v1 | 37.3 |
| R2 | 117.318 | a1 | 1.395 | | | | |
| R3 | -11.290 | d2 | 0.615 | n2 | 1.80 | v2 | 46.6 |
| R4 | 13.747 | a2 | 7.520 | | | | |
| R5 | 11.884 | d3 | 1.641 | n3 | 1.54 | v3 | 56.0 |
| R6 | -11.842 | a3 | 1.836 | | | | |
| R7 | 203.526 | d4 | 1.878 | n4 | 1.54 | v4 | 56.0 |
| R8 | -5.655 | a4 | 0.098 | | | | |
| R9 | -6.142 | d5 | 2.344 | n5 | 1.66 | v5 | 20.4 |
| R10 | -13.570 | a5 | 3.104 | | | | |
| R11 | -7.692 | d6 | 2.952 | n6 | 1.66 | v6 | 20.4 |
| R12 | -6.243 | a6 | 0.176 | | | | |
| R13 | -23.442 | d7 | 2.077 | n7 | 1.54 | v7 | 56.0 |
| R14 | 9.139 | a7 | 2.900 | | | | |
| R15 | Infinity | d8 | 0.258 | n8 | 1.52 | v8 | 64.2 |
| R16 | Infinity | a8 | 1.845 | | | | |

**Table 4b**

| Aspheric coefficient | | | | | | | |
|---|---|---|---|---|---|---|---|
| | Type | K | A2 | A3 | A4 | A5 | A6 |
| R1 | Even aspheric | 0.00 | 1.30E-04 | 2.11E-06 | 2.33E-07 | -5.24E-09 | 1.91E-10 |
| R2 | Even aspheric | 0.00 | -3.18E-05 | 1.55E-06 | 2.54E-07 | -1.77E-09 | -1.19E-10 |
| R5 | Even aspheric | 0.00 | -1.28E-03 | -4.21E-05 | -7.95E-06 | 7.57E-07 | -7.68E-08 |
| R6 | Even aspheric | 0.00 | -9.41E-04 | -3.66E-05 | -2.91E-06 | 7.03E-08 | -2.72E-08 |
| R7 | Even aspheric | 0.00 | -3.89E-04 | -9.79E-06 | -5.48E-08 | -8.82E-08 | -5.01E-08 |
| R8 | Even aspheric | 0.00 | 5.67E-04 | -4.23E-06 | -5.35E-06 | -1.77E-07 | 1.11E-08 |
| R9 | Even aspheric | 0.00 | 6.31E-04 | 2.77E-05 | -5.67E-06 | 1.20E-08 | 4.01E-08 |
| R10 | Even aspheric | 0.00 | 2.85E-04 | 4.37E-06 | 3.64E-07 | -5.87E-09 | 4.61E-09 |
| R11 | Even aspheric | 0.00 | 3.46E-03 | -2.06E-04 | 2.75E-05 | -2.13E-06 | 8.19E-08 |
| R12 | Even aspheric | 0.00 | 9.60E-04 | 2.99E-05 | 1.51E-05 | -2.09E-06 | 5.61E-08 |
| R13 | Even aspheric | 0.00 | -8.62E-03 | 3.47E-04 | 1.86E-05 | -4.62E-06 | 1.54E-07 |
| R14 | Even aspheric | 0.00 | -7.88E-03 | 5.94E-04 | -3.88E-05 | 1.50E-06 | -2.50E-08 |

In the 12 aspheric surfaces of the zoom lens shown in Table 4b, surface types z of all the even aspheric surfaces may be defined according to, but not limited to, the following aspheric surface formula:

$$z = \frac{cr^2}{1 + \sqrt{1 - Kc^2r^2}} + A_2r^4 + A_3r^6 + A_4r^8 + A_5r^{10} + A_6r^{12}$$

,

where

z is a vector height of the aspheric surface, r is a radial coordinate of the aspheric surface, c is a spherical curvature of a vertex on the aspheric surface, K is a conic constant, and A2, A3, A4, A5, and A6 are aspheric coefficients.

Because the zoom lens has the 12 aspheric surfaces, the aspheric surfaces may be flexibly designed, and a good aspheric surface type may be designed based on an actual requirement, to improve imaging quality.

A structure of the zoom lens shown in FIG. 28 is used. A ratio |TTL/ft| of a total length TTL of the zoom lens from a surface closest to the object side to the imaging plane to the effective focal length ft at the telephoto end of the zoom lens is 1.15. In view of this, a small total optical length may be used to achieve a long focal length. A ratio |IMH/ft| of a half-image height IMH to the effective focal length ft at the telephoto end of the zoom lens may reach 0.139.

As shown in FIG. 28, a position of the first lens group G1 is fixed relative to the imaging plane, and the second lens group G2 and the third lens group G3 move along an optical axis, to implement continuous zoom.

FIG. 29 is a zoom process of the zoom lens shown in FIG. 28. The zoom lens has three focal length states: W indicates the wide-angle state, M indicates an intermediate focal length state, and T indicates the telephoto state. The wide-angle state T of the zoom lens corresponds to the following relative positions of the lens groups. The third lens group G3 is close to the imaging plane, and the second lens group G2 is close to an object side of the third lens group G3. When the zoom lens zooms from the wide-angle state W to the intermediate focal length state M, the second lens group G2 moves towards the first lens group G1, and the third lens group G3 moves towards the second lens group G2. When the zoom lens zooms from the intermediate focal length state M to the telephoto state T, the second lens group G2 continues to move towards the first lens group G1, and the third lens group G3 continues to move towards the second lens group G2.

It can be seen from FIG. 29 that when the zoom lens zooms from the wide-angle state W to the telephoto state T, both the second lens group G2 and the third lens group G3 keep moving towards the object side, but a distance between the third lens group G3 and the second lens group G2 first decreases and then increases, to implement continuous zoom. The second lens group G2 serves as a zoom lens group, and a ratio |L1/TTL| of a movement stroke L1 of the second lens group G2 along the optical axis to a total length TTL of the zoom lens from the surface closest to the object side to the imaging plane is 0.1988. The third lens group G3 serves as a compensation lens group, and a ratio |L2/TTL| of a movement stroke L2 of the third lens group G3 along the optical axis to the total length TTL of the zoom lens from the surface closest to the object side to the imaging plane is 0.222.

Refer to Table 4c and Table 4d correspondingly. Table 4c shows basic parameters of the zoom lens, and Table 4d shows spacing distances between the lens groups of the zoom lens in the wide-angle state W, the intermediate focal length state M, and the telephoto state T.

**Table 4c**

|  | W | M | T |
|---|---|---|---|
| Focal length F (mm) | 14.758 | 22.117 | 28.872 |
| F-number | 3.118 | 3.996 | 4.601 |
| Half-image height IMH (mm) | 4.000 | 4.000 | 4.000 |
| Half FOV (°) | 15.524 | 10.342 | 7.901 |
| BFL (mm) | 5.003 | 9.956 | 12.383 |
| TTL (mm) | 33.210 | 33.215 | 33.210 |
| Designed wavelength | 650 nm, 610 nm, 555 nm, 510 nm, and 470 nm | | |

**Table 4d**

|  | W | M | T |
|---|---|---|---|
| a2 | 7.520 mm | 3.620 mm | 0.917 mm |

(continued)

|    | W        | M        | T         |
|----|----------|----------|-----------|
| a5 | 3.104 mm | 2.056 mm | 2.327 mm  |
| a7 | 2.7 mm   | 7.852 mm | 10.280 mm |

Simulation is performed on the zoom lens shown in FIG. 28. The following describes imaging effect of the zoom lens with reference to the accompanying drawings.

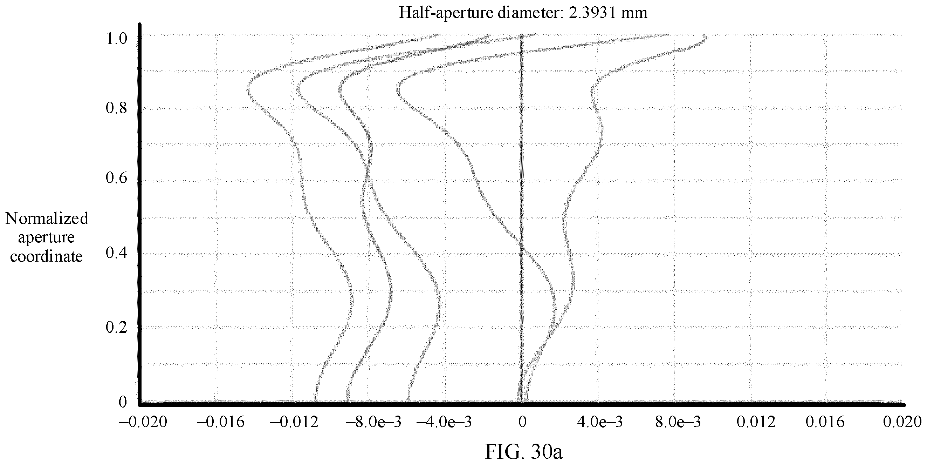

FIG. 30a shows axial aberration curves of the zoom lens shown in FIG. 28 in the wide-angle state W. Five curves respectively indicate simulation results of light with wavelengths of 650 nm, 610 nm, 555 nm, 510 nm, and 470 nm at focus depth positions when a half-aperture diameter is 2.3931 mm. It can be seen from FIG. 30a that, at any specific normalized aperture coordinate, a difference between defocus amounts of curves corresponding to every two different wavelengths is less than 0.020 mm. In other words, axial aberrations of the zoom lens in the wide-angle state W are controlled within a small range.

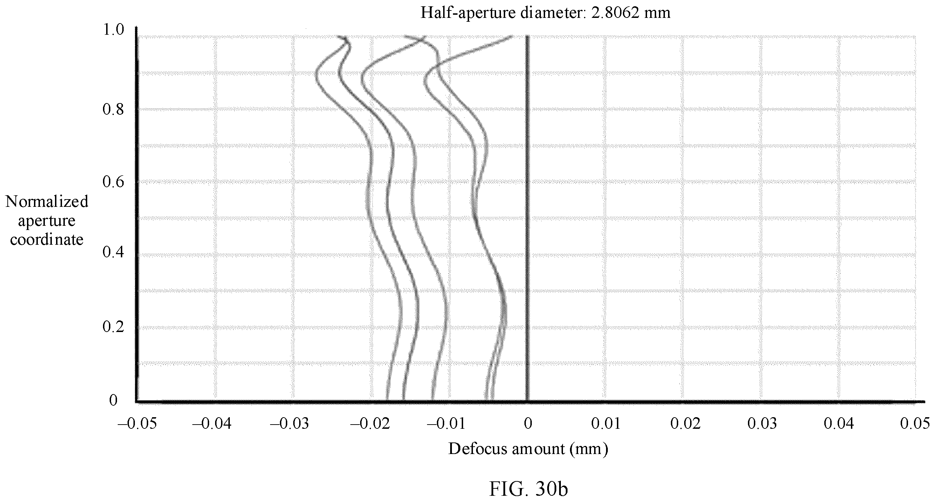

FIG. 30b shows axial aberration curves of the zoom lens shown in FIG. 28 in the intermediate focal length state M. Five curves respectively indicate simulation results of light with wavelengths of 650 nm, 610 nm, 555 nm, 510 nm, and 470 nm at focus depth positions when a half-aperture diameter is 2.8062 mm. It can be seen from

FIG. 30b that, at any specific normalized aperture coordinate, a difference between defocus amounts of curves corresponding to every two different wavelengths is less than 0.03 mm. In other words, axial aberrations of the zoom lens in the intermediate focal length state M are controlled within a small range.

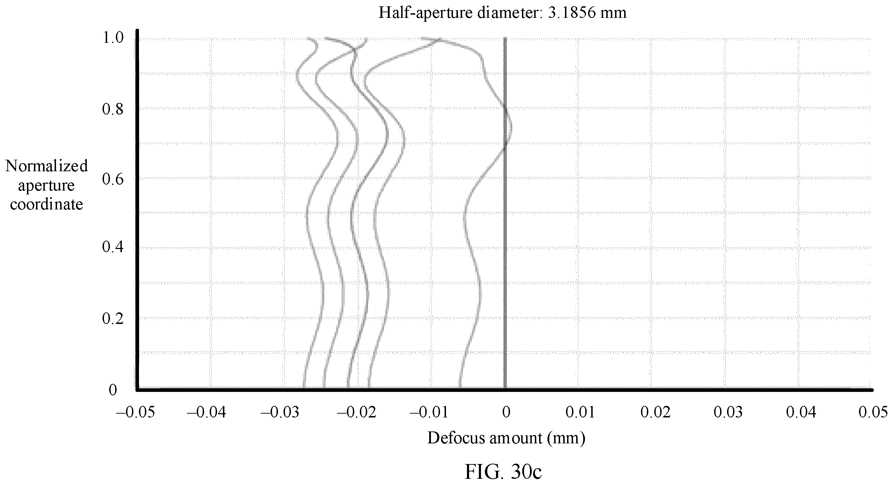

FIG. 30c shows axial aberration curves of the zoom lens shown in FIG. 28 in the telephoto state T. Five curves respectively indicate simulation results of light with wavelengths of 650 nm, 610 nm, 555 nm, 510 nm, and 470 nm at focus depth positions when a half-aperture diameter is 3.1856 mm. It can be seen from FIG. 30c that, at any specific normalized aperture coordinate, a difference between defocus amounts of curves corresponding to every two different wavelengths is less than 0.03 mm. In other words, axial aberrations of the zoom lens in the telephoto state T are controlled within a small range.

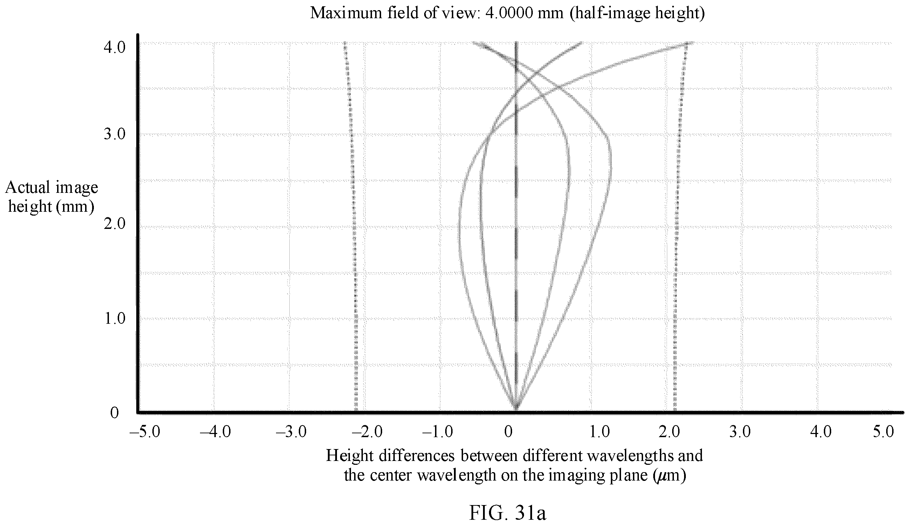

FIG. 31a shows lateral chromatic aberration curves of the zoom lens in the wide-angle state W. Five solid curves in FIG. 31a are respectively simulation curves corresponding to colored light with wavelengths of 650 nm, 610 nm, 555 nm, 510 nm, and 470 nm. A maximum field of view is 4.0000 mm. Dotted lines indicate a diffraction limit range. It can be seen from FIG. 31a that lateral chromatic aberrations of five light rays are all within the diffraction limit range.

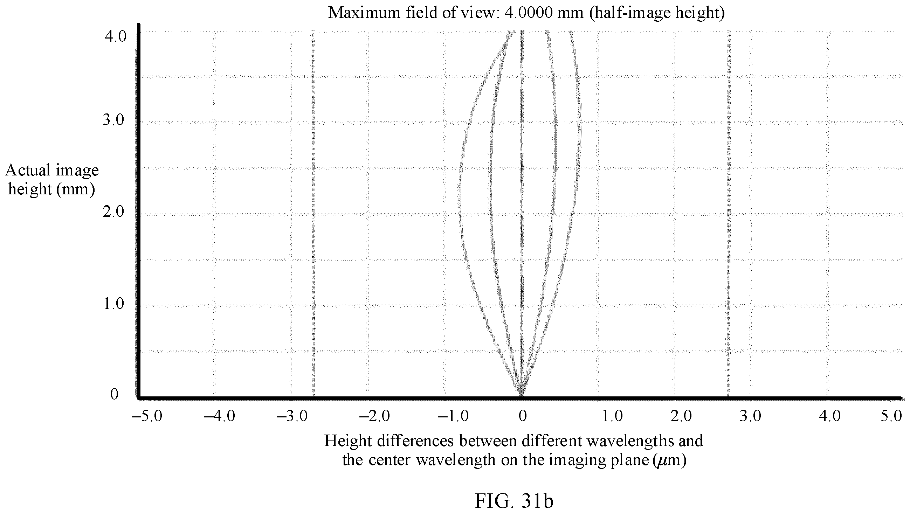

FIG. 31b shows lateral chromatic aberration curves of the zoom lens in the intermediate focal length state M. Five solid curves in FIG. 31b are respectively simulation curves corresponding to colored light with wavelengths of 650 nm, 610 nm, 555 nm, 510 nm, and 470 nm. A maximum field of view is 4.0000 mm. Dotted lines indicate a diffraction limit range. It can be seen from FIG. 31b that lateral chromatic aberrations of five light rays are all within the diffraction limit range.

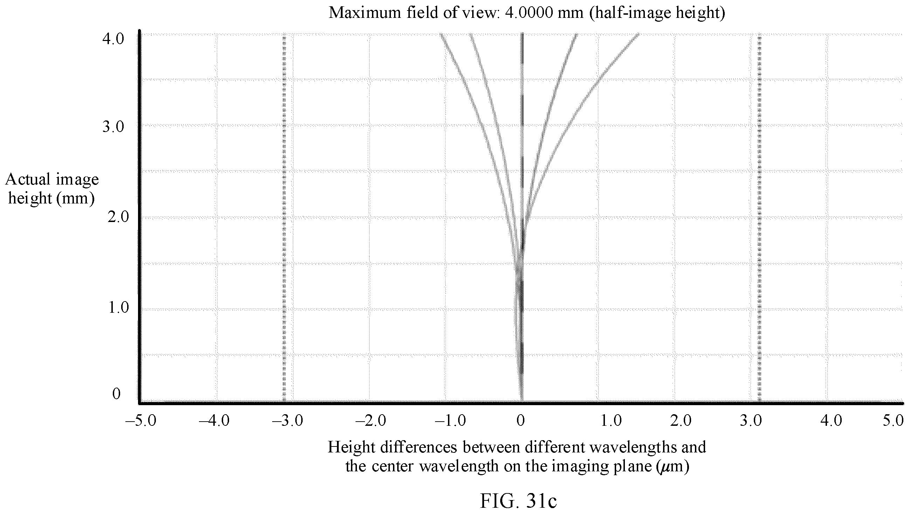

FIG. 31c shows lateral chromatic aberration curves of the zoom lens in the telephoto state T. Five solid curves in FIG. 31c are respectively simulation curves corresponding to colored light with wavelengths of 650 nm, 610 nm, 555 nm, 510 nm, and 470 nm. A maximum field of view is 4.0000 mm. Dotted lines indicate a diffraction limit range. It can be seen from FIG. 31c that lateral chromatic aberrations of five light rays are all within the diffraction limit range.

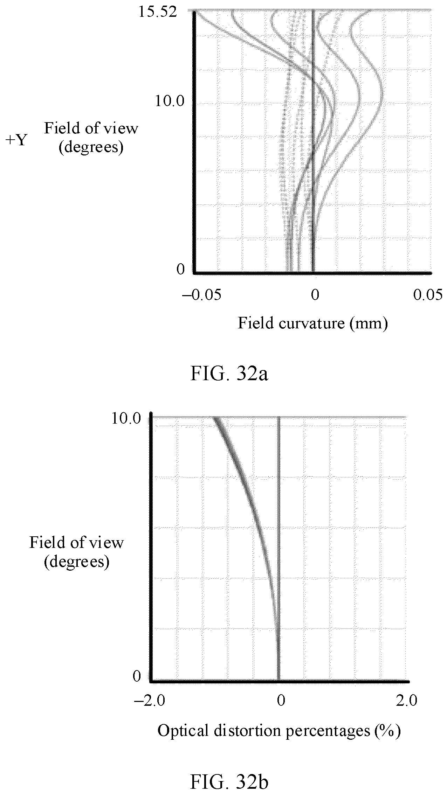

FIG. 32a shows optical distortion curves of the zoom lens in the wide-angle state W, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 32a that the differences between imaging deformations and ideal shapes are very small. FIG. 32b is obtained by calculating percentages of imaging deformations to ideal shapes of the light rays in FIG. 32a. It can be seen from FIG. 32b that optical distortions can be controlled within a range less than 3.0%.

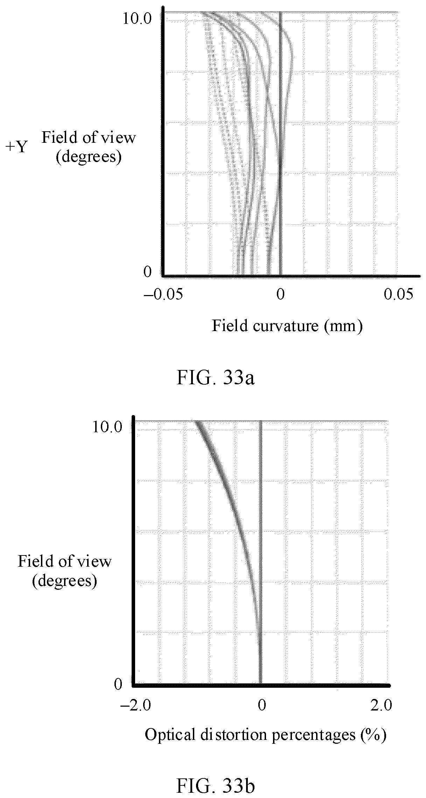

FIG. 33a shows optical distortion curves of the zoom lens in the intermediate focal length state M, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 33a that the differences between imaging deformations and ideal shapes are very small. FIG. 33b is obtained by calculating percentages of imaging deformations to ideal shapes of the light rays in FIG. 33a. It can be seen from FIG. 33b that optical distortions can be controlled within a range less than 1.2%.

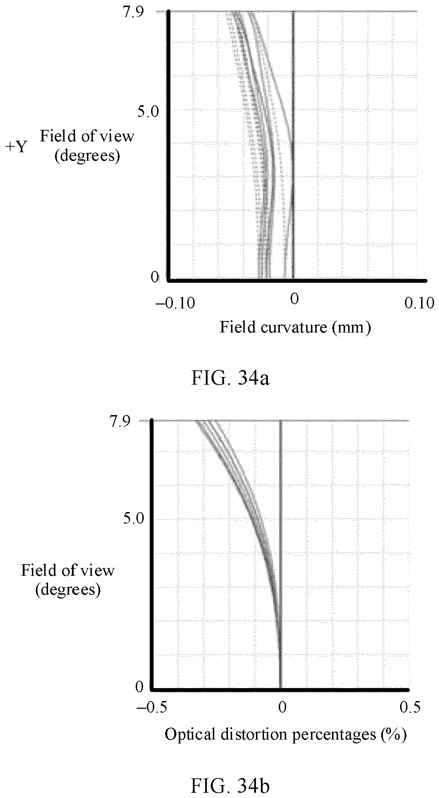

FIG. 34a shows optical distortion curves of the zoom lens in the telephoto state T, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 34a that the differences between imaging deformations and ideal shapes are very small. FIG. 34b is obtained by calculating percentages of imaging deformations to ideal shapes of the light rays in FIG. 34a. It can be seen from FIG. 34b that optical distortions can be controlled within a range less than 0.4%.

According to the four embodiments provided in FIG. 4 to FIG. 34b, a case in which the zoom lens includes three lens groups: the first lens group G1, the second lens group G2, and the third lens group G3 is described above as an example. A form of the zoom lens includes the form of three lens groups. However, this is not limited to the foregoing specific forms.

A ratio of a focal length of each lens groups to the focal length ft at the telephoto end of the zoom lens is not limited to the values in the embodiments provided in FIG. 4 to FIG. 34b. Continuous zoom can be implemented as long as the focal length of each lens group and the focal length at the telephoto end of the zoom lens meet the following ratio relationship: For example, the focal length f1 of the first lens group G1 and the focal length ft at the **telephoto end of the zoom lens meet $0.2 \leq |f1/ft| \leq 0.9$, the focal length f2 of the second** lens group G2 and ft meet $0.10 \leq |f2/ft| \leq$ **0.6, and the focal length f3 of the third lens group G3 and ft meet $0.10 \leq |f3/ft| \leq 0.7$.**

A quantity of lenses included in each lens group in the four embodiments provided in FIG. 4 to FIG. 34b is merely an example. The quantity of lenses in each lens group is not specifically limited for the zoom lens provided in embodiments of this application, and only a total quantity N of lenses in the first lens group G1, the second lens group G2, and the third lens group G3 is limited. For example, each lens group may include one, two, or more lenses. The total quantity N of lenses in the first lens group G1, the second lens group G2, and the third lens group G3 needs **to meet $7 \leq N \leq 11$, to ensure that the zoom lens has a g**ood continuous zoom capability and imaging effect. For example, N may be different positive integers such as 7, 8, 9, 10, or 11. In addition, all lenses included in the first lens **group G1, the second lens group G2, and the third lens group G3 meet $N \leq$ quantity of aspheric surfaces $\leq 2N$, where** the quantity of aspheric surfaces is a quantity of aspheric surfaces of all lenses included in the first lens group G1, the second lens group G2, and the third lens group G3, and N is the total quantity of lenses in the first lens group G1, the second lens group G2, and the third lens group G3. For example, the quantity of aspheric surfaces may be N, 1.2N, 1.5N, 1.7N, or 2N. The aspheric surface is a transparent surface of a lens.

In the four embodiments provided in FIG. 4 to FIG. 34b, in a sliding process of the second lens group G2 and the third lens group G3, the ratio |L1/TTL| of the movement stroke L1 of the second lens group G2 along the optical axis to the total length TTL of the zoom lens from the surface closest to the object side to the imaging plane, and the ratio |L2/TTL| of the movement stroke L2 of the third lens group G3 along the optical axis to the total length TTL of the zoom lens from the surface closest to the object side to the imaging plane are merely examples. Only the ratio of the movement stroke L1 of the second lens group G2 along the optical axis to the total length TTL of the zoom **lens from the surface closest to the object side to the imaging plane needs to meet $0.12 \leq |L1/TTL| \leq 0.35$. For example,** the ratio may be 0.12, 0.16, 0.19, 0.20, 0.25, 0.30, 0.33, or 0.35. The ratio of the movement stroke L2 of the third lens group G3 along the optical axis to the total length TTL of the zoom lens from the surface closest to the object side to **the imaging plane meets $0.08 \leq |L2/TTL| \leq 0.35$. For example, the ratio may be 0.08, 0.12, 0.16, 0.19, 0.20, 0.25, 0.30,** 0.33, or 0.35. In other words, the second lens group G2 and the third lens group G3 can cooperate with each other to achieve continuous zoom.

After the zoom lens of the foregoing structure is used, the ratio |TTL/ft| of the total length TTL of the zoom lens from the surface closest to the object side to the imaging plane to the effective focal length ft at the telephoto end of the zoom lens meets **$0.8 \leq |TTL/ft| \leq 1.2$. This helps achieve a long focal length by using a short total optical** length. The ratio |IMH/ft| of the half-image height IMH to the effective focal length ft at the telephoto end of the zoom **lens meets $0.02 \leq |IMH/ft| \leq 0.20$. For exa**mple, the ratio may be 0.02, 0.05, 0.07, 0.12, 0.15, 0.18, or 0.20. The effective focal length ft at the telephoto end of the zoom lens and an effective focal length fw of the wide-angle end **of the zoom lens meet $1 \leq |ft/fw| \leq 3.7$. For example, the ratio m**ay be 1, 1.2, 1.6, 1.7, 1.9, 2.2, 2.5, 2.8, 3, 3.3, or 3.7, to obtain better imaging quality during continuous zoom.

In addition to the zoom lens including the three lens groups, a fourth lens group G4 may be added on the basis of the zoom lens including the three lens groups shown in FIG. 2, and a related parameter is adaptively adjusted, to maintain a continuous zoom capability. The fourth lens group G4 is located on an image side of the third lens group G3, and the fourth lens group G4 is a lens group with positive focal power. The fourth lens group G4 is a lens group fixed relative to the imaging plane. The second lens group G2 serving as the zoom lens group and the third lens group G3 serving as the compensation lens group move between the first lens group G1 and the fourth lens group G4 along the optical axis of the zoom lens. The fourth lens group G4 is disposed to increase resolution of the zoom lens to obtain a clearer image and improve photographing quality.

Similarly, a lens structure similar to that shown in FIG. 3 may also be used in each lens in the fourth lens group G4, to increase luminous flux and reduce a size in a height direction. A maximum aperture diameter of a lens included in the first lens group G1, the second lens group G2, the third lens group G3, and the fourth lens group G4 **meets 4 mm $\leq$ maximum aperture diameter d $\leq 12$ mm, so that the zoom lens can balance an amount of light passing** through the zoom lens and space occupied by the zoom lens. In addition, the lens in the fourth lens group G4 may also have a cut similar to the cut 11 of the lens 10 (FIG. 3). A height in a vertical direction of each lens in the first lens **group G1, the second lens group G2, the third lens group G3, and the fourth lens group G4 meets 4 mm ≤ height in the vertical direction ≤ 6 mm, to reduce a height of the zoom lens.**

The following uses specific embodiments to describe photographing effect of the zoom lens having four lens groups.

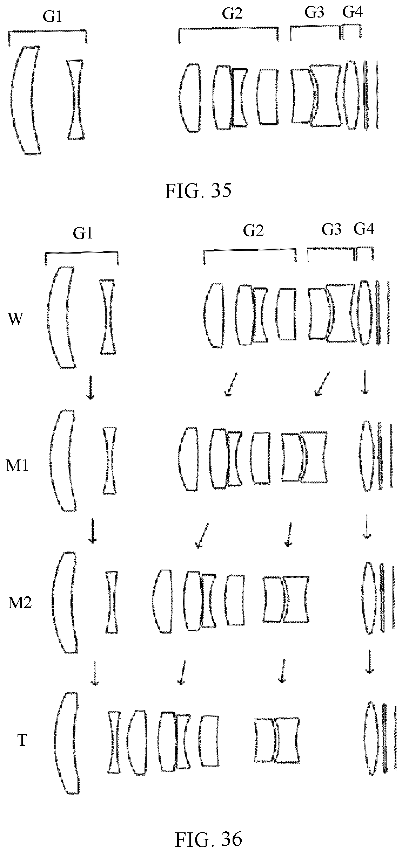

FIG. 35 is an example of a fifth specific zoom lens. The zoom lens sequentially includes the following from an object side to an image side: a first lens group G1 with negative focal power, where a ratio of a focal length f1 of the first lens group G1 to a focal length ft at a telephoto end of the zoom lens is |f1/ft| = 0.556; a second lens group G2 with positive focal power, where a ratio of a focal length f2 of the second lens group G2 to the focal length ft at the telephoto end of the zoom lens is |f2/ft| = 0.241; a third lens group G3 with negative focal power, where a ratio of a focal length f3 of the third lens group G3 to the focal length ft at the telephoto end of the zoom lens is |f3/ft| = 0.211; and a fourth lens group G4 with positive focal power, where a ratio of a focal length f4 of the fourth lens group G4 to the focal length ft at the telephoto end of the zoom lens is |f4/ft| = 0.286.

Still refer to FIG. 35. The zoom lens includes nine lenses with focal power, and includes 16 aspheric surfaces in total. The first lens group G1 includes two lenses sequentially distributed from the object side to the image side, the two lenses are with positive and negative focal power respectively, and a first lens from the object side to the image side is a positive meniscus lens with a convex surface that bulges towards the object side. The second lens group G2 includes four lenses sequentially distributed from the object side to the image side, and the four lenses are with positive, positive, negative, and positive focal power respectively. The third lens group G3 includes two lenses sequentially distributed from the object side to the image side, and the two lenses are with positive and negative focal power respectively. The fourth lens group G4 includes one lens with positive focal power. The second lens group G2 includes at least one lens with negative focal power, to eliminate an aberration. In addition, the zoom lens further has a stop (not shown in FIG. 35). The stop is located on an object side of the second lens group G2, but is not limited thereto. Alternatively, the stop may be disposed on an image side or an object side of the first lens group G1, or may be disposed on an image side or an object side of the third lens group G3. A maximum aperture diameter of a lens in the first lens group G1, the second lens group G2, and the third lens group G3 is 9.6 mm.

Subsequently, refer to Table 5a and Table 5b. Table 5a shows a surface curvature, a thickness (Thickness), a refractive index (nd), and an abbe coefficient (vd) of each lens of the zoom lens shown in FIG. 35 in a wide-angle state. For meanings of the parameters in Table 5a, refer to introduction in a corresponding part in Table 1a. Table 5b shows aspheric coefficients of aspheric surfaces of the lenses.

**Table 5a**

|  | R | Thickness | | nd | | vd | |
|---|---|---|---|---|---|---|---|
| R1 | 10.428 | d1 | 1.8 | n1 | 1.67 | v1 | 19.2 |
| R2 | 15.057 | a1 | 3.754 | | | | |
| R3 | -10.087 | d2 | 0.4 | n2 | 1.54 | v2 | 56.0 |
| R4 | 14.959 | a2 | 9 | | | | |
| R5 | 5.840 | d3 | 1.832 | n3 | 1.54 | v3 | 56.0 |
| R6 | -24.614 | a3 | 1.110 | | | | |
| R7 | 9.85 | d4 | 1.749 | n4 | 1.50 | v4 | 81.6 |
| R8 | -13.99 | a4 | 0.080 | | | | |
| R9 | -32.867 | d5 | 0.664 | n5 | 1.67 | v5 | 19.2 |
| R10 | 5.913 | a5 | 1.409 | | | | |
| R11 | 8.285 | d6 | 1.699 | n6 | 1.67 | v6 | 19.2 |
| R12 | 17.979 | a6 | 1.600 | | | | |
| R13 | -6.522 | d7 | 1.800 | n7 | 1.66 | v7 | 20.4 |
| R14 | -4.515 | a7 | 0.322 | | | | |
| R15 | -8.790 | d8 | 1.626 | n8 | 1.54 | v8 | 56.0 |
| R16 | 4.415 | a8 | 0.677 | | | | |

(continued)

|  | R |  | Thickness |  | nd |  | vd |  |
|---|---|---|---|---|---|---|---|---|
| R17 | 11.476 | d9 | 1.298 | n9 | 1.66 | v9 | 20.4 |
| R18 | -13.374 | a9 | 0.5 |  |  |  |  |

**Table 5b**

| Aspheric coefficient |  |  |  |  |  |  |  |
|---|---|---|---|---|---|---|---|
|  | Type | K | A2 | A3 | A4 | A5 | A6 |
| R1 | Even aspheric | 0.00E+00 | -4.36E-05 | 7.34E-07 | 5.28E-08 | 1.01E-09 | -4.53E-11 |
| R2 | Even aspheric | 0.00E+00 | -1.57E-04 | 5.27E-07 | 1.61E-07 | -3.39E-10 | -1.12E-10 |
| R3 | Even aspheric | 0.00E+00 | 1.10E-04 | 8.91E-06 | 4.90E-07 | -3.58E-08 | 3.07E-10 |
| R4 | Even aspheric | 0.00E+00 | 4.64E-05 | 9.09E-06 | -1.97E-07 | 1.117E-08 | -8.89E-10 |
| R5 | Even aspheric | 0.00E+00 | -3.10E-04 | 5.88E-06 | -6.57E-07 | 4.01E-08 | -5.08E-10 |
| R6 | Even aspheric | 0.00E+00 | 4.57E-04 | 1.14E-05 | -9.08E-07 | 6.51E-08 | -1.51E-09 |
| R9 | Even aspheric | 0.00E+00 | 5.01E-06 | -2.13E-05 | -1.21E-06 | -1.28E-07 | 9E-10 |
| R10 | Even aspheric | 0.00E+00 | 9.03E-04 | 6.57E-05 | 3.27E-06 | -6.83E-08 | -8.28E-08 |
| R11 | Even aspheric | 0.00E+00 | -1.04E-03 | 1.70E-05 | -3.21E-06 | 4.29E-07 | -7.84E-08 |
| R12 | Even aspheric | 0.00E+00 | -1.13E-03 | -1.30E-05 | -9.06E-06 | 1.14E-06 | -8.80E-08 |
| R13 | Even aspheric | 0.00E+00 | 8.37E-03 | -6.30E-04 | 8.75E-05 | -7.56E-06 | 3.21E-07 |
| R14 | Even aspheric | 0.00E+00 | 6.12E-03 | -6.46E-04 | 1.65E-04 | -1.79E-05 | 5.24E-07 |
| R15 | Even aspheric | 0.00E+00 | -1.77E-02 | 8.68E-04 | 2.34E-04 | -4.56E-05 | 2.20E-06 |
| R16 | Even aspheric | 0.00E+00 | -1.97E-02 | 2.88E-03 | -3.20E-04 | 2.23E-05 | -7.14E-07 |
| R17 | Even aspheric | 0.00E+00 | -1.44E-04 | -3.95E-06 | 9.01E-07 | 1.08E-07 | -1.78E-08 |
| R18 | Even aspheric | 0.00E+00 | -1.02E-03 | 8.32E-05 | 2.92E-06 | -5.31E-07 | 6.42E-09 |

In the 16 aspheric surfaces of the zoom lens shown in Table 5b, surface types z of all the even aspheric surfaces may be defined according to, but not limited to, the following aspheric surface formula:

$$z = \frac{cr^2}{1 + \sqrt{1 - Kc^2r^2}} + A_2 r^4 + A_3 r^6 + A_4 r^8 + A_5 r^{10} + A_6 r^{12}$$,

where
z is a vector height of the aspheric surface, r is a radial coordinate of the aspheric surface, c is a spherical curvature of a vertex on the aspheric surface, K is a conic constant, and A2, A3, A4, A5, and A6 are aspheric coefficients.

Because the zoom lens has the 16 aspheric surfaces, the aspheric surfaces may be flexibly designed, and a good aspheric surface type may be designed based on an actual requirement, to improve imaging quality.

A structure of the zoom lens shown in FIG. 35 is used. A ratio |TTL/ft| of a total length TTL of the zoom lens from a surface closest to the object side to the imaging plane to the effective focal length ft at the telephoto end of the zoom lens is 0.97. In view of this, a small total optical length may be used to achieve a long focal length. A ratio |IMH/ft| of a half-image height IMH to the effective focal length ft at the telephoto end of the zoom lens may reach 0.08955.

As shown in FIG. 35, positions of the first lens group G1 and the fourth lens group G4 are fixed relative to the imaging plane, and the second lens group G2 and the third lens group G3 move along an optical axis between the first lens group G1 and the fourth lens group G4. The second lens group G2 serves as a zoom lens group, and the third lens group G3 serves as a compensation lens group, to implement continuous zoom.

FIG. 36 is a zoom process of the zoom lens shown in FIG. 35. The zoom lens has four focal length states: W indicates the wide-angle state, M1 indicates a first intermediate focal length state, M2 indicates a second intermediate focal length state, and T indicates a telephoto state. The wide-angle state T of the zoom lens corresponds to the following relative positions of the lens groups. The third lens group G3 is close to the fourth lens group G4, and the second lens group G2 is close to an object side of the third lens group G3. When the zoom lens zooms from the wide-angle state W to the first intermediate focal length state M1, the second lens group G2 moves towards the first lens group G1, and the third lens group G3 moves towards the second lens group G2. When the zoom lens zooms from the first intermediate focal length state M1 to the second intermediate focal length state M2, the second lens group G2 continues to move towards the first lens group G1, and the third lens group G3 continues to move towards the second lens group G2. When the zoom lens zooms from the second intermediate focal length state M2 to the telephoto state T, the second lens group G2 continues to move towards the first lens group G1, and the third lens group G3 continues to move towards the second lens group G2.

It can be seen from FIG. 36 that when the zoom lens zooms from the wide-angle state W to the telephoto state T, both the second lens group G2 and the third lens group G3 keep moving towards the object side, but a distance between the third lens group G3 and the second lens group G2 first decreases and then increases, to implement continuous zoom. The second lens group G2 serves as a zoom lens group, and a ratio |L1/TTL| of a movement stroke L1 of the second lens group G2 along the optical axis to a total length TTL of the zoom lens from the surface closest to the object side to the imaging plane is 0.24615. The third lens group G3 serves as a compensation lens group, and a ratio |L2/TTL| of a movement stroke L2 of the third lens group G3 along the optical axis to the total length TTL of the zoom lens from the surface closest to the object side to the imaging plane is 0.17871.

Refer to Table 5c and Table 5d correspondingly. Table 5c shows basic parameters of the zoom lens, and Table 5d shows spacing distances between the lens groups of the zoom lens in the wide-angle state W, the first intermediate focal length state M1, the second intermediate focal length state M2, and the telephoto state T. Table 5e shows chief ray angle values (CRA values) of the zoom lens in different fields of view in the wide-angle state W, the first intermediate focal length state M1, the second intermediate focal length state M2, and the telephoto state T. Numbers in a left column indicate different fields of view.

**Table 5c**

|  | W | M1 | M2 | T |
|---|---|---|---|---|
| Focal length F | 11.5 mm | 17 mm | 24 mm | 33.5 mm |
| F-number | 2.56 | 3.37 | 4.19 | 5.05 |
| Half-image height IMH | 3 mm | 3 mm | 3 mm | 3 mm |
| Half FOV | 15° | 10.0° | 7.10° | 5.09° |
| BFL | 1.71 mm | 1.71 mm | 1.71 mm | 1.71 mm |
| TTL | 32.5 mm | 32.5 mm | 32.5 mm | 32.5 mm |
| Designed wavelength | 650 nm, 610 nm, 555 nm, 510 nm, and 470 nm | | | |

**Table 5d**

|  | W | M1 | M2 | T |
|---|---|---|---|---|
| a2 | 9.000 mm | 6.341 mm | 3.666 mm | 1.000 mm |
| a6 | 1.600 mm | 1.500 mm | 2.183 mm | 3.792 mm |
| a8 | 0.677 mm | 3.436 mm | 5.428 mm | 6.485 mm |

**Table 5e**

|  | W | M1 | M2 | T |
|---|---|---|---|---|
| 0 | 0 | 0 | 0 | 0 |
| 0.2 | 2.068 | 0.406 | -0.406 | -0.79 |

(continued)

|  | W | M1 | M2 | T |
|---|---|---|---|---|
| 0.4 | 3.924 | 0.583 | -1.052 | -1.83 |
| 0.6 | 5.457 | 0.449 | -1.987 | -3.15 |
| 0.8 | 6.60 | 0.128 | -3.04 | -4.56 |
| 1 | 8.18 | -0.488 | -4.40 | -6.27 |

Simulation is performed on the zoom lens shown in FIG. 35. The following describes imaging effect of the zoom lens with reference to the accompanying drawings.

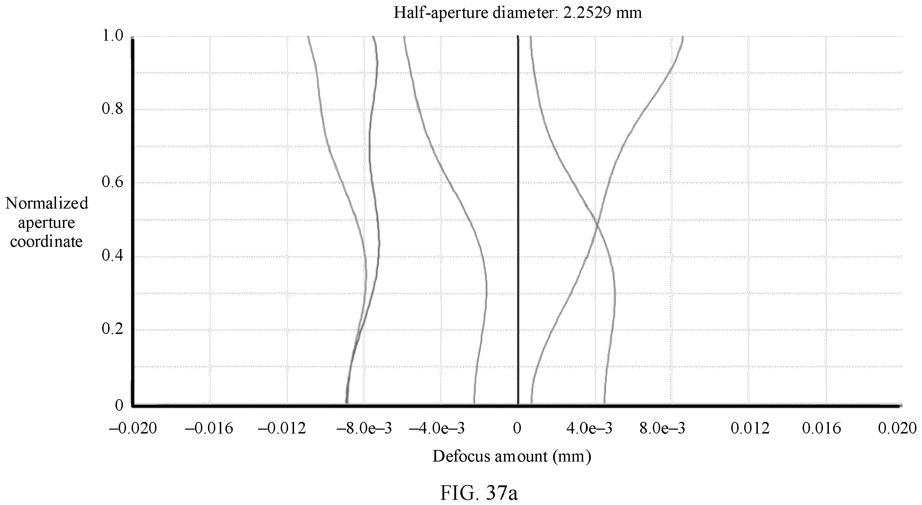

FIG. 37a shows axial aberration curves of the zoom lens shown in FIG. 35 in the wide-angle state W. Five curves respectively indicate simulation results of light with wavelengths of 650 nm, 610 nm, 555 nm, 510 nm, and 470 nm at focus depth positions when a half-aperture diameter is 2.2529 mm. It can be seen from FIG. 37a that, at any specific normalized aperture coordinate, a difference between defocus amounts of curves corresponding to every two different wavelengths is less than 0.020 mm. In other words, axial aberrations of the zoom lens in the wide-angle state W are controlled within a small range.

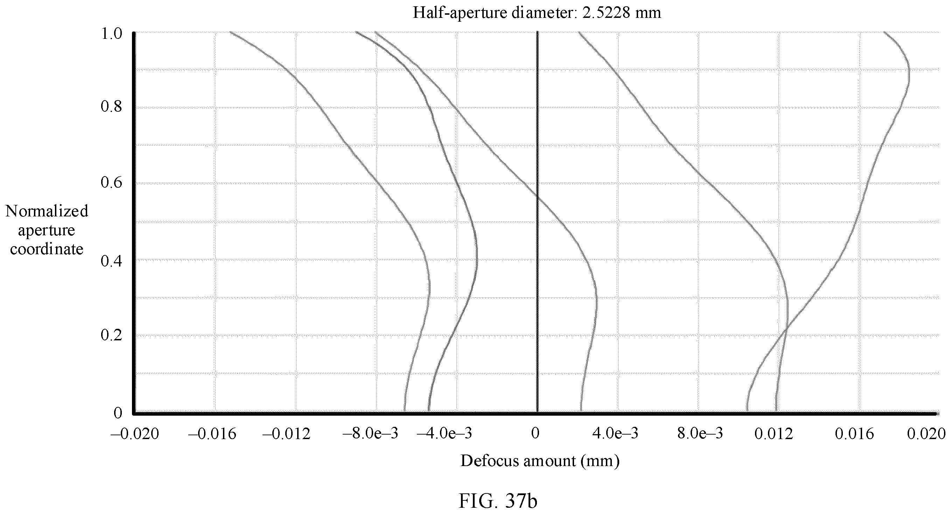

FIG. 37b shows axial aberration curves of the zoom lens shown in FIG. 35 in the first intermediate focal length state M1. Five curves respectively indicate simulation results of light with wavelengths of 650 nm, 610 nm, 555 nm, 510 nm, and 470 nm at focus depth positions when a half-aperture diameter is 2.5228 mm. It can be seen from FIG. 37b that, at any specific normalized aperture coordinate, a difference between defocus amounts of curves corresponding to every two different wavelengths is less than 0.040 mm. In other words, axial aberrations of the zoom lens in the first intermediate focal length state M1 are controlled within a small range.

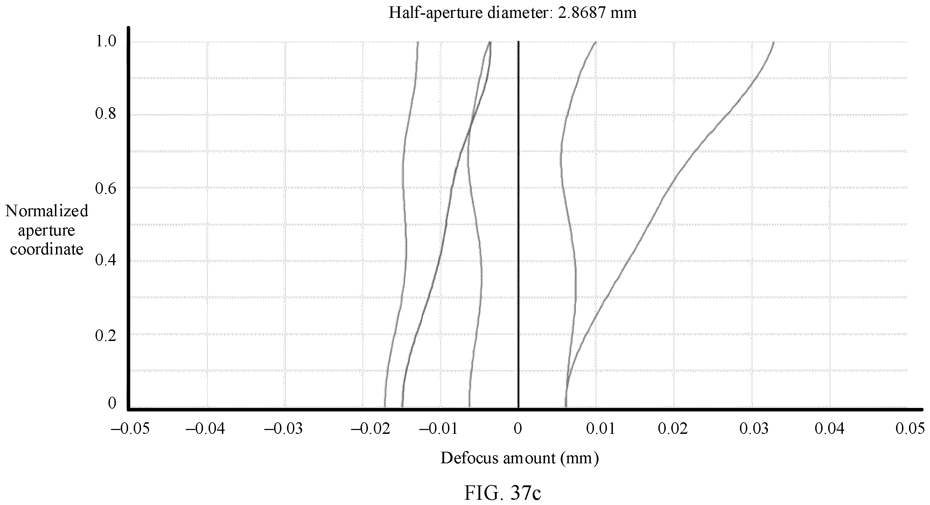

FIG. 37c shows axial aberration curves of the zoom lens shown in FIG. 35 in the second intermediate focal length state M2. Five curves respectively indicate simulation results of light with wavelengths of 650 nm, 610 nm, 555 nm, 510 nm, and 470 nm at focus depth positions when a half-aperture diameter is 2.8687 mm. It can be seen from FIG. 37c that, at any specific normalized aperture coordinate, a difference between defocus amounts of curves corresponding to every two different wavelengths is less than 0.03 mm. In other words, axial aberrations of the zoom lens in the second intermediate focal length state M2 are controlled within a small range.

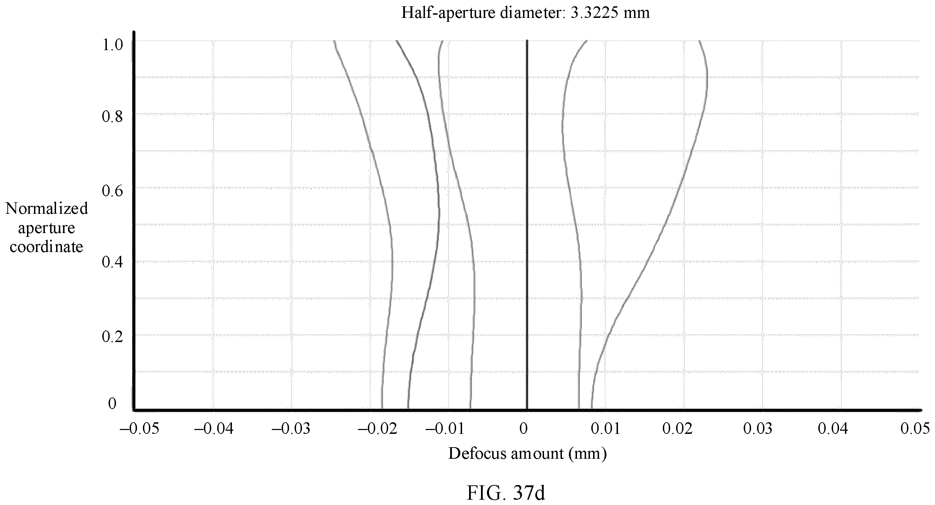

FIG. 37d shows axial aberration curves of the zoom lens shown in FIG. 35 in the telephoto state T. Five curves respectively indicate simulation results of light with wavelengths of 650 nm, 610 nm, 555 nm, 510 nm, and 470 nm at focus depth positions when a half-aperture diameter is 3.3225 mm. It can be seen from FIG. 37d that, at any specific normalized aperture coordinate, a difference between defocus amounts of curves corresponding to every two different wavelengths is less than 0.05 mm. In other words, axial aberrations of the zoom lens in the telephoto state T are controlled within a small range.

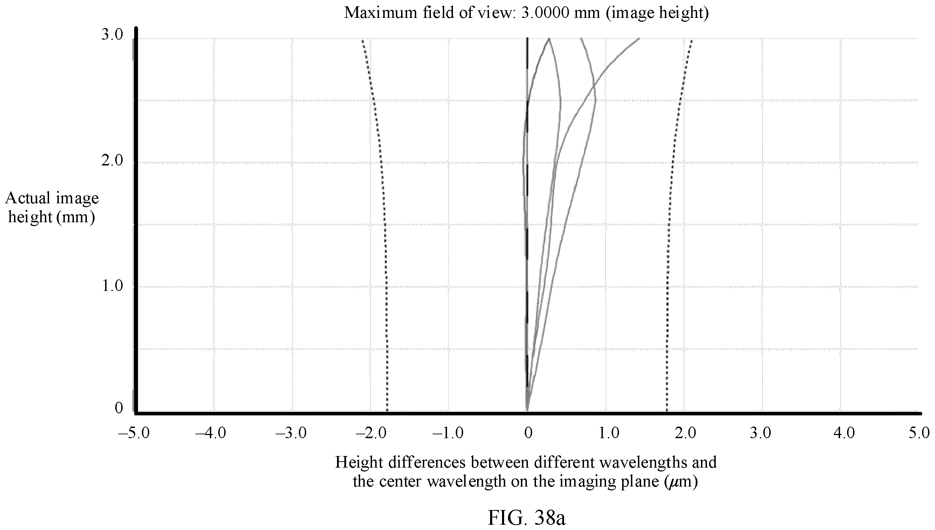

FIG. 38a shows lateral chromatic aberration curves of the zoom lens in the wide-angle state W. Five solid curves in FIG. 38a are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 38a that lateral chromatic aberrations of five light rays are all within the diffraction limit range.

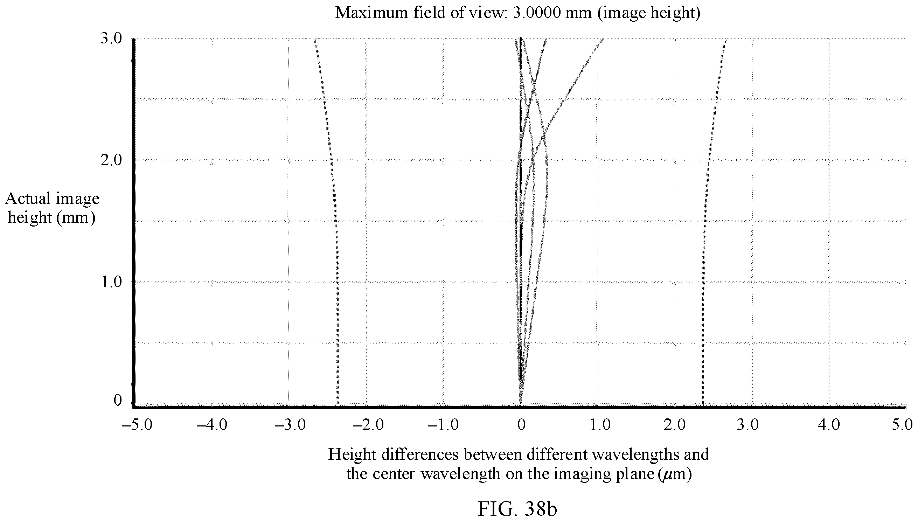

FIG. 38b shows lateral chromatic aberration curves of the zoom lens in the first intermediate focal length state M1. Five solid curves in FIG. 38b are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 38b that lateral chromatic aberrations of five light rays are all within the diffraction limit range.

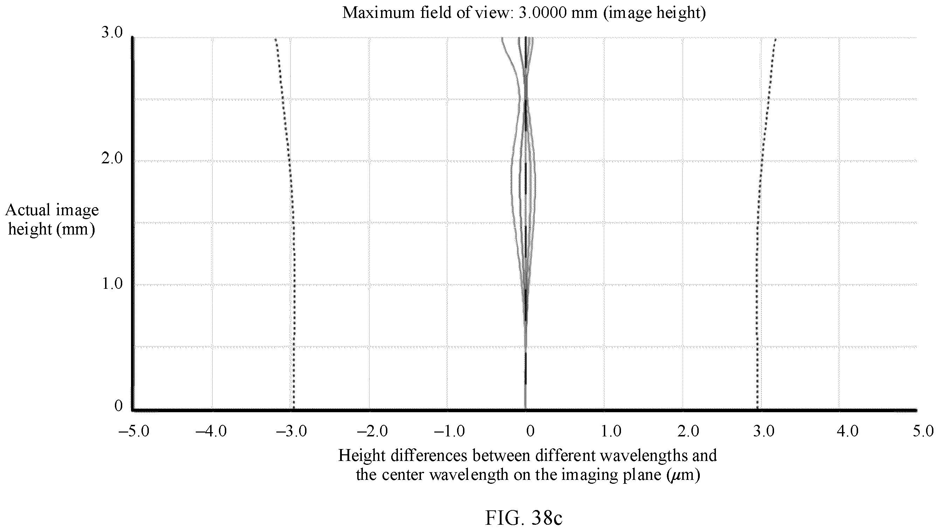

FIG. 38c shows lateral chromatic aberration curves of the zoom lens in the second intermediate focal length state M2. Five solid curves in FIG. 38c are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 38c that lateral chromatic aberrations of five light rays are all within the diffraction limit range.

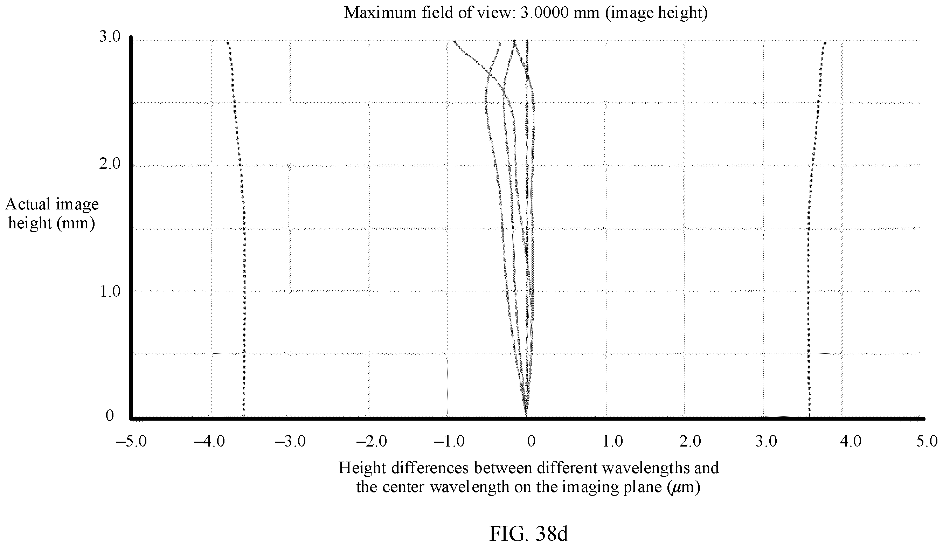

FIG. 38d shows lateral chromatic aberration curves of the zoom lens in the telephoto state T. Five solid curves in FIG. 38d are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 38d that lateral chromatic aberrations of five light rays are all within the diffraction limit range.

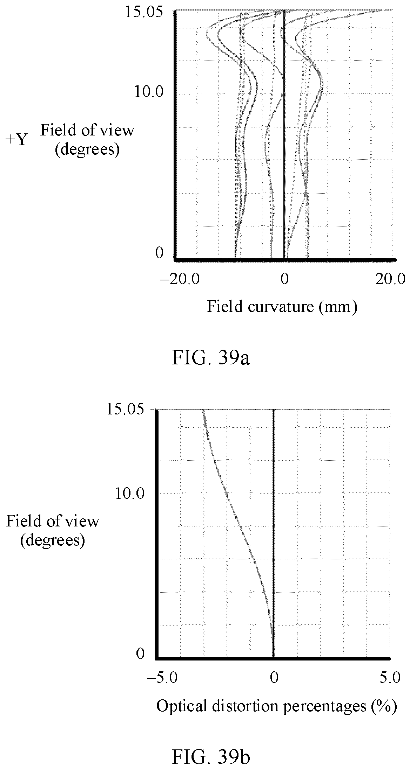

FIG. 39a shows optical distortion curves of the zoom lens in the wide-angle state W, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 39a that the differences between imaging deformations and ideal shapes are very small. FIG. 39b is obtained by calculating percentages of imaging deformations to ideal shapes of the light rays in FIG. 39a. It can be seen from FIG. 39b that optical distortions can be controlled within a range less than or equal to 3%.

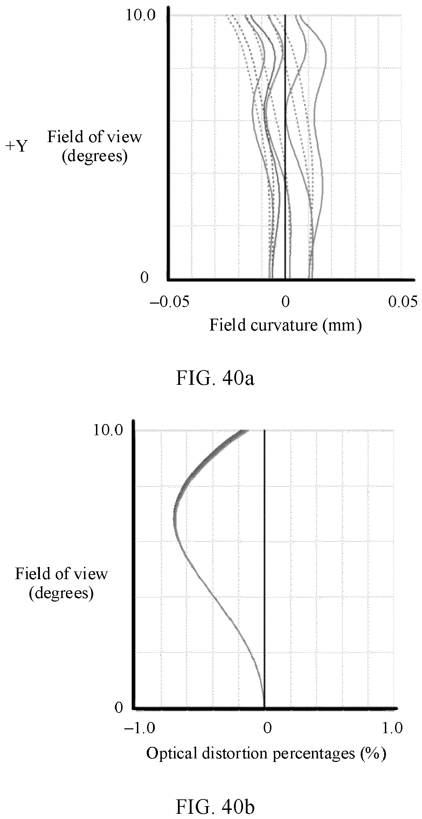

FIG. 40a shows optical distortion curves of the zoom lens in the first intermediate focal length state M1, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 40a that the differences between imaging deformations and ideal shapes are very small. FIG. 40b is obtained by calculating percentages of imaging deformations to ideal shapes of the light rays in FIG. 40a. It can be seen from FIG. 40b that optical distortions can be controlled within a range less than 0.8%.

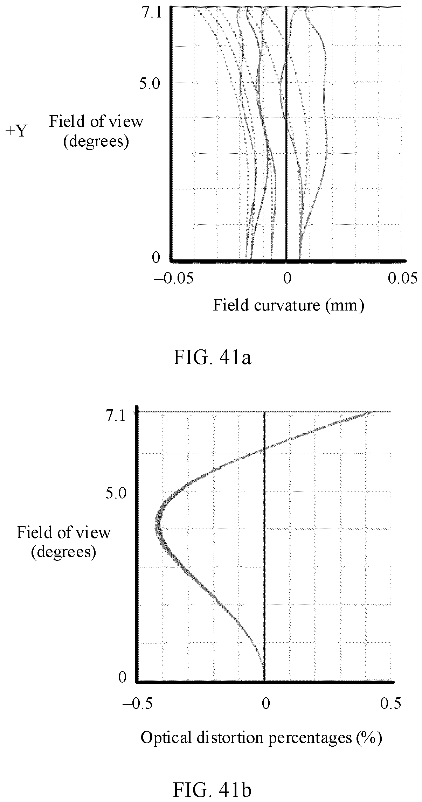

FIG. 41a shows optical distortion curves of the zoom lens in the second intermediate focal length state M2, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 41a that the differences between imaging deformations and ideal shapes are very small. FIG. 41b is obtained by calculating percentages of imaging deformations to ideal shapes of the light rays in FIG. 41a. It can be seen from FIG. 41b that optical distortions can be controlled within a range less than 0.5%.

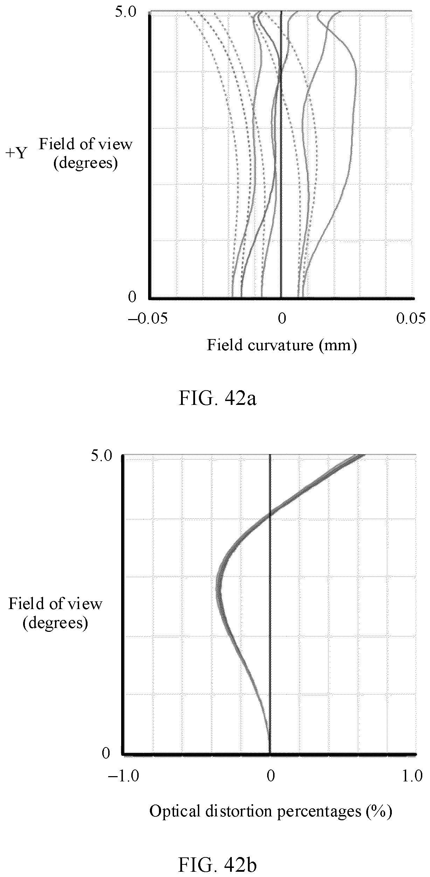

FIG. 42a shows optical distortion curves of the zoom lens in the telephoto state T, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 42a that the differences between imaging deformations and ideal shapes are very small. FIG. 42b is obtained by calculating percentages of imaging deformations to ideal shapes of the light rays in FIG. 42a. It can be seen from FIG. 42b that optical distortions can be controlled within a range less than 0.8%.

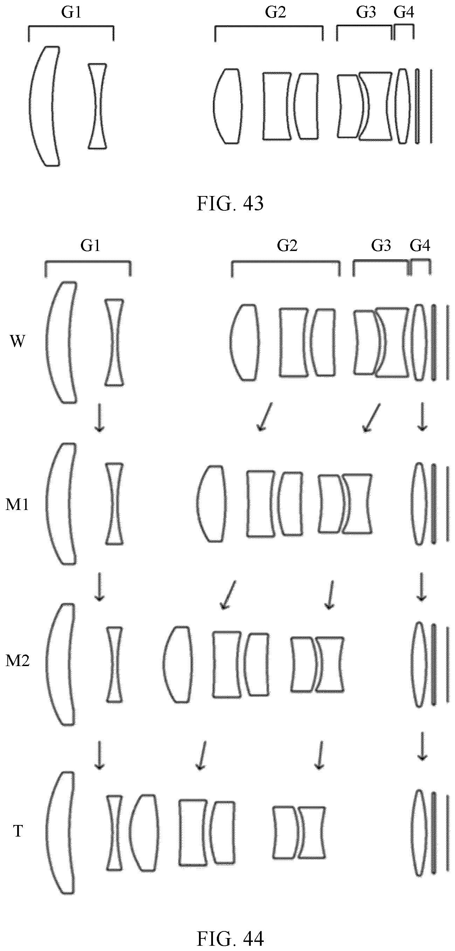

FIG. 43 is an example of a sixth specific zoom lens. The zoom lens sequentially includes the following from an object side to an image side: a first lens group G1 with negative focal power, where a ratio of a focal length f1 of the first lens group G1 to a focal length ft at a telephoto end of the zoom lens is |f1/ft| = 0.579; a second lens group G2 with positive focal power, where a ratio of a focal length f2 of the second lens group G2 to the focal length ft at the telephoto end of the zoom lens is |f2/ft| = 0.260; a third lens group G3 with negative focal power, where a ratio of a focal length f3 of the third lens group G3 to the focal length ft at the telephoto end of the zoom lens is |f3/ft| = 0.205; and a fourth lens group G4 with positive focal power, where a ratio of a focal length f4 of the fourth lens group G4 to the focal length ft at the telephoto end of the zoom lens is |f4/ft| = 0.307.

Still refer to FIG. 43. The zoom lens includes eight lenses with focal power, and includes 14 aspheric surfaces in total. The first lens group G1 includes two lenses sequentially distributed from the object side to the image side, the two lenses are with positive and negative focal power respectively, and a first lens from the object side to the image side is a positive meniscus lens with a convex surface that bulges towards the object side. The second lens group G2 includes three lenses sequentially distributed from the object side to the image side, and the three lenses are with positive, negative, and positive focal power respectively. The third lens group G3 includes two lenses sequentially distributed from the object side to the image side, and the two lenses are with positive and negative focal power respectively. The fourth lens group G4 includes one lens with positive focal power. The second lens group G2 includes at least one lens with negative focal power, to eliminate an aberration. In addition, the zoom lens further has a stop (not shown in FIG. 43). The stop is located on an object side of the second lens group G2, but is not limited thereto. Alternatively, the stop may be disposed on an image side or an object side of the first lens group G1, or may be disposed on an image side or an object side of the third lens group G3. A maximum aperture diameter of a lens in the first lens group G1, the second lens group G2, and the third lens group G3 is 9.6 mm.

Subsequently, refer to Table 6a and Table 6b. Table 6a shows a surface curvature, a thickness (Thickness), a refractive index (nd), and an abbe coefficient (vd) of each lens of the zoom lens shown in FIG. 43 in a wide-angle state. For meanings of the parameters in Table 6a, refer to introduction in a corresponding part in Table 1a. Table 6b shows aspheric coefficients of aspheric surfaces of the lenses.

**Table 6a**

|    | R      | Thickness |       | nd |      | vd |    |
|----|--------|-----------|-------|----|------|----|----|
| R1 | 10.589 | d1        | 1.8   | n1 | 1.64 | v1 | 24 |
| R2 | 20.363 | a1        | 3.449 |    |      |    |    |

(continued)

|  | R | Thickness |  | nd |  | vd |  |
|---|---|---|---|---|---|---|---|
| R3 | -9.802 | d2 | 0.4 | n2 | 1.54 | v2 | 56.0 |
| R4 | 12.424 | a2 | 9 |  |  |  |  |
| R5 | 5.065 | d3 | 2.234 | n3 | 1.50 | v3 | 81.6 |
| R6 | -13.319 | a3 | 1.800 |  |  |  |  |
| R7 | -34.719 | d4 | 1.800 | n4 | 1.57 | v4 | 19.2 |
| R8 | 13.701 | a4 | 0.585 |  |  |  |  |
| R9 | 6.697 | d5 | 1.800 | n5 | 1.54 | v5 | 56 |
| R10 | 27.4 | a5 | 1.901 |  |  |  |  |
| R11 | -6.952 | d6 | 1.800 | n6 | 1.57 | v6 | 19.2 |
| R12 | -4.775 | a6 | 0.437 |  |  |  |  |
| R13 | -7.759 | d7 | 1.417 | n7 | 1.54 | v7 | 56.0 |
| R14 | 4.642 | a7 | 0.695 |  |  |  |  |
| R15 | 13.343 | d8 | 1.15 | n8 | 1.57 | v8 | 19.2 |
| R16 | -13.825 | a8 | 0.5 |  |  |  |  |

**Table 6b**

| Aspheric coefficient |  |  |  |  |  |  |  |
|---|---|---|---|---|---|---|---|
|  | Type | K | A2 | A3 | A4 | A5 | A6 |
| R1 | Even aspheric | 0.00E+00 | 1.32E-04 | 1.23E-06 | 8.81E-08 | -1.70E-09 | 1.37E-10 |
| R2 | Even aspheric | 0.00E+00 | 1.04E-04 | -3.97E-07 | -1.52E-09 | 8.22E-09 | -2.46E-11 |
| R3 | Even aspheric | 0.00E+00 | 1.12E-04 | 1.12E-06 | 6.96E-07 | -9.87E-09 | -5.21E-10 |
| R4 | Even aspheric | 0.00E+00 | -1.18E-04 | 8.91E-06 | -7.40E-08 | 2.75E-08 | -1.58E-09 |
| R5 | Even aspheric | 0.00E+00 | -4.96E-04 | -1.83E-06 | -9.26E-07 | 4.85E-08 | -1.84E-09 |
| R6 | Even aspheric | 0.00E+00 | 5.99E-04 | 6.86E-06 | -2.80E-07 | 7.57E-09 | -2.83E-10 |
| R7 | Even aspheric | 0.00E+00 | 2.19E-04 | 1.53E-05 | 1.87E-06 | -2.77E-07 | -2.96E-09 |
| R8 | Even aspheric | 0.00E+00 | 1.05E-03 | 6.42E-05 | 8.67E-06 | 9.80E-08 | -3.82E-08 |
| R9 | Even aspheric | 0.00E+00 | -5.81E-04 | -5.40E-05 | -6.47E-06 | 5.71E-07 | -6.46E-08 |
| R10 | Even aspheric | 0.00E+00 | 8.02E-05 | -8.68E-05 | -1.93E-05 | 1.62E-06 | -6.72E-08 |
| R11 | Even aspheric | 0.00E+00 | 7.37E-03 | -5.79E-04 | 8.36E-05 | -6.94E-06 | 2.86E-07 |
| R12 | Even aspheric | 0.00E+00 | 6.28E-03 | -8.88E-04 | 1.92E-04 | -1.89E-05 | 5.76E-07 |
| R13 | Even aspheric | 0.00E+00 | -1.70E-02 | 8.83E-04 | 2.14E-04 | -4.35E-05 | 2.13E-06 |
| R14 | Even aspheric | 0.00E+00 | -1.96E-02 | 3.10E-03 | -3.58E-04 | 2.55E-05 | -8.37E-07 |

In the 14 aspheric surfaces of the zoom lens shown in Table 6b, surface types z of all the even aspheric surfaces may be defined according to, but not limited to, the following aspheric surface formula:

$$z = \frac{cr^2}{1 + \sqrt{1 - Kc^2r^2}} + A_2r^4 + A_3r^6 + A_4r^8 + A_5r^{10} + A_6r^{12}$$

where

z is a vector height of the aspheric surface, r is a radial coordinate of the aspheric surface, c is a spherical curvature of a vertex on the aspheric surface, K is a conic constant, and A2, A3, A4, A5, and A6 are aspheric coefficients.

Because the zoom lens has the 14 aspheric surfaces, the aspheric surfaces may be flexibly designed, and a good aspheric surface type may be designed based on an actual requirement, to improve imaging quality.

A structure of the zoom lens shown in FIG. 43 is used. A ratio |TTL/ft| of a total length TTL of the zoom lens from a surface closest to the object side to the imaging plane to the effective focal length ft at the telephoto end of the zoom lens is 0.955. In view of this, a small total optical length may be used to achieve a long focal length. A ratio |IMH/ft| of a half-image height IMH to the effective focal length ft at the telephoto end of the zoom lens may reach 0.08955.

As shown in FIG. 43, positions of the first lens group G1 and the fourth lens group G4 are fixed relative to the imaging plane, and the second lens group G2 and the third lens group G3 move along an optical axis between the first lens group G1 and the fourth lens group G4. The second lens group G2 serves as a zoom lens group, and the third lens group G3 serves as a compensation lens group, to implement continuous zoom.

FIG. 44 is a zoom process of the zoom lens shown in FIG. 43. The zoom lens has four focal length states: W indicates the wide-angle state, M1 indicates a first intermediate focal length state, M2 indicates a second intermediate focal length state, and T indicates a telephoto state. The wide-angle state T of the zoom lens corresponds to the following relative positions of the lens groups. The third lens group G3 is close to the fourth lens group G4, and the second lens group G2 is close to an object side of the third lens group G3. When the zoom lens zooms from the wide-angle state W to the first intermediate focal length state M1, the second lens group G2 moves towards the first lens group G1, and the third lens group G3 moves towards the second lens group G2. When the zoom lens zooms from the first intermediate focal length state M1 to the second intermediate focal length state M2, the second lens group G2 continues to move towards the first lens group G1, and the third lens group G3 continues to move towards the second lens group G2. When the zoom lens zooms from the second intermediate focal length state M2 to the telephoto state T, the second lens group G2 continues to move towards the first lens group G1, and the third lens group G3 continues to move towards the second lens group G2.

It can be seen from FIG. 44 that when the zoom lens zooms from the wide-angle state W to the telephoto state T, both the second lens group G2 and the third lens group G3 keep moving towards the object side, but a distance between the third lens group G3 and the second lens group G2 first decreases and then increases, to implement continuous zoom. The second lens group G2 serves as a zoom lens group, and a ratio |L1/TTL| of a movement stroke L1 of the second lens group G2 along the optical axis to a total length TTL of the zoom lens from the surface closest to the object side to the imaging plane is 0.25016. The third lens group G3 serves as a compensation lens group, and a ratio |L2/TTL| of a movement stroke L2 of the third lens group G3 along the optical axis to the total length TTL of the zoom lens from the surface closest to the object side to the imaging plane is 0.20385.

Refer to Table 6c, Table 6d, and Table 6e correspondingly. Table 6c shows basic parameters of the zoom lens, and Table 6d shows spacing distances between the lens groups of the zoom lens in the wide-angle state W, the first intermediate focal length state M1, the second intermediate focal length state M2, and the telephoto state T. Table 6e shows chief ray angle values (CRA values) of the zoom lens in different fields of view in the wide-angle state W, the first intermediate focal length state M1, the second intermediate focal length state M2, and the telephoto state T.

**Table 6c**

|  | W | M1 | M2 | T |
|---|---|---|---|---|
| Focal length F | 11.5 mm | 17 mm | 24 mm | 33.5 mm |
| F-number | 2.48 | 3.29 | 4.09 | 4.93 |
| Half-image height IMH | 3 mm | 3 mm | 3 mm | 3 mm |
| Half FOV | 14.9° | 9.95° | 7.06° | 5.07° |
| BFL | 1.71 mm | 1.71 mm | 1.71 mm | 1.71 mm |
| TTL | 32.5 mm | 32.5 mm | 32.5 mm | 32.5 mm |
| Designed wavelength | 650 nm, 610 nm, 555 nm, 510 nm, and 470 nm | | | |

**Table 6d**

|  | W | M1 | M2 | T |
|---|---|---|---|---|
| a2 | 9.000 mm | 6.341 mm | 3.666 mm | 1.000 mm |
| a6 | 1.600 mm | 1.500 mm | 2.183 mm | 3.792 mm |
| a8 | 0.677 mm | 3.436 mm | 5.428 mm | 6.485 mm |

**Table 6e**

|  | W | M1 | M2 | T |
|---|---|---|---|---|
| 0 | 0 | 0 | 0 | 0 |
| 0.2 | 2.29 | 0.65 | -0.18 | -0.62 |
| 0.4 | 4.48 | 1.21 | -0.43 | -1.30 |
| 0.6 | 6.49 | 1.59 | -0.84 | -2.14 |
| 0.8 | 7.99 | 1.71 | -1.51 | -3.23 |
| 1 | 8.43 | 1.45 | -2.55 | -4.69 |

Simulation is performed on the zoom lens shown in FIG. 43. The following describes imaging effect of the zoom lens with reference to the accompanying drawings.

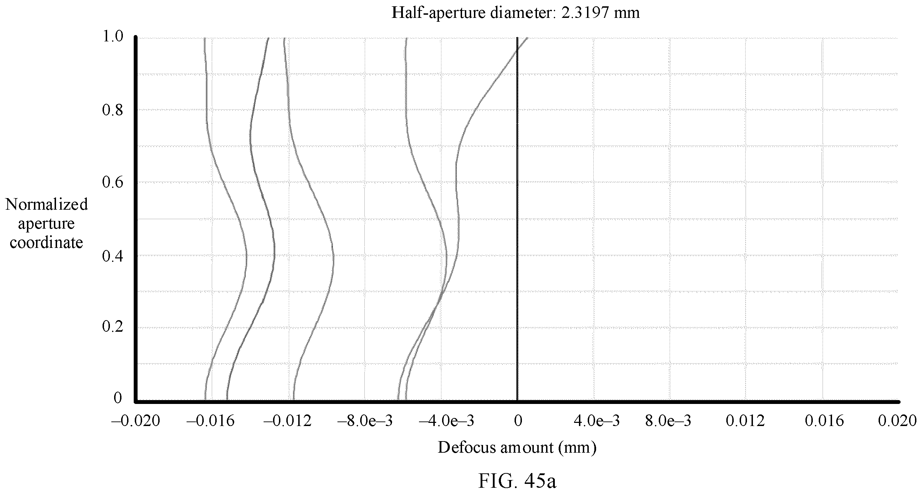

FIG. 45a shows axial aberration curves of the zoom lens shown in FIG. 43 in the wide-angle state W. Five curves respectively indicate simulation results of light with wavelengths of 650 nm, 610 nm, 555 nm, 510 nm, and 470 nm at focus depth positions when a half-aperture diameter is 2.3197 mm. It can be seen from FIG. 45a that, at any specific normalized aperture coordinate, a difference between defocus amounts of curves corresponding to every two different wavelengths is less than 0.020 mm. In other words, axial aberrations of the zoom lens in the wide-angle state W are controlled within a small range.

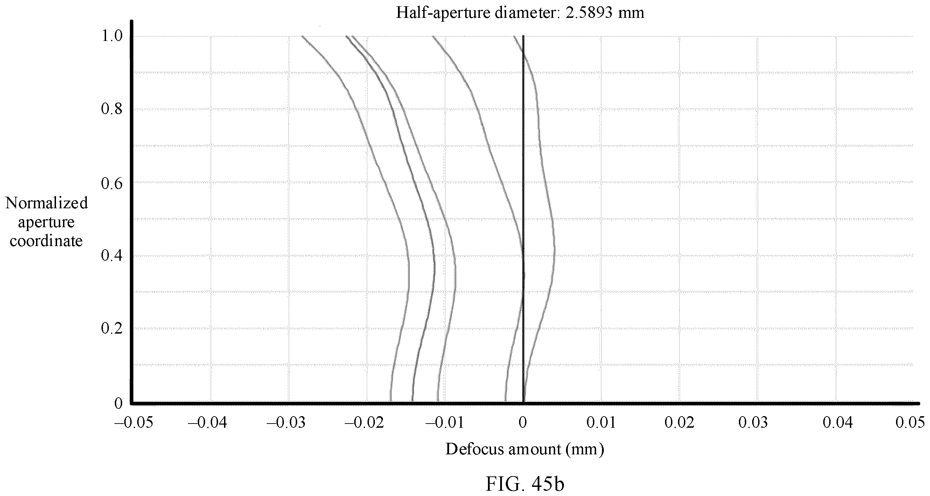

FIG. 45b shows axial aberration curves of the zoom lens shown in FIG. 43 in the first intermediate focal length state M1. Five curves respectively indicate simulation results of light with wavelengths of 650 nm, 610 nm, 555 nm, 510 nm, and 470 nm at focus depth positions when a half-aperture diameter is 2.5893 mm. It can be seen from FIG. 45b that, at any specific normalized aperture coordinate, a difference between defocus amounts of curves corresponding to every two different wavelengths is less than 0.03 mm. In other words, axial aberrations of the zoom lens in the first intermediate focal length state M1 are controlled within a small range.

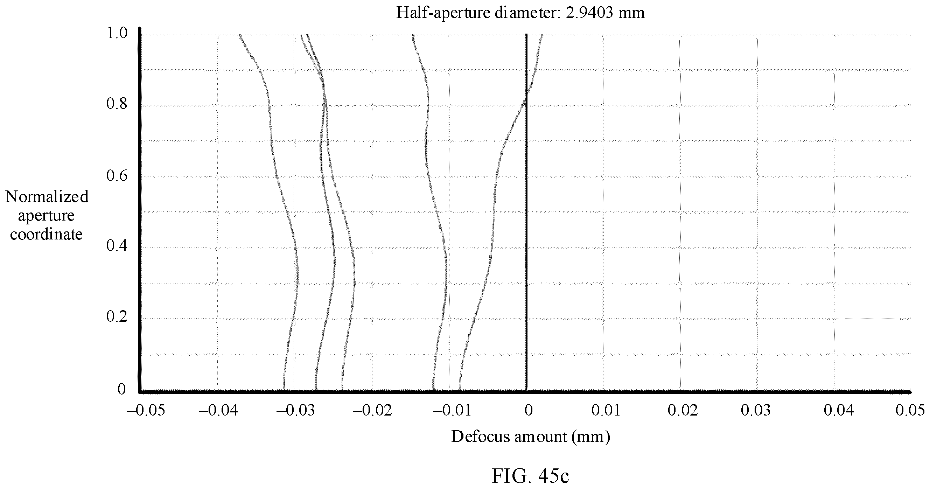

FIG. 45c shows axial aberration curves of the zoom lens shown in FIG. 43 in the second intermediate focal length state M2. Five curves respectively indicate simulation results of light with wavelengths of 650 nm, 610 nm, 555 nm, 510 nm, and 470 nm at focus depth positions when a half-aperture diameter is 2.9403 mm. It can be seen from FIG. 45c that, at any specific normalized aperture coordinate, a difference between defocus amounts of curves corresponding to every two different wavelengths is less than 0.04 mm. In other words, axial aberrations of the zoom lens in the second intermediate focal length state M2 are controlled within a small range.

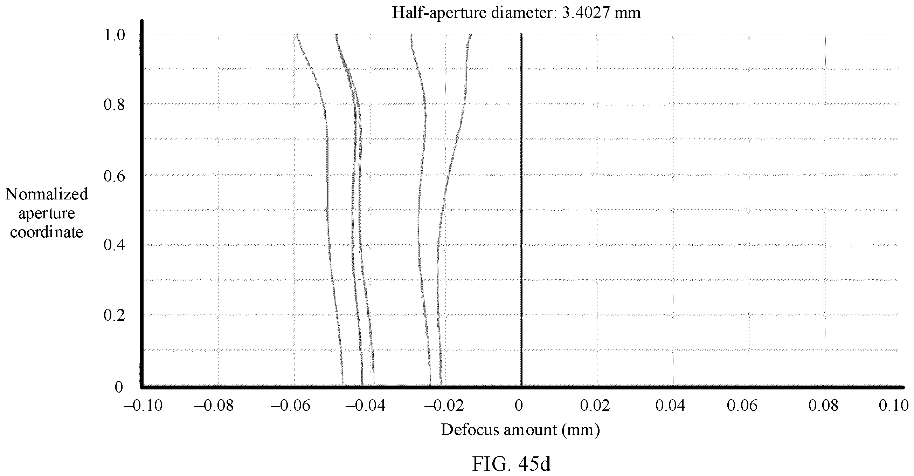

FIG. 45d shows axial aberration curves of the zoom lens shown in FIG. 43 in the telephoto state T. Five curves respectively indicate simulation results of light with wavelengths of 650 nm, 610 nm, 555 nm, 510 nm, and 470 nm at focus depth positions when a half-aperture diameter is 3.4027 mm. It can be seen from FIG. 45d that, at any specific normalized aperture coordinate, a difference between defocus amounts of curves corresponding to every two different wavelengths is less than 0.05 mm. In other words, axial aberrations of the zoom lens in the telephoto state T are controlled within a small range.

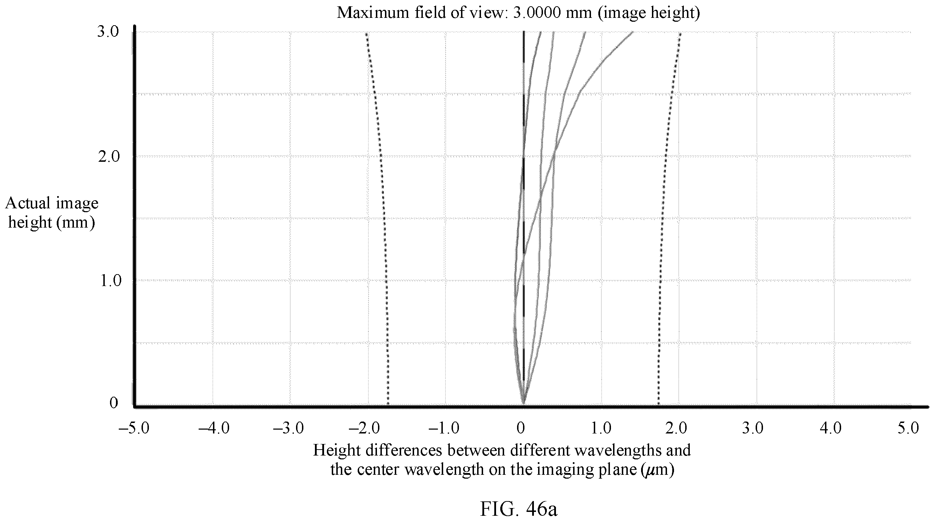

FIG. 46a shows lateral chromatic aberration curves of the zoom lens in the wide-angle state W. Five solid curves in FIG. 46a are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 46a that lateral chromatic aberrations of five light rays are all within the diffraction limit range.

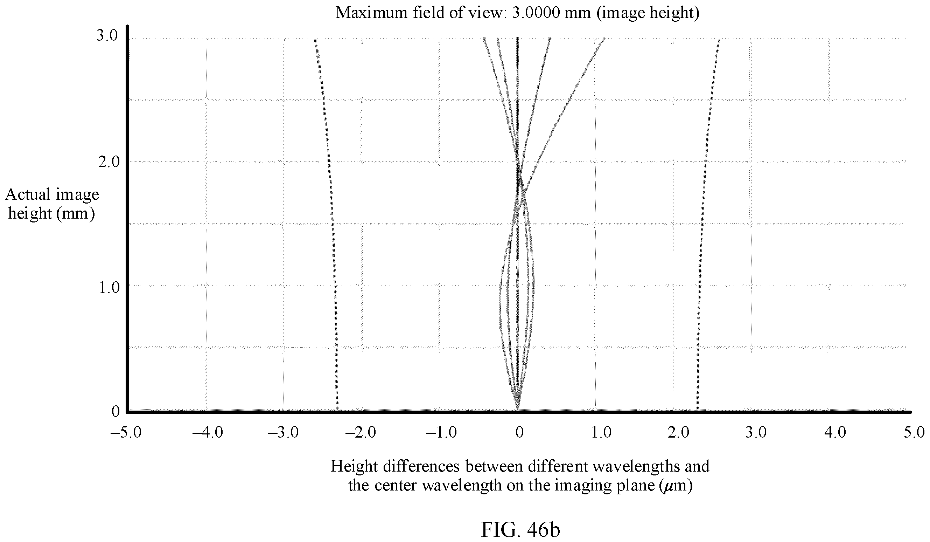

FIG. 46b shows lateral chromatic aberration curves of the zoom lens in the first intermediate focal length state M1. Five solid curves in FIG. 46b are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 46b that lateral chromatic aberrations of five light rays are all within the diffraction limit range.

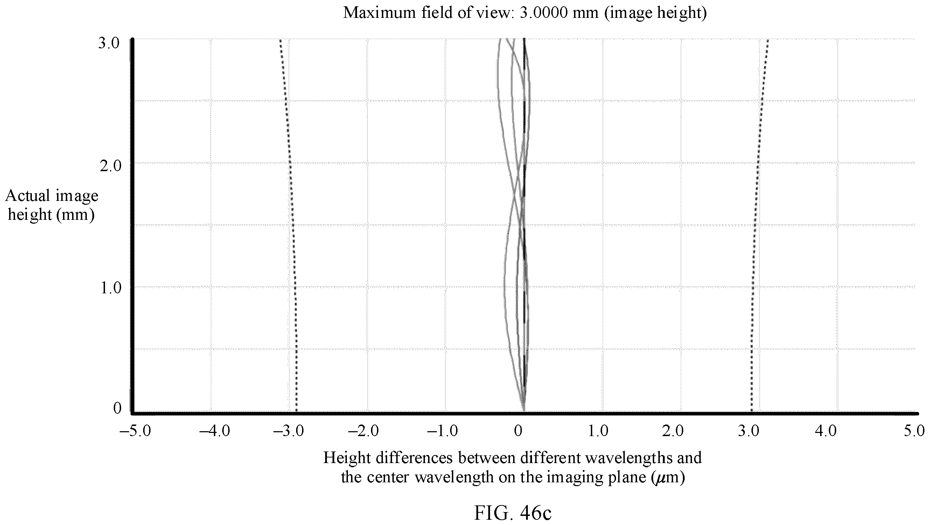

FIG. 46c shows lateral chromatic aberration curves of the zoom lens in the second intermediate focal length state M2. Five solid curves in FIG. 46c are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 46c that lateral chromatic aberrations of five light rays are all within the diffraction limit range.

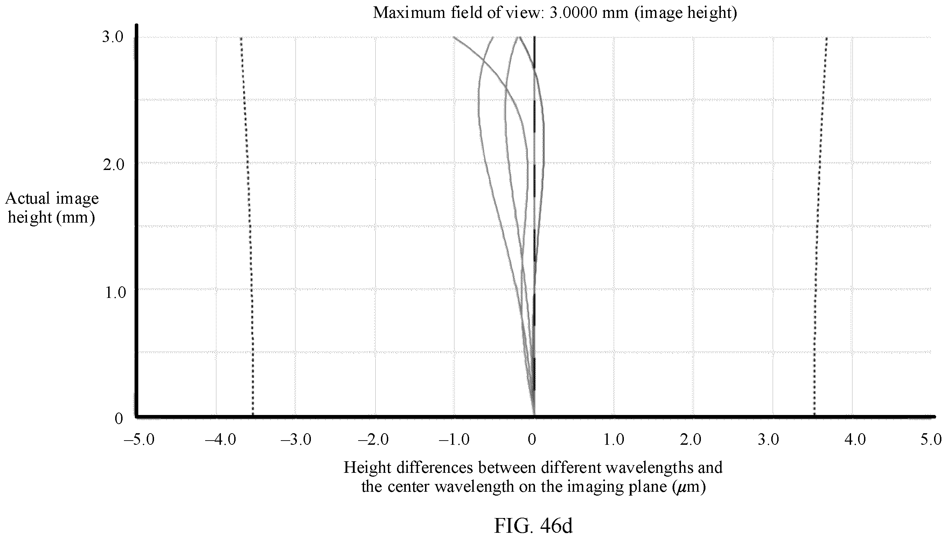

FIG. 46d shows lateral chromatic aberration curves of the zoom lens in the telephoto state T. Five solid curves in FIG. 46d are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 46d that lateral chromatic aberrations of five light rays are all within the diffraction limit range.

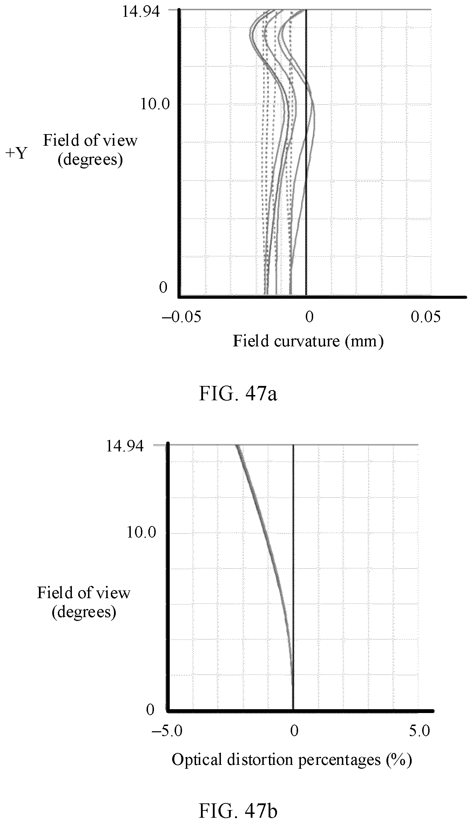

FIG. 47a shows optical distortion curves of the zoom lens in the wide-angle state W, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 47a that the differences between imaging deformations and ideal shapes are very small. FIG. 47b is obtained by calculating percentages of imaging deformations to ideal shapes of the light rays in FIG. 47a. It can be seen from FIG. 47b that optical distortions can be controlled within a range less than or equal to 3%.

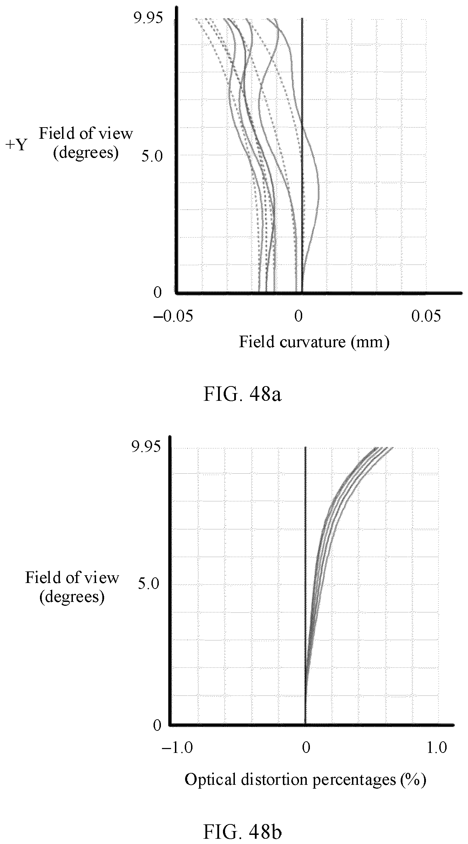

FIG. 48a shows optical distortion curves of the zoom lens in the first intermediate focal length state M1, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 48a that the differences between imaging deformations and ideal shapes are very small. FIG. 48b is obtained by calculating percentages of imaging deformations to ideal shapes of the light rays in FIG. 48a. It can be seen from FIG. 48b that optical distortions can be controlled within a range less than 0.8%.

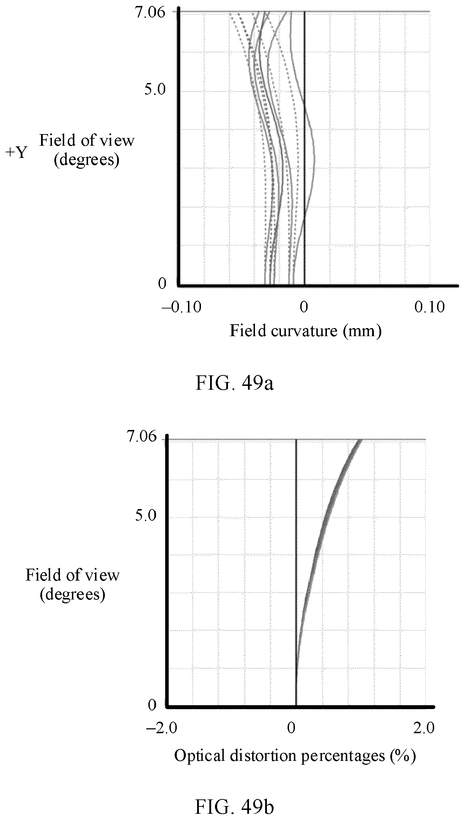

FIG. 49a shows optical distortion curves of the zoom lens in the second intermediate focal length state M2, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 49a that the differences between imaging deformations and ideal shapes are very small. FIG. 49b is obtained by calculating percentages of imaging deformations to ideal shapes of the light rays in FIG. 49a. It can be seen from FIG. 49b that optical distortions can be controlled within a range less than 1.2%.

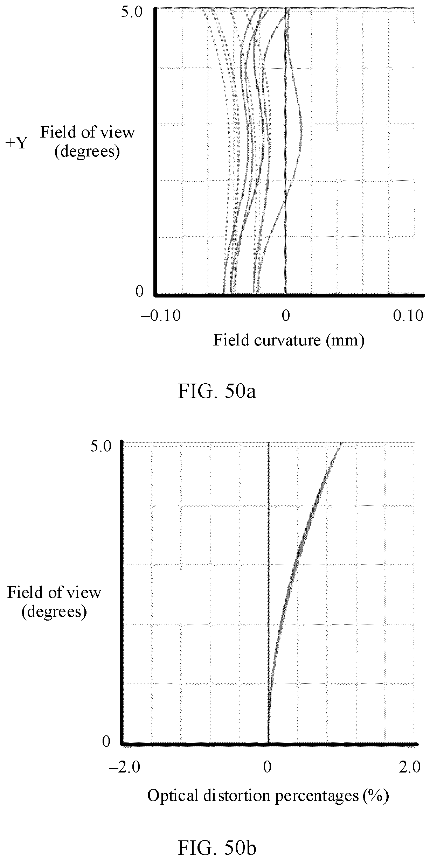

FIG. 50a shows optical distortion curves of the zoom lens in the telephoto state T, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 50a that the differences between imaging deformations and ideal shapes are very small. FIG. 50b is obtained by calculating percentages of imaging deformations to ideal shapes of the light rays in FIG. 50a. It can be seen from FIG. 50b that optical distortions can be controlled within a range less than 1.2%.

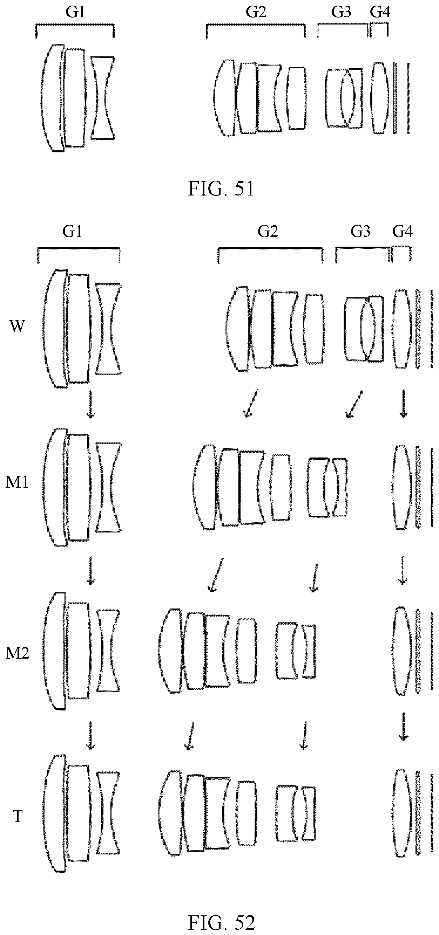

FIG. 51 is an example of a seventh specific zoom lens. The zoom lens sequentially includes the following from an object side to an image side: a first lens group G1 with negative focal power, where a ratio of a focal length f1 of the first lens group G1 to a focal length ft at a telephoto end of the zoom lens is |f1/ft| = 0.634; a second lens group G2 with positive focal power, where a ratio of a focal length f2 of the second lens group G2 to the focal length ft at the telephoto end of the zoom lens is |f2/ft| = 0.228; a third lens group G3 with negative focal power, where a ratio of a focal length f3 of the third lens group G3 to the focal length ft at the telephoto end of the zoom lens is |f3/ft| = 0.171; and a fourth lens group G4 with positive focal power, where a ratio of a focal length f4 of the fourth lens group G4 to the focal length ft at the telephoto end of the zoom lens is |f4/ft| = 0.570.

Still refer to FIG. 51. The zoom lens includes 10 lenses with focal power, and includes 18 aspheric surfaces in total. The first lens group G1 includes three lenses sequentially distributed from the object side to the image side, and the three lenses are with positive, positive, and negative focal power respectively. The second lens group G2 includes four lenses sequentially distributed from the object side to the image side, and the four lenses are with positive, positive, negative, and positive focal power respectively. The third lens group G3 includes two lenses sequentially distributed from the object side to the image side, and the two lenses are with negative and negative focal power respectively. The fourth lens group G4 includes one lens with positive focal power. The second lens group G2 includes at least one lens with negative focal power, to eliminate an aberration. In addition, the zoom lens further has a stop (not shown in FIG. 51). The stop is located on an object side of the second lens group G2, but is not limited thereto. Alternatively, the stop may be disposed on an image side or an object side of the first lens group G1, or may be disposed on an image side or an object side of the third lens group G3. A maximum aperture diameter of a lens in the first lens group G1, the second lens group G2, and the third lens group G3 is 9 mm.

Subsequently, refer to Table 7a and Table 7b. Table 7a shows a surface curvature, a thickness (Thickness), a refractive index (nd), and an abbe coefficient (vd) of each lens of the zoom lens shown in FIG. 51 in a wide-angle state. For meanings of the parameters in Table 7a, refer to introduction in a corresponding part in Table 1a. Table 7b shows aspheric coefficients of aspheric surfaces of the lenses.

**Table 7a**

|  | R |  | Thickness |  | nd |  | vd |  |
|---|---|---|---|---|---|---|---|---|
| R1 | 20.159 | d1 | 1.604 | n1 | 1.54 | v1 | 56.0 |
| R2 | -25.554 | a1 | 0.233 |  |  |  |  |
| R3 | 86.59 | d2 | 1.8 | n2 | 1.67 | v2 | 19.2 |
| R4 | -39.81 | a2 | 0.961 |  |  |  |  |
| R5 | -12.18 | d3 | 0.653 | n3 | 1.54 | v3 | 56.0 |
| R6 | 5.56 | a3 | 1 |  |  |  |  |
| R7 | 6.157 | d4 | 1.8 | n4 | 1.50 | v4 | 81.6 |
| R8 | -29.215 | a4 | 0.08 |  |  |  |  |
| R9 | 8.331 | d5 | 1.728 | n5 | 1.54 | v5 | 56.0 |
| R10 | -41.480 | a5 | 0.08 |  |  |  |  |
| R11 | -67.422 | d6 | 1.332 | n6 | 1.67 | v6 | 19.2 |
| R12 | 6.435 | a6 | 1.022 |  |  |  |  |
| R13 | 10.993 | d7 | 1.558 | n7 | 1.64 | v7 | 23.5 |
| R14 | -35.72 | a7 | 2.243 |  |  |  |  |
| R15 | -1.002 | d8 | 1.264 | n8 | 1.54 | v8 | 56.0 |
| R16 | 9.935 | a8 | 1.1 |  |  |  |  |
| R17 | -10.958 | d9 | 0.61 | n9 | 1.54 | v9 | 56.0 |
| R18 | 9.073 | a9 | 8.19 |  |  |  |  |
| R19 | 15.615 | d10 | 1.428 | n10 | 1.64 | v10 | 23.5 |
| R20 | -9.890 | a10 | 0.425 |  |  |  |  |

**Table 7b**

| Aspheric coefficient | | | | | | | | |
|---|---|---|---|---|---|---|---|---|
|  | Type | K | A2 | A3 | A4 | A5 | A6 | A7 |
| R1 | Even aspheric | 0.00E+00 | 8.11E-04 | 1.59E-05 | -6.13E-07 | 3.31E-08 | -5.84E-10 | 9.92E-12 |
| R2 | Even aspheric | 0.00E+00 | 2.15E-03 | -3.01E-05 | 3.86E-07 | 3.86E-08 | -1.08E-09 | 1.493E-11 |
| R3 | Even aspheric | 0.00E+00 | 5.02E-05 | 3.68E-06 | 3.80E-07 | 2.01E-09 | 3.34E-10 | 0.00E+00 |
| R4 | Even aspheric | 0.00E+00 | -2.84E-04 | 3.59E-05 | -9.78E-07 | 7.13E-09 | 2.68E-09 | 0.00E+00 |
| R5 | Even aspheric | 0.00E+00 | -3.85E-05 | -4.76E-05 | 1.58E-06 | 7.26E-08 | -2.08E-09 | -4.06E-11 |
| R6 | Even aspheric | 0.00E+00 | -2.97E-03 | 2.68E-05 | -2.29E-06 | 3.90E-07 | -2.58E-08 | 5.52E-10 |

(continued)

| Aspheric coefficient | | | | | | | | | |
|---|---|---|---|---|---|---|---|---|---|
| | Type | K | A2 | A3 | A4 | A5 | A6 | A7 |
| R9 | Even aspheric | 0.00E+00 | -1.04E-03 | -3.59E-05 | -2.327E-06 | -1.38E-07 | 7.51E-09 | 0.00E+00 |
| R10 | Even aspheric | 0.00E+00 | -2.01E-04 | -5.07E-06 | -3.95E-07 | -2.33E-07 | -7.94E-11 | 0.00E+00 |
| R11 | Even aspheric | 0.00E+00 | 4.34E-04 | 3.20E-05 | 1.67E-06 | 8.74E-08 | -2.89E-08 | 0.00E+00 |
| R12 | Even aspheric | 0.00E+00 | -4.85E-04 | 1.140E-04 | -2.244E-06 | 3.59E-07 | 9.38E-09 | 0.00E+00 |
| R13 | Even aspheric | 0.00E+00 | -2.19E-03 | 7.53E-05 | 3.96E-06 | -2.15E-06 | 2.26E-07 | 0.00E+00 |
| R14 | Even aspheric | 0.00E+00 | -9.73E-04 | 5.92E-05 | 4.38E-06 | -2.15E-06 | 2.07E-07 | 0.00E+00 |
| R15 | Even aspheric | 0.00E+00 | 6.23E-03 | 3.72E-05 | 3.18E-05 | -7.31E-06 | 3.43E-07 | 0.00E+00 |
| R16 | Even aspheric | 0.00E+00 | 5.77E-03 | 5.79E-04 | 2.21E-04 | -3.22E-05 | 3.66E-06 | 0.00E+00 |
| R17 | Even aspheric | 0.00E+00 | -2.85E-02 | 5.65E-03 | -4.98E-04 | -5.64E-06 | 3.45E-06 | 0.00E+00 |
| R18 | Even aspheric | 0.00E+00 | -2.49E-02 | 6.01E-03 | -9.69E-04 | 8.82E-05 | -3.86E-06 | 0.00E+00 |
| R19 | Even aspheric | 0.00E+00 | -2.67E-04 | -1.42E-04 | 3.31E-05 | -2.95E-06 | 1.17E-07 | 0.00E+00 |
| R20 | Even aspheric | 0.00E+00 | 1.35E-05 | -2.48E-04 | 5.82E-05 | -5.16E-06 | 1.89E-07 | 0.00E+00 |

In the 18 aspheric surfaces of the zoom lens shown in Table 7b, surface types z of all the even aspheric surfaces may be defined according to, but not limited to, the following aspheric surface formula:

$$z = \frac{cr^2}{1 + \sqrt{1 - Kc^2r^2}} + A_2r^4 + A_3r^6 + A_4r^8 + A_5r^{10} + A_6r^{12} + A_7r^{14}$$

,

where
z is a vector height of the aspheric surface, r is a radial coordinate of the aspheric surface, c is a spherical curvature of a vertex on the aspheric surface, K is a conic constant, and A2, A3, A4, A5, A6, and A7 are aspheric coefficients.
Because the zoom lens has the 18 aspheric surfaces, the aspheric surfaces may be flexibly designed, and a good aspheric surface type may be designed based on an actual requirement, to improve imaging quality.
A structure of the zoom lens shown in FIG. 51 is used. A ratio |TTL/ft| of a total length TTL of the zoom lens from a surface closest to the object side to the imaging plane to the effective focal length ft at the telephoto end of the zoom lens is 0.904. In view of this, a small total optical length may be used to achieve a long focal length. A ratio |IMH/ft| of a half-image height IMH to the effective focal length ft at the telephoto end of the zoom lens may reach 0.08955.
As shown in FIG. 51, positions of the first lens group G1 and the fourth lens group G4 are fixed relative to the imaging plane, and the second lens group G2 and the third lens group G3 move along an optical axis between the first lens group G1 and the fourth lens group G4. The second lens group G2 serves as a zoom lens group, and the third lens group G3 serves as a compensation lens group, to implement continuous zoom.
FIG. 52 is a zoom process of the zoom lens shown in FIG. 51. The zoom lens has four focal length states: W indicates the wide-angle state, M1 indicates a first intermediate focal length state, M2 indicates a second intermediate focal length state, and T indicates a telephoto state. The wide-angle state T of the zoom lens corresponds to the following relative positions of the lens groups. The third lens group G3 is close to the fourth lens group G4, and the second lens group G2 is close to an object side of the third lens group G3. When the zoom lens zooms from the wide-angle state W to the first intermediate focal length state M1, the second lens group G2 moves towards the first lens group G1, and the third lens group G3 moves towards the second lens group G2. When the zoom lens zooms from the first intermediate focal length state M1 to the second intermediate focal length state M2, the second lens group G2 continues to move towards the first lens group G1, and the third lens group G3 continues to move towards the second lens group G2. When the zoom lens zooms from the second intermediate focal length state M2 to the telephoto state T, the second lens group G2 continues to move towards the first lens group G1, and the third lens group G3 continues to move towards the second lens group G2.

It can be seen from FIG. 52 that when the zoom lens zooms from the wide-angle state W to the telephoto state T, both the second lens group G2 and the third lens group G3 keep moving towards the object side, but a distance between the third lens group G3 and the second lens group G2 first decreases and then increases, to implement continuous zoom. The second lens group G2 serves as a zoom lens group, and a ratio |L1/TTL| of a movement stroke L1 of the second lens group G2 along the optical axis to a total length TTL of the zoom lens from the surface closest to the object side to the imaging plane is 0.26403. The third lens group G3 serves as a compensation lens group, and a ratio |L2/TTL| of a movement stroke L2 of the third lens group G3 along the optical axis to the total length TTL of the zoom lens from the surface closest to the object side to the imaging plane is 0.24389.

Refer to Table 7c, Table 7d, and Table 7e correspondingly. Table 7c shows basic parameters of the zoom lens, and Table 7d shows spacing distances between the lens groups of the zoom lens in the wide-angle state W, the first intermediate focal length state M1, the second intermediate focal length state M2, and the telephoto state T. Table 7e shows chief ray angle values (CRA values) of the zoom lens in different fields of view in the wide-angle state W, the first intermediate focal length state M1, the second intermediate focal length state M2, and the telephoto state T.

**Table 7c**

|  | W | M1 | M2 | T |
|---|---|---|---|---|
| Focal length F | 11.5 mm | 17 mm | 24 mm | 33.5 mm |
| F-number | 2.38 | 3.17 | 3.97 | 4.83 |
| Half-image height IMH | 3 mm | 3 mm | 3 mm | 3 mm |
| Half FOV | 14.47° | 9.80° | 7.01° | 5.64° |
| BFL | 1.635 mm | 1.635 mm | 1.635 mm | 1.635 mm |
| TTL | 30.3 mm | 30.3 mm | 30.3 mm | 30.3 mm |
| Designed wavelength | 650 nm, 610 nm, 555 nm, 510 nm, and 470 nm | | | |

**Table 7d**

|  | W | M1 | M2 | T |
|---|---|---|---|---|
| a3 | 9.000 mm | 6.416 mm | 3.730 mm | 1.000 mm |
| a7 | 1.634 mm | 1.350 mm | 1.568 mm | 2.243 mm |
| a9 | 0.800 mm | 3.667 mm | 6.136 mm | 8.190 mm |

**Table 7e**

|  | W | M1 | M2 | T |
|---|---|---|---|---|
| 0 | 0 | 0 | 0 | 0 |
| 0.2 | 2.33 | 0.533 | -0.41 | -0.98 |
| 0.4 | 4.56 | 0.99 | -0.90 | -2.04 |
| 0.6 | 6.62 | 1.31 | -1.49 | -3.19 |

(continued)

|  | W | M1 | M2 | T |
|---|---|---|---|---|
| 0.8 | 7.80 | 1.70 | -1.96 | -4.19 |
| 1 | 8.63 | 2.34 | -2.07 | -4.81 |

Simulation is performed on the zoom lens shown in FIG. 51. The following describes imaging effect of the zoom lens with reference to the accompanying drawings.

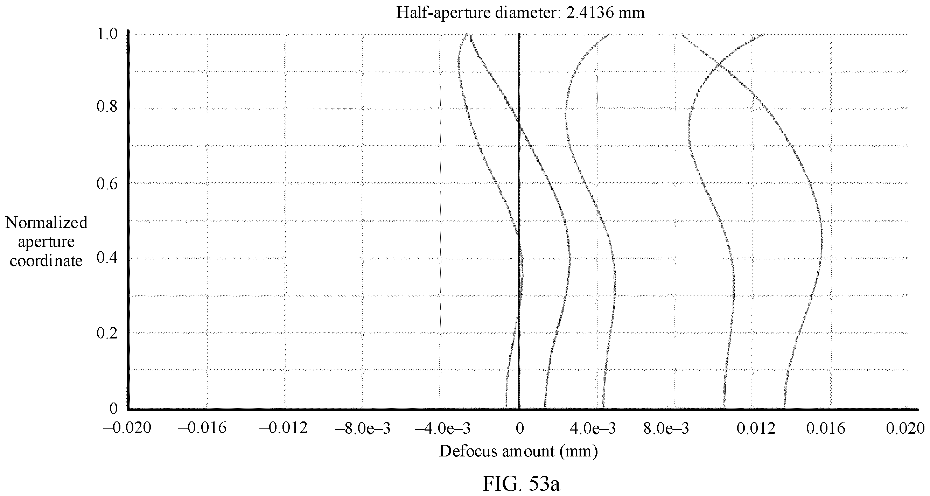

FIG. 53a shows axial aberration curves of the zoom lens shown in FIG. 51 in the wide-angle state W. Five curves respectively indicate simulation results of light with wavelengths of 650 nm, 610 nm, 555 nm, 510 nm, and 470 nm at focus depth positions when a half-aperture diameter is 2.4136 mm. It can be seen from FIG. 53a that, at any specific normalized aperture coordinate, a difference between defocus amounts of curves corresponding to every two different wavelengths is less than 0.020 mm. In other words, axial aberrations of the zoom lens in the wide-angle state W are controlled within a small range.

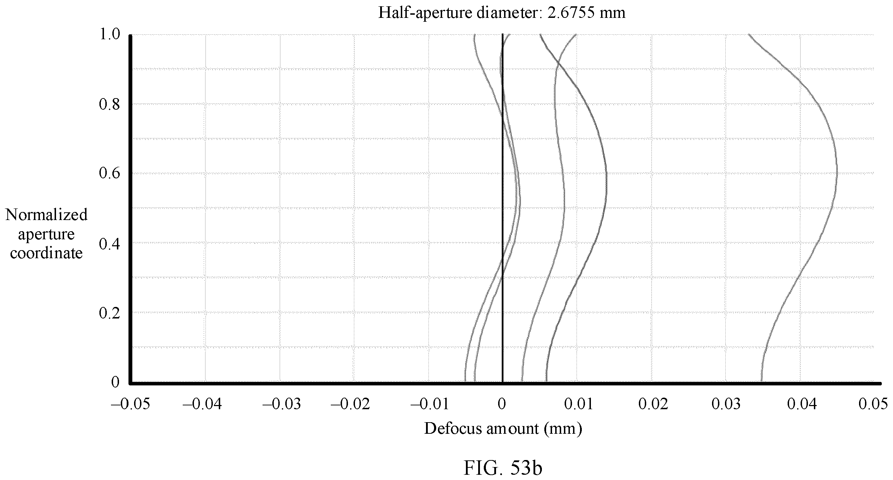

FIG. 53b shows axial aberration curves of the zoom lens shown in FIG. 51 in the first intermediate focal length state M1. Five curves respectively indicate simulation results of light with wavelengths of 650 nm, 610 nm, 555 nm, 510 nm, and 470 nm at focus depth positions when a half-aperture diameter is 2.6755 mm. It can be seen from FIG. 53b that, at any specific normalized aperture coordinate, a difference between defocus amounts of curves corresponding to every two different wavelengths is less than 0.05 mm. In other words, axial aberrations of the zoom lens in the first intermediate focal length state M1 are controlled within a small range.

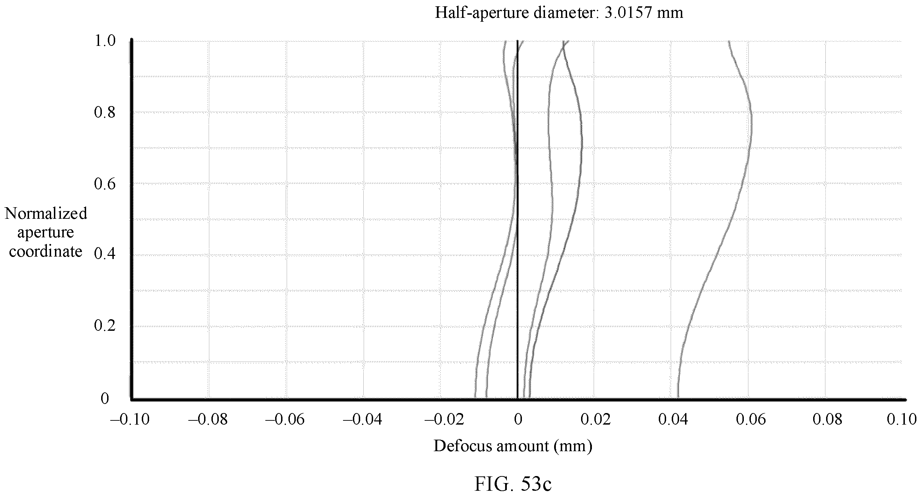

FIG. 53c shows axial aberration curves of the zoom lens shown in FIG. 51 in the second intermediate focal length state M2. Five curves respectively indicate simulation results of light with wavelengths of 650 nm, 610 nm, 555 nm, 510 nm, and 470 nm at focus depth positions when a half-aperture diameter is 3.0157 mm. It can be seen from FIG. 53c that, at any specific normalized aperture coordinate, a difference between defocus amounts of curves corresponding to every two different wavelengths is less than 0.07 mm. In other words, axial aberrations of the zoom lens in the second intermediate focal length state M2 are controlled within a small range.

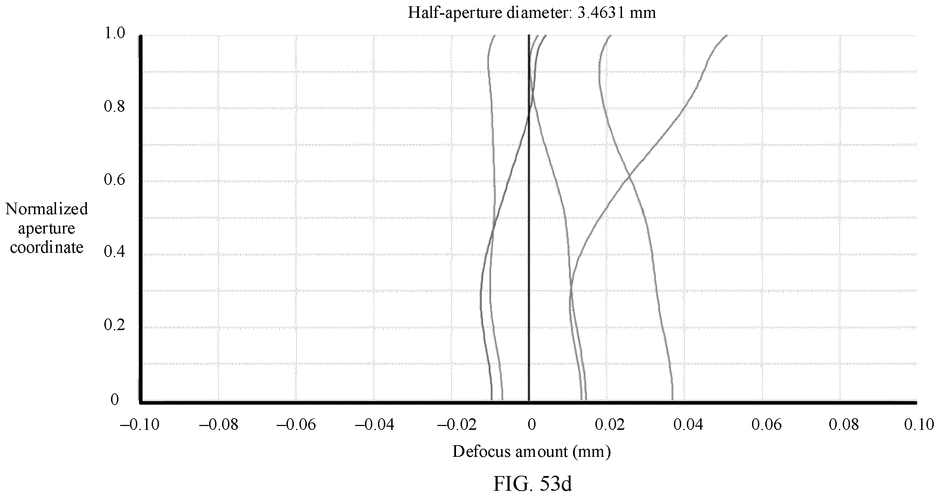

FIG. 53d shows axial aberration curves of the zoom lens shown in FIG. 51 in the telephoto state T. Five curves respectively indicate simulation results of light with wavelengths of 650 nm, 610 nm, 555 nm, 510 nm, and 470 nm at focus depth positions when a half-aperture diameter is 3.4631 mm. It can be seen from FIG. 53d that, at any specific normalized aperture coordinate, a difference between defocus amounts of curves corresponding to every two different wavelengths is less than 0.07 mm. In other words, axial aberrations of the zoom lens in the telephoto state T are controlled within a small range.

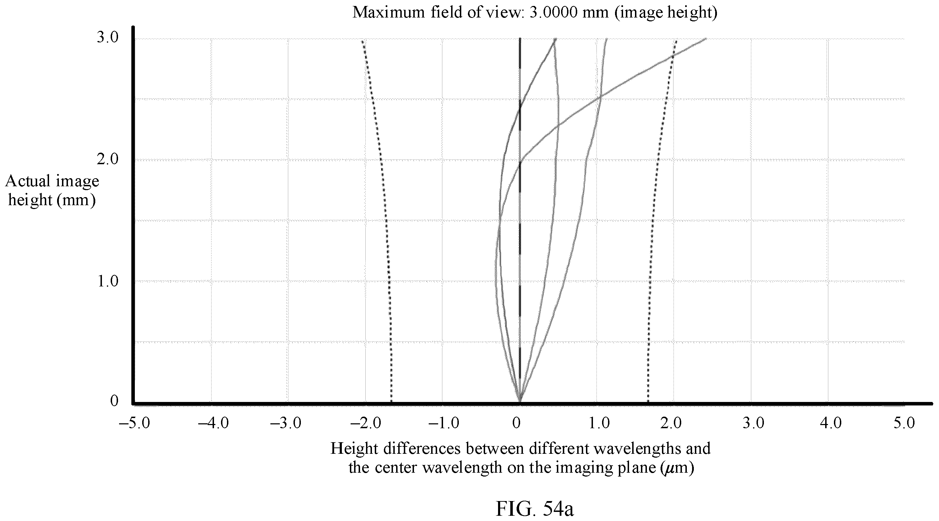

FIG. 54a shows lateral chromatic aberration curves of the zoom lens in the wide-angle state W. Five solid curves in FIG. 54a are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 54a that lateral chromatic aberrations of five light rays are all within the diffraction limit range.

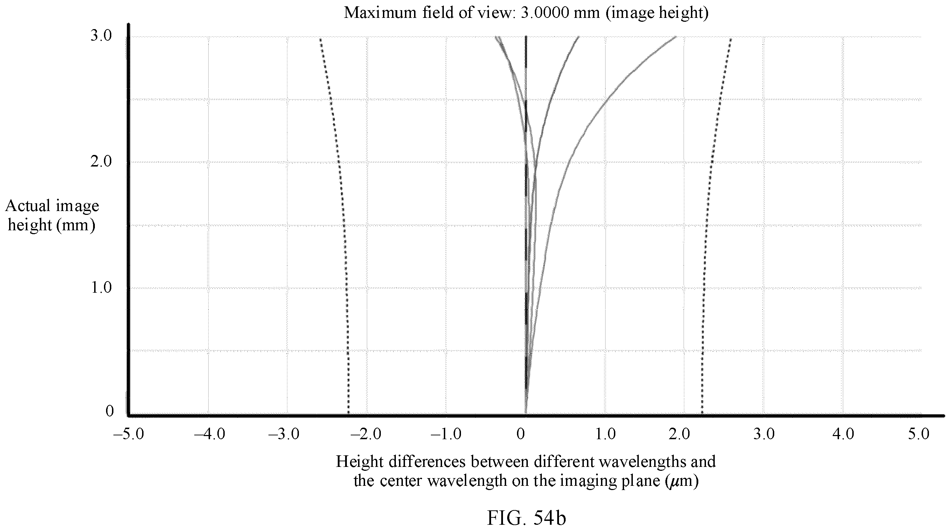

FIG. 54b shows lateral chromatic aberration curves of the zoom lens in the first intermediate focal length state M1. Five solid curves in FIG. 54b are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 54b that lateral chromatic aberrations of five light rays are all within the diffraction limit range.

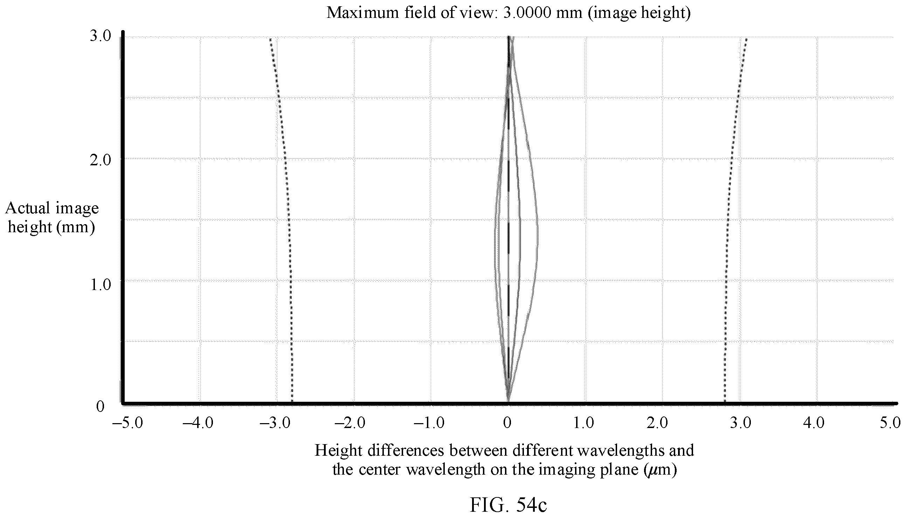

FIG. 54c shows lateral chromatic aberration curves of the zoom lens in the second intermediate focal length state M2. Five solid curves in FIG. 54c are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 54c that lateral chromatic aberrations of five light rays are all within the diffraction limit range.

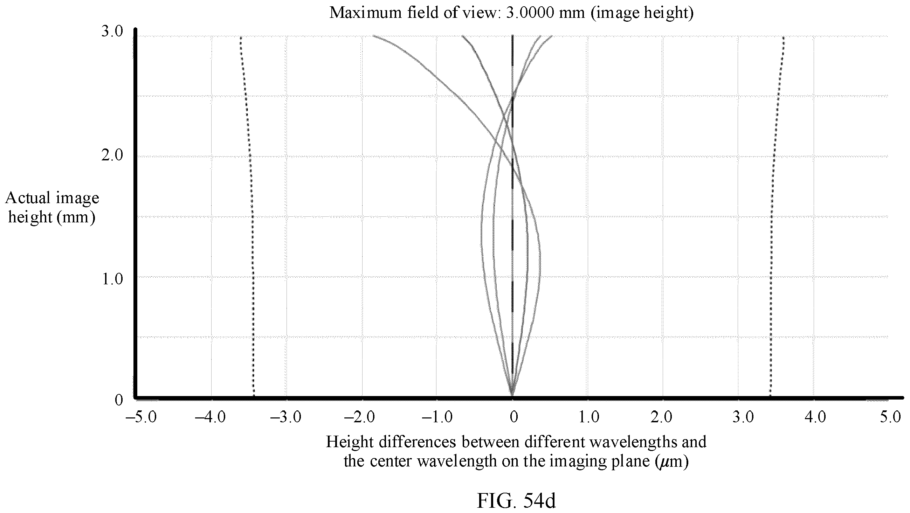

FIG. 54d shows lateral chromatic aberration curves of the zoom lens in the telephoto state T. Five solid curves in FIG. 54d are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 54d that lateral chromatic aberrations of five light rays are all within the diffraction limit range.

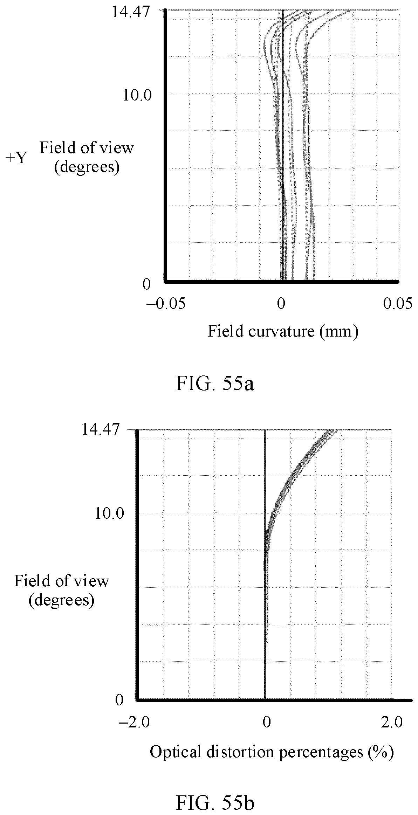

FIG. 55a shows optical distortion curves of the zoom lens in the wide-angle state W, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 55a that the differences between imaging deformations and ideal shapes are very small. FIG. 55b is obtained by calculating percentages of imaging deformations to ideal shapes of the light rays in FIG. 55a. It can be seen from FIG. 55b that optical distortions can be controlled within a range less than or equal to 1.2%.

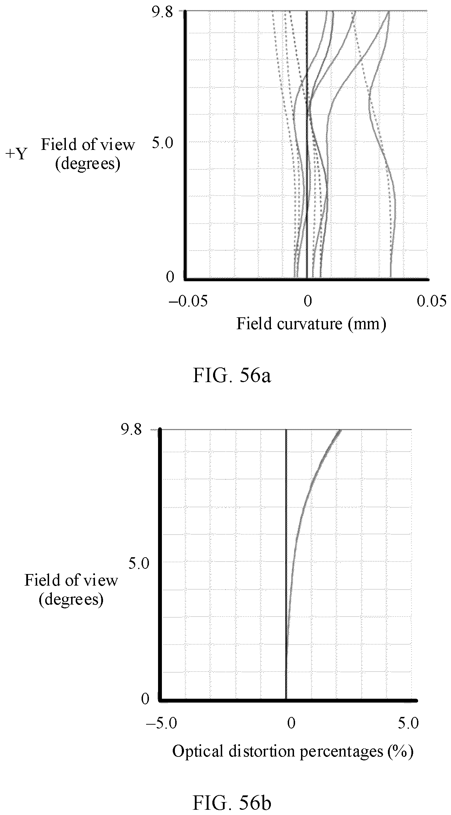

FIG. 56a shows optical distortion curves of the zoom lens in the first intermediate focal length state M1, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 56a that the differences between imaging deformations and ideal shapes are very small. FIG. 56b is obtained by calculating percentages of imaging deformations to ideal shapes of the light rays in FIG. 56a. It can be seen from FIG. 56b that optical distortions can be controlled within a range less than 2.5%.

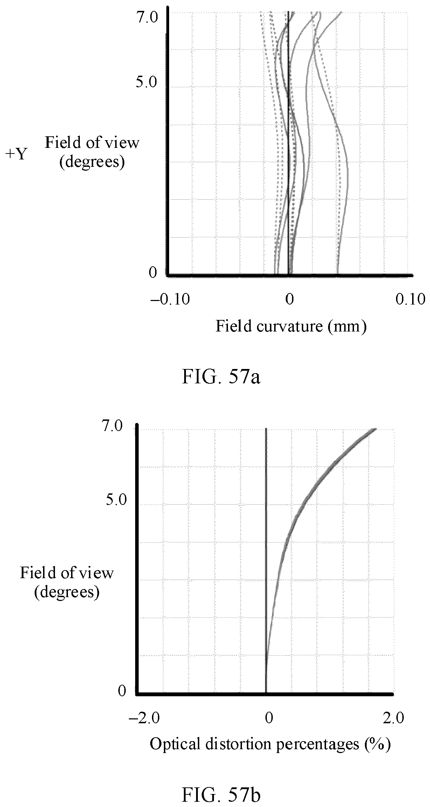

FIG. 57a shows optical distortion curves of the zoom lens in the second intermediate focal length state M2, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 57a that the differences between imaging deformations and ideal shapes are very small. FIG. 57b is obtained by calculating percentages of imaging deformations to ideal shapes of the light rays in FIG. 57a. It can be seen from FIG. 57b that optical distortions can be controlled within a range less than 2.0%.

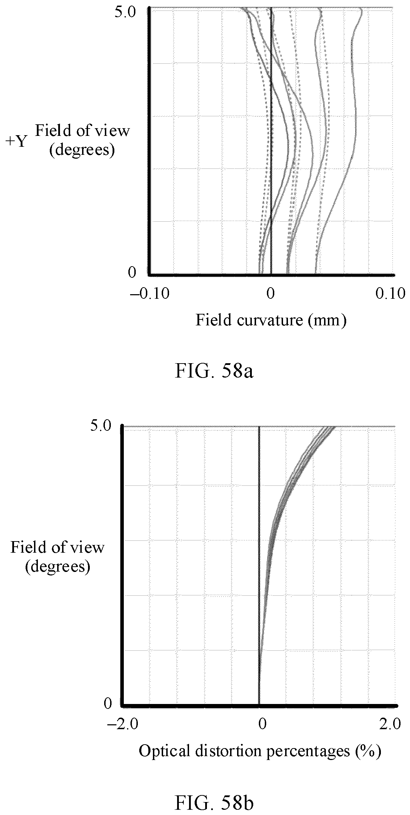

FIG. 58a shows optical distortion curves of the zoom lens in the telephoto state T, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 58a that the differences between imaging deformations and ideal shapes are very small. FIG. 58b is obtained by calculating percentages of imaging deformations to ideal shapes of the light rays in FIG. 58a. It can be seen from FIG. 58b that optical distortions can be controlled within a range less than 1.2%.

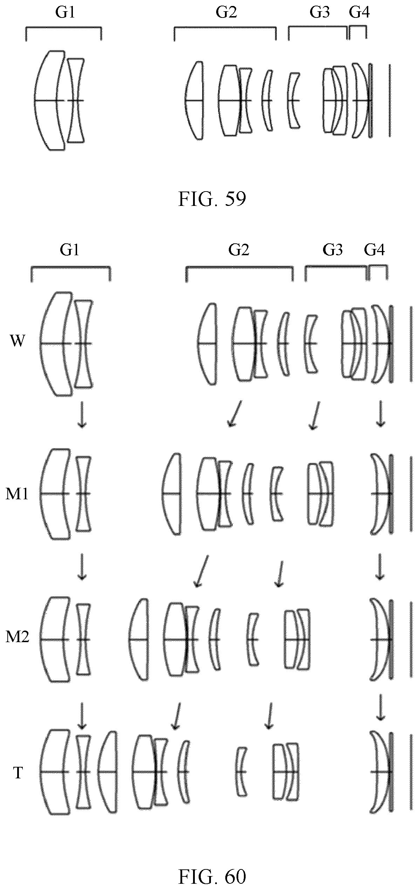

FIG. 59 is an example of an eighth specific zoom lens. The zoom lens sequentially includes the following from an object side to an image side: a first lens group G1 with negative focal power, where a ratio of a focal length f1 of the first lens group G1 to a focal length ft at a telephoto end of the zoom lens is |f1/ft| = 0.447; a second lens group G2 with positive focal power, where a ratio of a focal length f2 of the second lens group G2 to the focal length ft at the telephoto end of the zoom lens is |f2/ft| = 0.217; a third lens group G3 with negative focal power, where a ratio of a focal length f3 of the third lens group G3 to the focal length ft at the telephoto end of the zoom lens is |f3/ft| = 0.202; and a fourth lens group G4 with positive focal power, where a ratio of a focal length f4 of the fourth lens group G4 to the focal length ft at the telephoto end of the zoom lens is |f4/ft| = 0.881.

Still refer to FIG. 59. The zoom lens includes 10 lenses with focal power, and includes 16 aspheric surfaces in total. The first lens group G1 includes two lenses sequentially distributed from the object side to the image side, the two lenses are with positive and negative focal power respectively, and a first lens is a positive meniscus lens with a convex surface that bulges towards the object side. The second lens group G2 includes four lenses sequentially distributed from the object side to the image side, and the four lenses are with positive, positive, negative, and positive focal power respectively. The third lens group G3 includes three lenses sequentially distributed from the object side to the image side, and the three lenses are with negative, positive, and negative focal power respectively. The fourth lens group G4 includes one lens with positive focal power. The second lens group G2 includes at least one lens with negative focal power, to eliminate an aberration. In addition, the zoom lens further has a stop (not shown in FIG. 59). The stop is located on an object side of the second lens group G2, but is not limited thereto. Alternatively, the stop may be disposed on an image side or an object side of the first lens group G1, or may be disposed on an image side or an object side of the third lens group G3. A maximum aperture diameter of a lens in the first lens group G1, the second lens group G2, and the third lens group G3 is 8.168 mm.

Subsequently, refer to Table 8a and Table 8b. Table 8a shows a surface curvature, a thickness (Thickness), a refractive index (nd), and an abbe coefficient (vd) of each lens of the zoom lens shown in FIG. 59 in a wide-angle state. For meanings of the parameters in Table 8a, refer to introduction in a corresponding part in Table 1a. Table 8b shows aspheric coefficients of aspheric surfaces of the lenses.

**Table 8a**

|  | R |  | Thickness | nd |  | vd |  |
|---|---|---|---|---|---|---|---|
| R1 | 7.296 | d1 | 1.8 | n1 | 1.64 | v1 | 23.5 |
| R2 | 8.979 | a1 | 1.383 |  |  |  |  |
| R3 | -12.607 | d2 | 0.4 | n2 | 1.60 | v2 | 60.6 |
| R4 | 10.913 | a2 | 8.941 |  |  |  |  |

(continued)

|  | R |  | Thickness |  | nd |  | vd |  |
|---|---|---|---|---|---|---|---|---|
| R5 | 5.738 | d3 | 1.44 | n3 | 1.54 | v3 | 56.0 |
| R6 | -103.70 | a3 | 1.31 |  |  |  |  |
| R7 | 8.216 | d4 | 1.8 | n4 | 1.54 | v4 | 56.0 |
| R8 | -10.133 | a4 | 0.08 |  |  |  |  |
| R9 | -21.748 | d5 | 0.4 | n5 | 1.67 | v5 | 19.2 |
| R10 | 8.099 | a5 | 1.352 |  |  |  |  |
| R11 | 6.916 | d6 | 0.553 | n6 | 1.67 | v6 | 19.2 |
| R12 | 11.138 | a6 | 1.554 |  |  |  |  |
| R13 | 10.452 | d7 | 0.4 | n7 | 1.85 | v7 | 23.8 |
| R14 | 4.153 | a7 | 2.589 |  |  |  |  |
| R15 | -57.542 | d8 | 1.02 | n8 | 1.67 | v8 | 19.2 |
| R16 | -6.093 | a8 | 0.532 |  |  |  |  |
| R17 | -4.551 | d9 | 0.4 | n9 | 1.54 | v9 | 56.0 |
| R18 | 496.018 | a9 | 0.802 |  |  |  |  |
| R19 | -320.81 | d10 | 0.958 | n10 | 1.67 | v10 | 19.2 |
| R20 | -8.350 | a10 | 0.08 |  |  |  |  |

Table 8b

| Aspheric coefficient | | | | | | | | |
|---|---|---|---|---|---|---|---|---|
|  | Type | K | A2 | A3 | A4 | A5 | A6 | A7 |
| R1 | Even aspheric | 0.00E+00 | -2.36E-04 | -1.08E-06 | 1.36E-07 | -4.01E-09 | 4.81E-10 | 0.00E+00 |
| R2 | Even aspheric | 0.00E+00 | -5.57E-04 | 1.30E-07 | -3.74E-07 | 4.69E-08 | -7.51E-10 | 0.00E+00 |
| R5 | Even aspheric | 0.00E+00 | -1.99E-04 | -1.22E-05 | -1.19E-06 | 3.95E-08 | -1.40E-09 | 0.00E+00 |
| R6 | Even aspheric | 0.00E+00 | 1.26E-04 | -1.12E-05 | 2.44E-08 | 4.67E-08 | -1.05E-09 | 0.00E+00 |
| R7 | Even aspheric | 0.00E+00 | -3.05E-04 | 1.61E-06 | 1.16E-06 | 5.73E-08 | 9.29E-09 | 0.00E+00 |
| R8 | Even aspheric | 0.00E+00 | 6.30E-04 | -2.89E-06 | -4.10E-07 | 1.37E-07 | -4.05E-09 | 0.00E+00 |
| R9 | Even aspheric | 0.00E+00 | 1.50E-05 | 7.36E-06 | 1.98E-06 | -1.78E-07 | -8.05E-09 | 0.00E+00 |
| R10 | Even aspheric | 0.00E+00 | 1.47E-03 | 1.16E-04 | 8.37E-06 | -5.31E-07 | 8.38E-08 | 0.00E+00 |
| R11 | Even aspheric | 0.00E+00 | 8.69E-04 | 1.68E-04 | -1.14E-05 | 1.34E-08 | -1.85E-07 | 0.00E+00 |
| R12 | Even aspheric | 0.00E+00 | 6.73E-04 | 1.15E-04 | -2.88E-06 | -2.66E-06 | -1.08E-08 | 0.00E+00 |
| R15 | Even aspheric | 0.00E+00 | 1.64E-03 | 3.45E-04 | -1.02E-04 | 2.03E-05 | -8.31E-07 | 0.00E+00 |
| R16 | Even aspheric | 0.00E+00 | 3.62E-03 | 1.31E-04 | -5.53E-05 | 5.01E-06 | 6.66E-07 | 0.00E+00 |
| R17 | Even aspheric | 0.00E+00 | 1.46E-03 | 2.31E-04 | -4.70E-05 | -6.06E-06 | 5.10E-07 | 5.23E-08 |
| R18 | Even aspheric | 0.00E+00 | -3.53E-03 | 4.22E-04 | -4.47E-05 | -2.01E-06 | 3.20E-07 | 1.63E-09 |
| R19 | Even aspheric | 0.00E+00 | -1.63E-03 | -4.29E-04 | 2.03E-06 | 4.69E-06 | -4.50E-07 | 0.00E+00 |
| R20 | Even aspheric | 0.00E+00 | -1.34E-03 | -4.68E-04 | 2.77E-05 | 1.61E-06 | -2.62E-07 | 0.00E+00 |

In the 16 aspheric surfaces of the zoom lens shown in Table 8b, surface types z of all the even aspheric surfaces may be defined according to, but not limited to, the following aspheric surface formula:

$$z = \frac{cr^2}{1 + \sqrt{1 - Kc^2r^2}} + A_2r^4 + A_3r^6 + A_4r^8 + A_5r^{10} + A_6r^{12} + A_7r^{14}$$

,

where

z is a vector height of the aspheric surface, r is a radial coordinate of the aspheric surface, c is a spherical curvature of a vertex on the aspheric surface, K is a conic constant, and A2, A3, A4, A5, A6, and A7 are aspheric coefficients.

Because the zoom lens has the 16 aspheric surfaces, the aspheric surfaces may be flexibly designed, and a good aspheric surface type may be designed based on an actual requirement, to improve imaging quality.

A structure of the zoom lens shown in FIG. 59 is used. A ratio |TTL/ft| of a total length TTL of the zoom lens from a surface closest to the object side to the imaging plane to the effective focal length ft at the telephoto end of the zoom lens is 0.881. In view of this, a small total optical length may be used to achieve a long focal length. A ratio |IMH/ft| of a half-image height IMH to the effective focal length ft at the telephoto end of the zoom lens may reach 0.08955.

As shown in FIG. 59, positions of the first lens group G1 and the fourth lens group G4 are fixed relative to the imaging plane, and the second lens group G2 and the third lens group G3 move along an optical axis between the first lens group G1 and the fourth lens group G4. The second lens group G2 serves as a zoom lens group, and the third lens group G3 serves as a compensation lens group, to implement continuous zoom.

FIG. 60 is a zoom process of the zoom lens shown in FIG. 59. The zoom lens has four focal length states: W indicates the wide-angle state, M1 indicates a first intermediate focal length state, M2 indicates a second intermediate focal length state, and T indicates a telephoto state. The wide-angle state T of the zoom lens corresponds to the following relative positions of the lens groups. The third lens group G3 is close to the fourth lens group G4, and the second lens group G2 is close to an object side of the third lens group G3. When the zoom lens zooms from the wide-angle state W to the first intermediate focal length state M1, the second lens group G2 moves towards the first lens group G1, and the third lens group G3 moves towards the second lens group G2. When the zoom lens zooms from the first intermediate focal length state M1 to the second intermediate focal length state M2, the second lens group G2 continues to move towards the first lens group G1, and the third lens group G3 continues to move towards the second lens group G2. When the zoom lens zooms from the second intermediate focal length state M2 to the telephoto state T, the second lens group G2 continues to move towards the first lens group G1, and the third lens group G3 continues to move towards the second lens group G2.

It can be seen from FIG. 60 that when the zoom lens zooms from the wide-angle state W to the telephoto state T, both the second lens group G2 and the third lens group G3 keep moving towards the object side, but a distance between the third lens group G3 and the second lens group G2 first decreases and then increases, to implement continuous zoom. The second lens group G2 serves as a zoom lens group, and a ratio |L1/TTL| of a movement stroke L1 of the second lens group G2 along the optical axis to a total length TTL of the zoom lens from the surface closest to the object side to the imaging plane is 0.26919. The third lens group G3 serves as a compensation lens group, and a ratio |L2/TTL| of a movement stroke L2 of the third lens group G3 along the optical axis to the total length TTL of the zoom lens from the surface closest to the object side to the imaging plane is 0.18505.

Refer to Table 8c, Table 8d, and Table 8e correspondingly. Table 8c shows basic parameters of the zoom lens, and Table 8d shows spacing distances between the lens groups of the zoom lens in the wide-angle state W, the first intermediate focal length state M1, the second intermediate focal length state M2, and the telephoto state T. Table 8e shows chief ray angle values (CRA values) of the zoom lens in different fields of view in the wide-angle state W, the first intermediate focal length state M1, the second intermediate focal length state M2, and the telephoto state T.

**Table 8c**

|  | W | M1 | M2 | T |
|---|---|---|---|---|
| Focal length F | 11.5 mm | 17 mm | 24 mm | 33.5 mm |
| F-number | 2.82 | 3.63 | 4.43 | 5.26 |
| Half-image height IMH | 3 mm | 3 mm | 3 mm | 3 mm |
| Half FOV | 15.1° | 10.1° | 7.11° | 5.08° |
| BFL | 1.79 mm | 1.79 mm | 1.79 mm | 1.79 mm |

(continued)

|  | W | M1 | M2 | T |
|---|---|---|---|---|
| TTL | 29.5 mm | 29.5 mm | 29.5 mm | 29.5 mm |
| Designed wavelength | 650 nm, 610 nm, 555 nm, 510 nm, and 470 nm | | | |

**Table 8d**

|  | W | M1 | M2 | T |
|---|---|---|---|---|
| a2 | 8.94 mm | 6.11 mm | 3.48 mm | 1.00 mm |
| a6 | 1.55 mm | 1.69 mm | 2.46 mm | 4.04 mm |
| a9 | 0.802 mm | 3.49 mm | 5.36 mm | 6.26 mm |

**Table 8e**

|  | W | M1 | M2 | T |
|---|---|---|---|---|
| 0 | 0.00 | 0.00 | 0.00 | 0.00 |
| 0.2 | 1.51 | 0.51 | 0.01 | -0.23 |
| 0.4 | 2.88 | 0.93 | -0.07 | -0.53 |
| 0.6 | 3.98 | 1.19 | -0.26 | -0.94 |
| 0.8 | 5.11 | 1.76 | -0.03 | -0.89 |
| 1 | 6.83 | 3.37 | 1.38 | 0.41 |

Simulation is performed on the zoom lens shown in FIG. 59. The following describes imaging effect of the zoom lens with reference to the accompanying drawings.

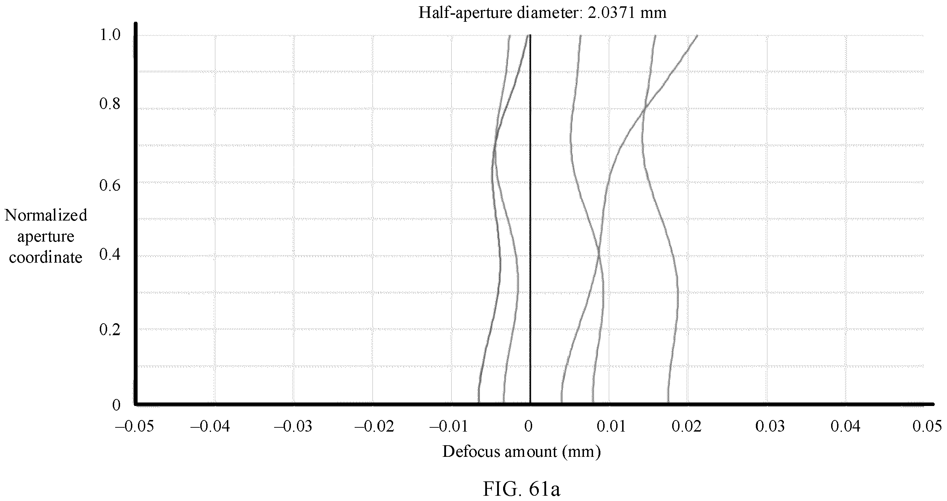

FIG. 61a shows axial aberration curves of the zoom lens shown in FIG. 59 in the wide-angle state W. Five curves respectively indicate simulation results of light with wavelengths of 650 nm, 610 nm, 555 nm, 510 nm, and 470 nm at focus depth positions when a half-aperture diameter is 2.0371 mm. It can be seen from FIG. 61a that, at any specific normalized aperture coordinate, a difference between defocus amounts of curves corresponding to every two different wavelengths is less than 0.03 mm. In other words, axial aberrations of the zoom lens in the wide-angle state W are controlled within a small range.

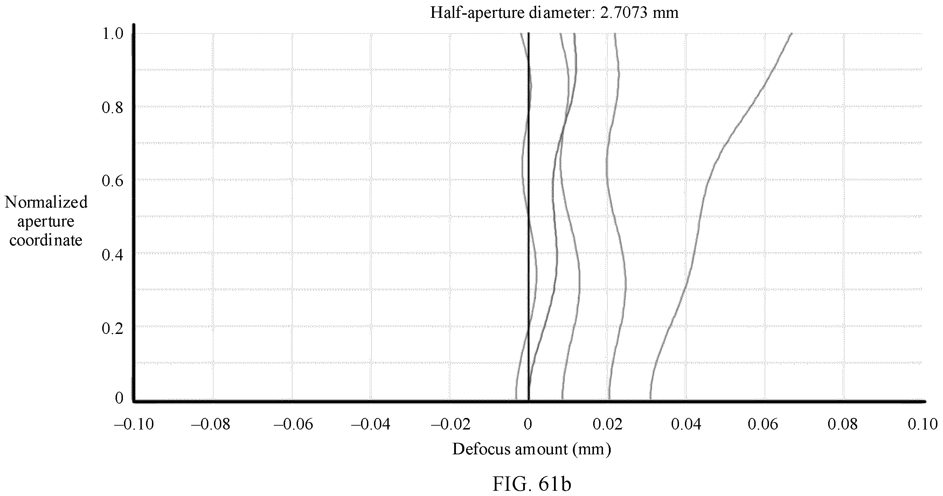

FIG. 61b shows axial aberration curves of the zoom lens shown in FIG. 59 in the first intermediate focal length state M1. Five curves respectively indicate simulation results of light with wavelengths of 650 nm, 610 nm, 555 nm, and 470 nm at focus depth positions when a half-aperture diameter is 2.7073 mm. It can be seen from FIG. 61b that, at any specific normalized aperture coordinate, a difference between defocus amounts of curves corresponding to every two different wavelengths is less than 0.07 mm. In other words, axial aberrations of the zoom lens in the first intermediate focal length state M1 are controlled within a small range.

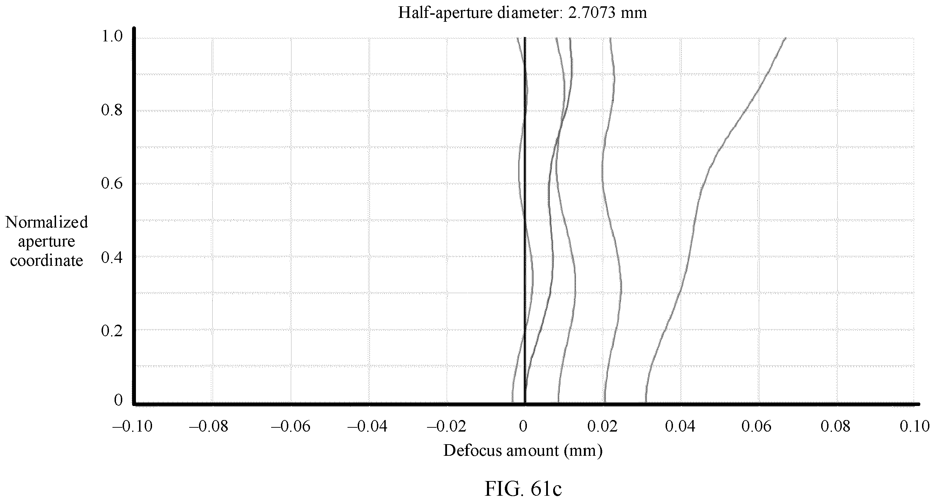

FIG. 61c shows axial aberration curves of the zoom lens shown in FIG. 59 in the second intermediate focal length state M2. Five curves respectively indicate simulation results of light with wavelengths of 650 nm, 610 nm, 555 nm, 510 nm, and 470 nm at focus depth positions when a half-aperture diameter is 2.7073 mm. It can be seen from FIG. 61c that, at any specific normalized aperture coordinate, a difference between defocus amounts of curves corresponding to every two different wavelengths is less than 0.07 mm. In other words, axial aberrations of the zoom lens in the second intermediate focal length state M2 are controlled within a small range.

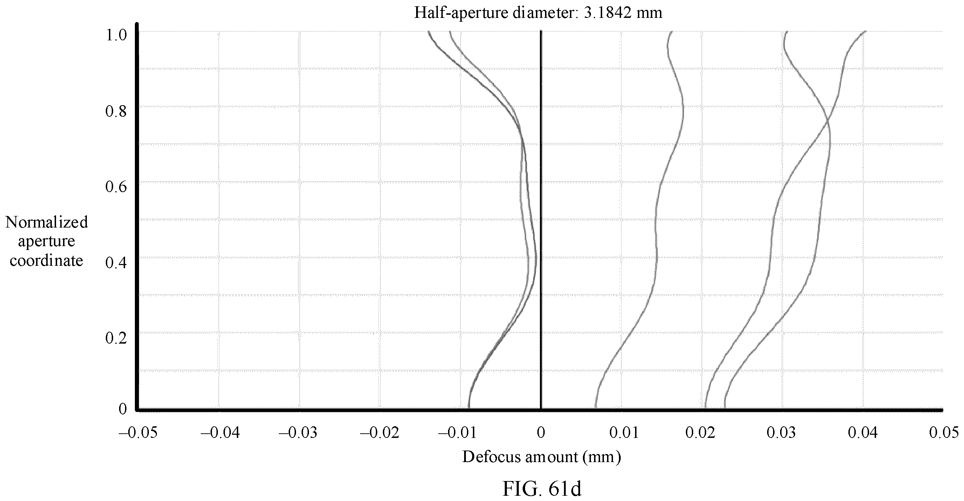

FIG. 61d shows axial aberration curves of the zoom lens shown in FIG. 59 in the telephoto state T. Five curves respectively indicate simulation results of light with wavelengths of 650 nm, 610 nm, 555 nm, 510 nm, and 470 nm at focus depth positions when a half-aperture diameter is 3.1842 mm. It can be seen from FIG. 61d that, at any specific normalized aperture coordinate, a difference between defocus amounts of curves corresponding to every two different wavelengths is less than 0.06 mm. In other words, axial aberrations of the zoom lens in the telephoto state T are controlled within a small range.

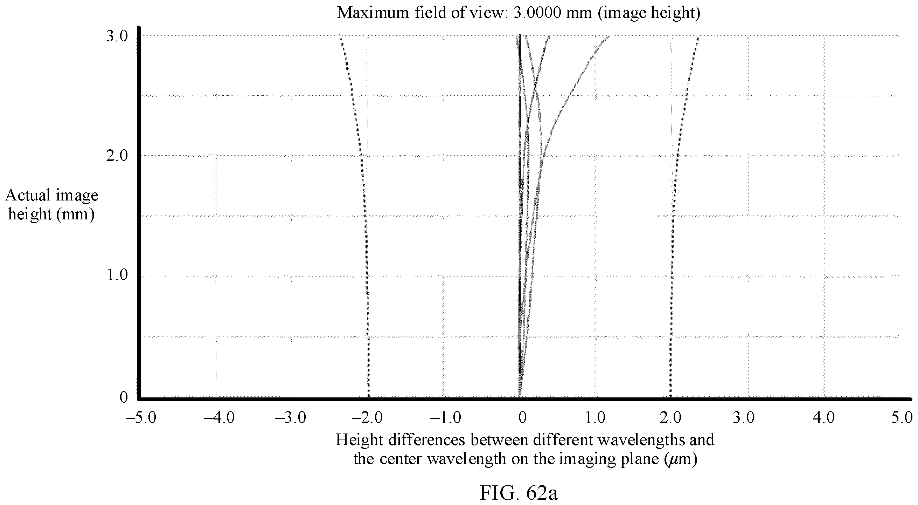

FIG. 62a shows lateral chromatic aberration curves of the zoom lens in the wide-angle state W. Five solid curves in FIG. 62a are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 62a that lateral chromatic aberrations of five light rays are all within the diffraction limit range.

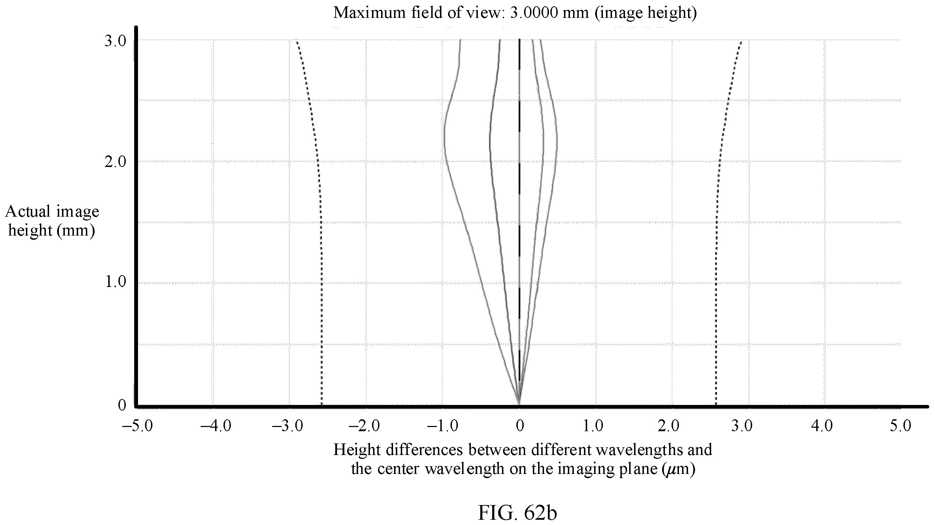

FIG. 62b shows lateral chromatic aberration curves of the zoom lens in the first intermediate focal length state M1. Five solid curves in FIG. 62b are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 62b that lateral chromatic aberrations of five light rays are all within the diffraction limit range.

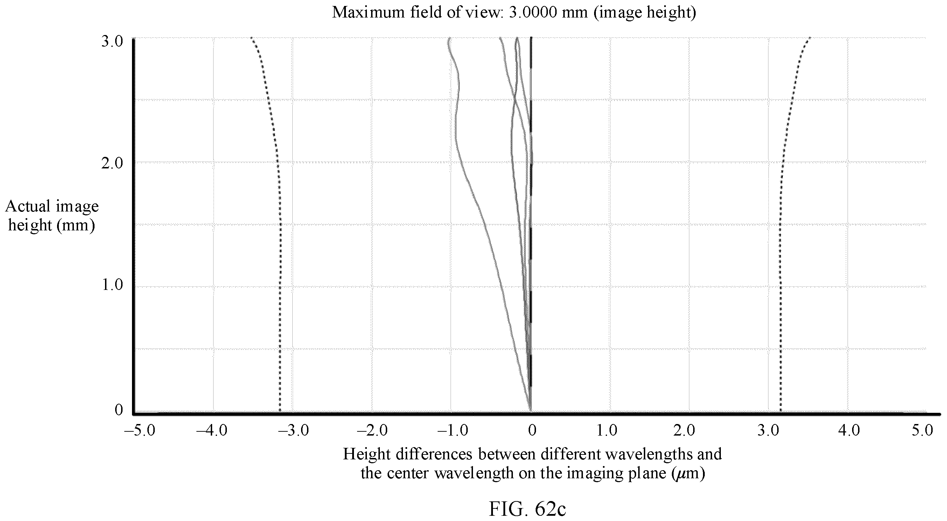

FIG. 62c shows lateral chromatic aberration curves of the zoom lens in the second intermediate focal length state M2. Five solid curves in FIG. 62c are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 62c that lateral chromatic aberrations of five light rays are all within the diffraction limit range.

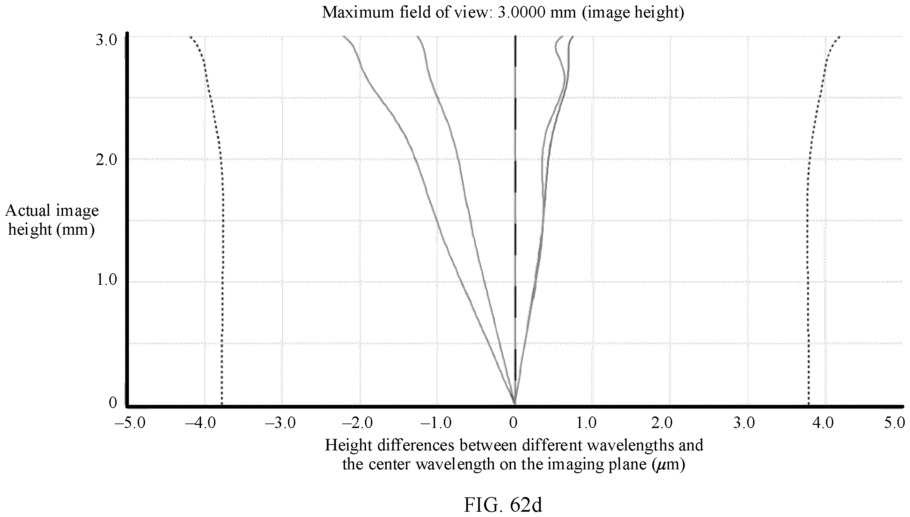

FIG. 62d shows lateral chromatic aberration curves of the zoom lens in the telephoto state T. Five solid curves in FIG. 62d are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 62d that lateral chromatic aberrations of five light rays are all within the diffraction limit range.

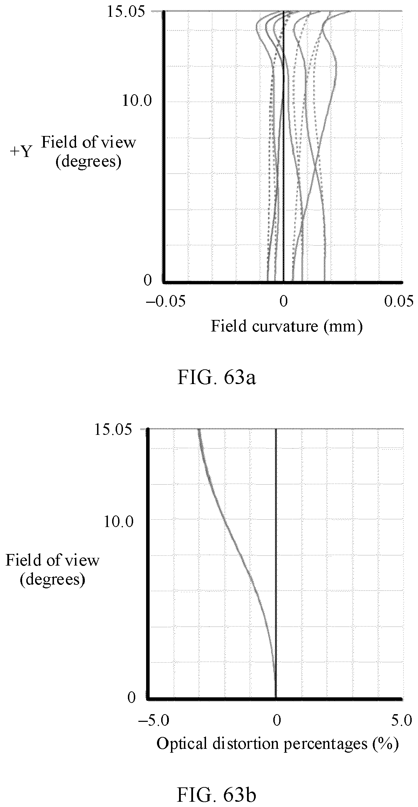

FIG. 63a shows optical distortion curves of the zoom lens in the wide-angle state W, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 63a that the differences between imaging deformations and ideal shapes are very small. FIG. 63b is obtained by calculating percentages of imaging deformations to ideal shapes of the light rays in FIG. 63a. It can be seen from FIG. 63b that optical distortions can be controlled within a range less than or equal to 3%.

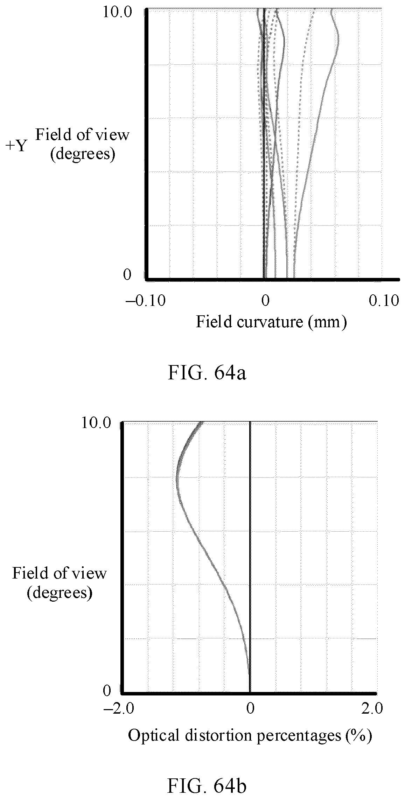

FIG. 64a shows optical distortion curves of the zoom lens in the first intermediate focal length state M1, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 64a that the differences between imaging deformations and ideal shapes are very small. FIG. 64b is obtained by calculating percentages of imaging deformations to ideal shapes of the light rays in FIG. 64a. It can be seen from FIG. 64b that optical distortions can be controlled within a range less than 1.2%.

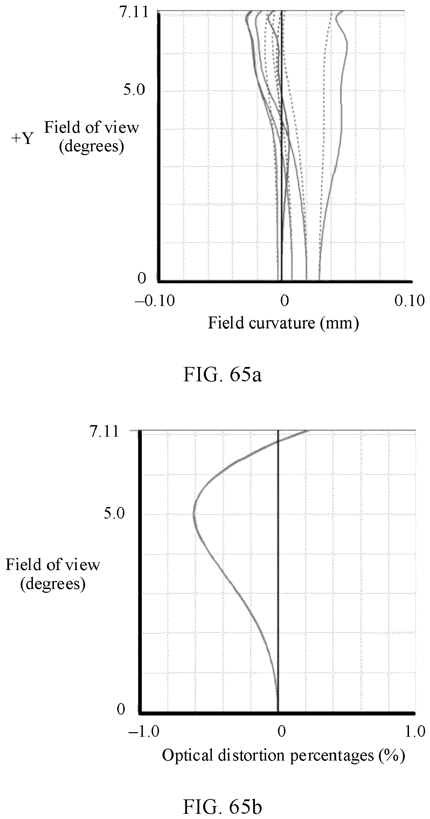

FIG. 65a shows optical distortion curves of the zoom lens in the second intermediate focal length state M2, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 65a that the differences between imaging deformations and ideal shapes are very small. FIG. 65b is obtained by calculating percentages of imaging deformations to ideal shapes of the light rays in FIG. 65a. It can be seen from FIG. 65b that optical distortions can be controlled within a range less than or equal to 0.6%.

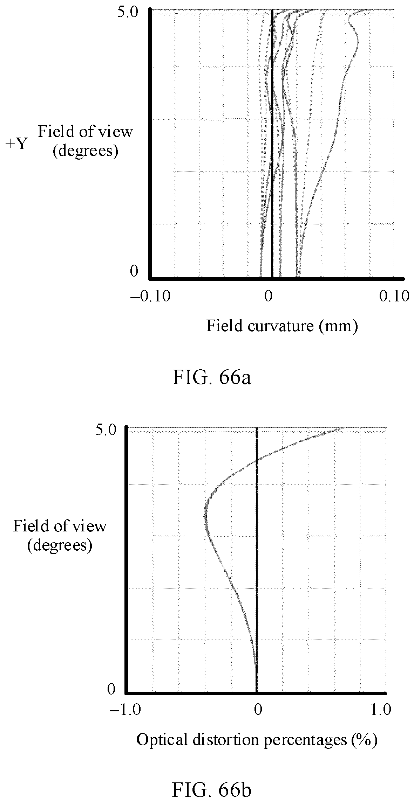

FIG. 66a shows optical distortion curves of the zoom lens in the telephoto state T, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 66a that the differences between imaging deformations and ideal shapes are very small. FIG. 66b is obtained by calculating percentages of imaging deformations to ideal shapes of the light rays in FIG. 66a. It can be seen from FIG. 66b that optical distortions can be controlled within a range less than 0.7%.

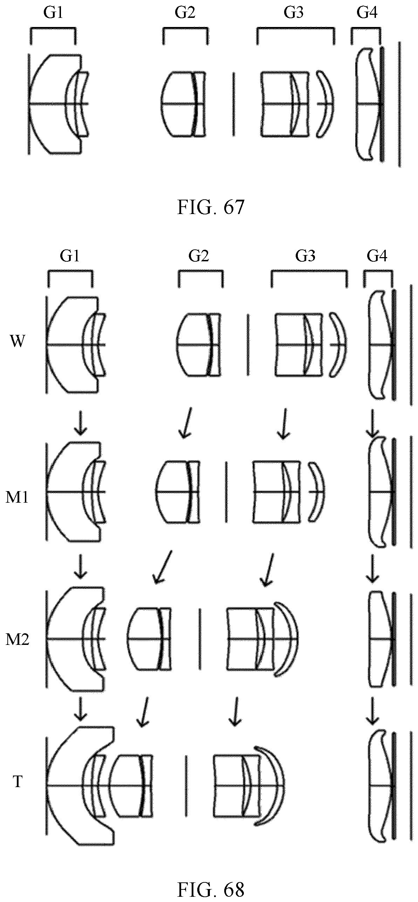

FIG. 67 is an example of a ninth specific zoom lens. The zoom lens sequentially includes the following from an object side to an image side: a first lens group G1 with negative focal power, where a ratio of a focal length f1 of the first lens group G1 to a focal length ft at a telephoto end of the zoom lens is |f1/ft| = 0.71; a second lens group G2 with positive focal power, where a ratio of a focal length f2 of the second lens group G2 to the focal length ft at the telephoto end of the zoom lens is |f2/ft| = 0.23; a third lens group G3 with negative focal power, where a ratio of a focal length f3 of the third lens group G3 to the focal length ft at the telephoto end of the zoom lens is |f3/ft| = 0.335; and a fourth lens group G4 with positive focal power, where a ratio of a focal length f4 of the fourth lens group G4 to the focal length ft at the telephoto end of the zoom lens is |f4/ft| = 0.384.

Still refer to FIG. 67. The zoom lens includes eight lenses with focal power, and includes 16 aspheric surfaces in total. The first lens group G1 includes two lenses sequentially distributed from the object side to the image side, the two lenses are with positive and negative focal power respectively, and a first lens is a positive meniscus lens with a convex surface that bulges towards the object side. The second lens group G2 includes two lenses sequentially distributed from the object side to the image side, and the two lenses are with positive and negative focal power respectively. The third lens group G3 includes three lenses sequentially distributed from the object side to the image side, and the three lenses are with positive, negative, and positive focal power respectively. The fourth lens group G4 includes one lens with positive focal power. The second lens group G2 includes at least one lens with negative focal power, to eliminate an aberration. In addition, the zoom lens further has a stop (not shown in FIG. 67). The stop is located on an object side of the second lens group G2, but is not limited thereto. Alternatively, the stop may be disposed on an image side or an object side of the first lens group G1, or may be disposed on an image side or an object side of the third lens group G3. A maximum aperture diameter of a lens in the first lens group G1, the second lens group G2, and the third lens group G3 is 7.902 mm.

Subsequently, refer to Table 9a and Table 9b. Table 9a shows a surface curvature, a thickness (Thickness), a refractive index (nd), and an abbe coefficient (vd) of each lens of the zoom lens shown in FIG. 67 in a wide-angle state. For meanings of the parameters in Table 9a, refer to introduction in a corresponding part in Table 1a. Table 9b shows aspheric coefficients of aspheric surfaces of the lenses.

**Table 9a**

|     | R | Thickness | | nd | | vd | |
|-----|-----|-----|-----|-----|-----|-----|-----|
| R1 | 5.625 | d1 | 2.928 | n1 | 1.59 | v1 | 67.0 |
| R2 | 7.037 | a1 | 0.769 | | | | |
| R3 | 20.331 | d2 | 0.500 | n2 | 1.54 | v2 | 56.0 |
| R4 | 3.873 | a2 | 6.443 | | | | |
| R5 | 4.174 | d3 | 2.766 | n3 | 1.54 | v3 | 56.0 |
| R6 | -6.985 | a3 | 0.100 | | | | |
| R7 | -18.088 | d4 | 0.569 | n4 | 1.66 | v4 | 20.4 |
| R8 | 32.926 | a4 | 2.384 | | | | |
| R9 | -10.125 | d5 | 2.372 | n5 | 1.66 | v5 | 20.4 |
| R10 | -7.917 | a5 | 0.520 | | | | |
| R11 | -3.514 | d6 | 0.725 | n6 | 1.54 | v6 | 56.0 |
| R12 | -15.693 | a6 | 1.426 | | | | |
| R13 | -4.707 | d7 | 0.566 | n7 | 1.54 | v7 | 56.0 |
| R14 | -5.087 | a7 | 1.941 | | | | |
| R15 | -54.917 | d8 | 1.794 | n8 | 1.54 | v8 | 56.0 |
| R16 | -5.537 | a8 | 0.100 | | | | |
| R17 | Infinity | d9 | 0.209 | n9 | 1.52 | v9 | 64.2 |
| R18 | Infinity | a9 | 1.300 | | | | |

**Table 9b**

| Aspheric coefficient | | | | | | | | | |
|-----|-----|-----|-----|-----|-----|-----|-----|-----|-----|
| | Type | K | A2 | A3 | A4 | A5 | A6 | A7 | A8 |
| R1 | Even aspheric | 0.00 | 1.03E-03 | -6.84E-06 | -4.19E-07 | -6.76E-08 | 0.00E+00 | 0.00E+00 | 0.00E+00 |
| R2 | Even aspheric | 0.00 | 1.14E-02 | -2.47E-05 | 4.13E-06 | -8.99E-07 | -4.88E-08 | 0.00E+00 | 0.00E+00 |
| R3 | Even aspheric | 0.00 | 8.31E-03 | -1.48E-03 | 1.63E-04 | -1.49E-05 | 7.47E-07 | -1.03E-08 | -1.36E-09 |
| R4 | Even aspheric | 0.00 | -4.59E-03 | -1.14E-03 | 1.26E-04 | -8.17E-06 | -6.41E-08 | 1.18E-08 | 3.79E-10 |

(continued)

| | Type | K | A2 | A3 | A4 | A5 | A6 | A7 | A8 |
|---|---|---|---|---|---|---|---|---|---|
| Aspheric coefficient | | | | | | | | | |
| R5 | Even aspheric | 0.00 | -1.05E-05 | 8.92E-05 | -5.35E-06 | 1.25E-06 | -2.13E-08 | -1.70E-09 | 1.05E-09 |
| R6 | Even aspheric | 0.00 | 3.78E-03 | -2.02E-04 | 8.00E-06 | 5.57E-06 | 1.03E-07 | 8.37E-09 | -6.64E-09 |
| R7 | Even aspheric | 0.00 | -4.43E-03 | 1.99E-04 | -2.30E-05 | 1.83E-05 | -1.40E-06 | -8.84E-09 | -8.61E-09 |
| R8 | Even aspheric | 0.00 | -4.33E-03 | 4.80E-04 | 3.26E-05 | 3.51E-06 | -2.42E-07 | -3.55E-08 | -2.49E-10 |
| R9 | Even aspheric | 0.00 | 4.88E-03 | -3.27E-04 | 5.46E-05 | 2.13E-06 | -9.29E-07 | 2.92E-08 | 3.29E-16 |
| R10 | Even aspheric | 0.00 | 8.64E-03 | -8.80E-04 | 1.32E-04 | -4.60E-06 | 5.79E-09 | 0.00E+00 | 0.00E+00 |
| R11 | Even aspheric | 0.00 | 1.72E-02 | -2.10E-03 | 2.57E-04 | -2.64E-05 | 1.62E-07 | 0.00E+00 | 0.00E+00 |
| R12 | Even aspheric | 0.00 | 6.48E-03 | 3.94E-04 | 2.06E-06 | -1.88E-05 | 1.01E-06 | 1.10E-08 | -1.91E-11 |
| R13 | Even aspheric | 0.00 | -1.59E-02 | 3.12E-03 | -2.41E-05 | -4.07E-05 | 2.01E-06 | -2.06E-08 | 5.47E-12 |
| R14 | Even aspheric | 0.00 | -1.24E-02 | 1.89E-03 | -9.65E-05 | -3.76E-06 | -3.36E-07 | -6.91E-10 | 2.19E-10 |
| R15 | Even aspheric | 0.00 | 1.36E-04 | 3.37E-04 | -8.40E05 | 8.07E-06 | -2.99E-07 | 2.69E-09 | 5.54E-11 |
| R16 | Even aspheric | 0.00 | 5.81E-03 | -7.66E-05 | -4.99E-05 | 2.71E-06 | 2.18E-07 | -2.02E-08 | 4.56E-10 |

In the 16 aspheric surfaces of the zoom lens shown in Table 9b, surface types z of all the even aspheric surfaces may be defined according to, but not limited to, the following aspheric surface formula:

$$z = \frac{cr^2}{1 + \sqrt{1 - Kc^2r^2}} + A_2r^4 + A_3r^6 + A_4r^8 + A_5r^{10} + A_6r^{12} + A_7r^{14} + A_8r^{16}$$

where
z is a vector height of the aspheric surface, r is a radial coordinate of the aspheric surface, c is a spherical curvature of a vertex on the aspheric surface, K is a conic constant, and A2, A3, A4, A5, A6, A7, and A8 are aspheric coefficients.

Because the zoom lens has the 16 aspheric surfaces, the aspheric surfaces may be flexibly designed, and a good aspheric surface type may be designed based on an actual requirement, to improve imaging quality.

A structure of the zoom lens shown in FIG. 67 is used. A ratio |TTL/ft| of a total length TTL of the zoom lens from a surface closest to the object side to the imaging plane to the effective focal length ft at the telephoto end of the zoom lens is 0.95. In view of this, a small total optical length may be used to achieve a long focal length. A ratio |IMH/ft| of a half-image height IMH to the effective focal length ft at the telephoto end of the zoom lens may reach 0.144.

As shown in FIG. 67, positions of the first lens group G1 and the fourth lens group G4 are fixed relative to the imaging plane, and the second lens group G2 and the third lens group G3 move along an optical axis between the first lens group G1 and the fourth lens group G4. The second lens group G2 serves as a zoom lens group, and the third lens group G3 serves as a compensation lens group, to implement continuous zoom.

FIG. 68 is a zoom process of the zoom lens shown in FIG. 67. The zoom lens has four focal length states: W indicates the wide-angle state, M1 indicates a first intermediate focal length state, M2 indicates a second intermediate focal length state, and T indicates a telephoto state. The wide-angle state T of the zoom lens corresponds to the following relative positions of the lens groups. The third lens group G3 is close to the fourth lens group G4, and the second lens group G2 is close to an object side of the third lens group G3. When the zoom lens zooms from the wide-angle state W to the first intermediate focal length state M1, the second lens group G2 moves towards the first lens group G1, and the third lens group G3 moves towards the second lens group G2. When the zoom lens zooms from the first intermediate focal length state M1 to the second intermediate focal length state M2, the second lens group G2 continues to move towards the first lens group G1, and the third lens group G3 continues to move towards the second lens group G2. When the zoom lens zooms from the second intermediate focal length state M2 to the telephoto state T, the second lens group G2 continues to move towards the first lens group G1, and the third lens group G3 continues to move towards the second lens group G2.

It can be seen from FIG. 68 that when the zoom lens zooms from the wide-angle state W to the telephoto state T, both the second lens group G2 and the third lens group G3 keep moving towards the object side, but a distance between the third lens group G3 and the second lens group G2 first decreases and then increases, to implement continuous zoom. The second lens group G2 serves as a zoom lens group, and a ratio |L1/TTL| of a movement stroke L1 of the second lens group G2 along the optical axis to a total length TTL of the zoom lens from the surface closest to the object side to the imaging plane is 0.2022. The third lens group G3 serves as a compensation lens group, and a ratio |L2/TTL| of a movement stroke L2 of the third lens group G3 along the optical axis to the total length TTL of the zoom lens from the surface closest to the object side to the imaging plane is 0.1845.

Refer to Table 9c, Table 9d, and Table 9e correspondingly. Table 9c shows basic parameters of the zoom lens, and Table 9d shows spacing distances between the lens groups of the zoom lens in the wide-angle state W, the first intermediate focal length state M1, the second intermediate focal length state M2, and the telephoto state T.

**Table 9c**

|  | W | M1 | M2 | T |
|---|---|---|---|---|
| Focal length F (mm) | 14.600 | 18.000 | 23.999 | 28.998 |
| F-number | 3.348 | 3.826 | 4.538 | 5.052 |
| Half-image height IMH (mm) | 4.190 | 4.190 | 4.190 | 4.190 |
| Half FOV (°) | 16.155 | 12.989 | 9.719 | 8.060 |
| BFL (mm) | 1.609 | 1.609 | 1.609 | 1.609 |
| TTL (mm) | 27.412 | 27.412 | 27.412 | 27.412 |
| Designed wavelength | 650 nm, 610 nm, 555 nm, 510 nm, and 470 nm | | | |

**Table 9d**

|  | W | M1 | M2 | T |
|---|---|---|---|---|
| a2 | 6.443 mm | 4.753 mm | 2.402 mm | 0.900 mm |
| a4 | 2.384 mm | 2.276 mm | 2.485 mm | 2.868 mm |
| a7 | 1.941 mm | 3.740 mm | 5.882 mm | 7.000 mm |

Simulation is performed on the zoom lens shown in FIG. 67. The following describes imaging effect of the zoom lens with reference to the accompanying drawings.

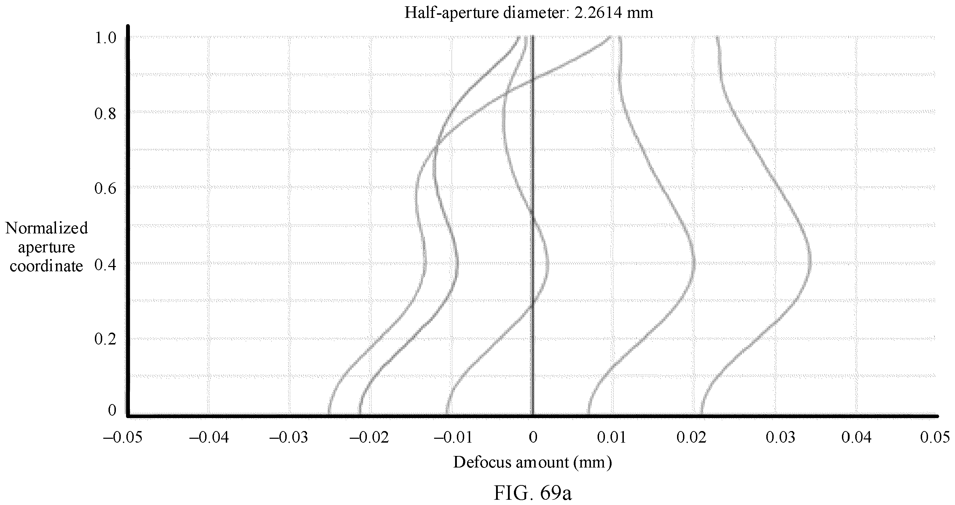

FIG. 69a shows axial aberration curves of the zoom lens shown in FIG. 67 in the wide-angle state W. Five curves respectively indicate simulation results of light with wavelengths of 650 nm, 610 nm, 555 nm, 510 nm, and 470 nm at focus depth positions when a half-aperture diameter is 2.2614 mm. It can be seen from FIG. 69a that, at any specific normalized aperture coordinate, a difference between defocus amounts of curves corresponding to every two different wavelengths is less than 0.06 mm. In other words, axial aberrations of the zoom lens in the wide-angle state W are controlled within a small range.

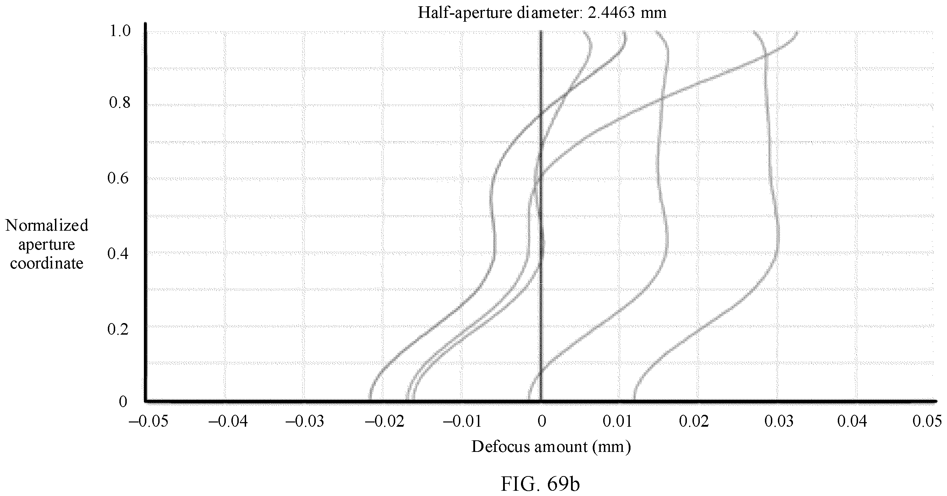

FIG. 69b shows axial aberration curves of the zoom lens shown in FIG. 67 in the first intermediate focal length state M1. Five curves respectively indicate simulation results of light with wavelengths of 650 nm, 610 nm, 555 nm, 510 nm, and 470 nm at focus depth positions when a half-aperture diameter is 2.4463 mm. It can be seen from FIG. 69b that, at any specific normalized aperture coordinate, a difference between defocus amounts of curves corresponding to every two different wavelengths is less than 0.04 mm. In other words, axial aberrations of the zoom lens in the first intermediate focal length state M1 are controlled within a small range.

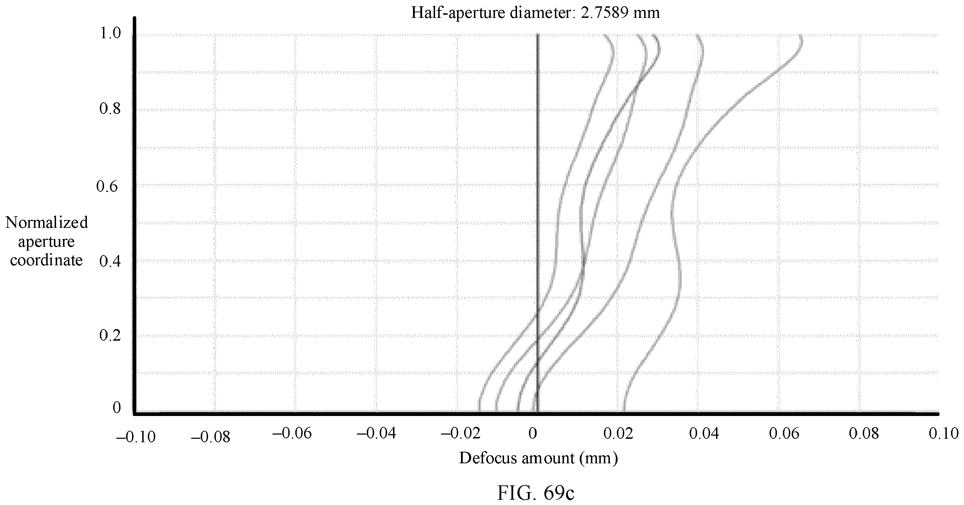

FIG. 69c shows axial aberration curves of the zoom lens shown in FIG. 67 in the second intermediate focal length state M2. Five curves respectively indicate simulation results of light with wavelengths of 650 nm, 610 nm, 555 nm, 510 nm, and 470 nm at focus depth positions when a half-aperture diameter is 2.7589 mm. It can be seen from FIG. 69c that, at any specific normalized aperture coordinate, a difference between defocus amounts of curves corresponding to every two different wavelengths is less than 0.06 mm. In other words, axial aberrations of the zoom lens in the second intermediate focal length state M2 are controlled within a small range.

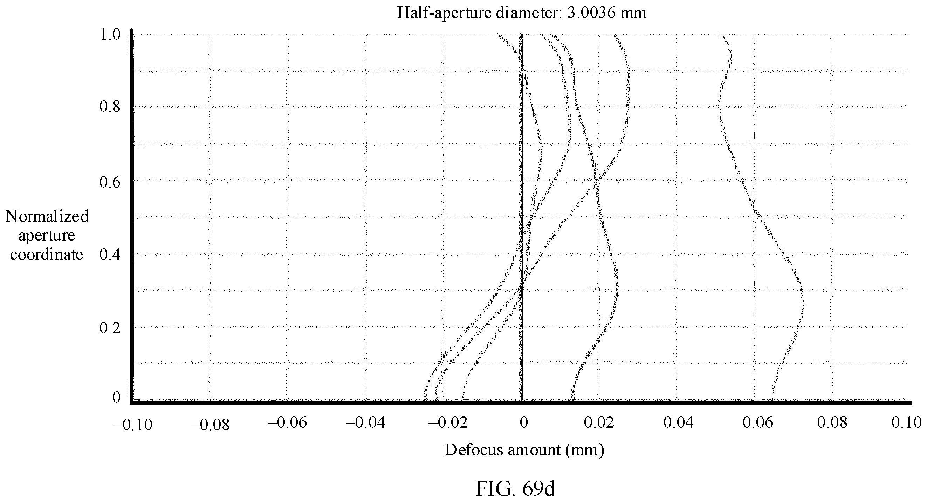

FIG. 69d shows axial aberration curves of the zoom lens shown in FIG. 67 in the telephoto state T. Five curves respectively indicate simulation results of light with wavelengths of 650 nm, 610 nm, 555 nm, 510 nm, and 470 nm at focus depth positions when a half-aperture diameter is 3.0036 mm. It can be seen from FIG. 69d that, at any specific normalized aperture coordinate, a difference between defocus amounts of curves corresponding to every two different wavelengths is less than 0.10 mm. In other words, axial aberrations of the zoom lens in the telephoto state T are controlled within a small range.

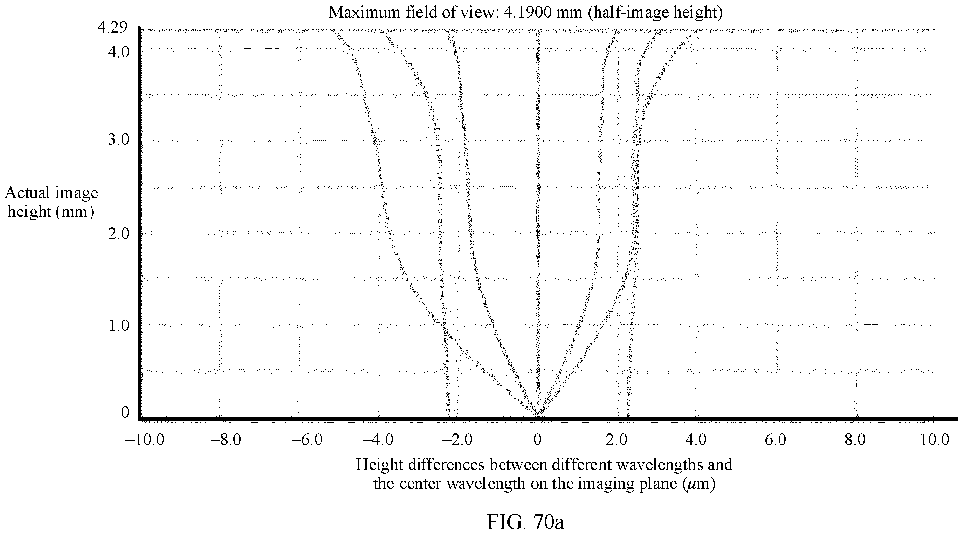

FIG. 70a shows lateral chromatic aberration curves of the zoom lens in the wide-angle state W. Five solid curves in FIG. 70a are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 70a that lateral chromatic aberrations of five light rays are basically within the diffraction limit range.

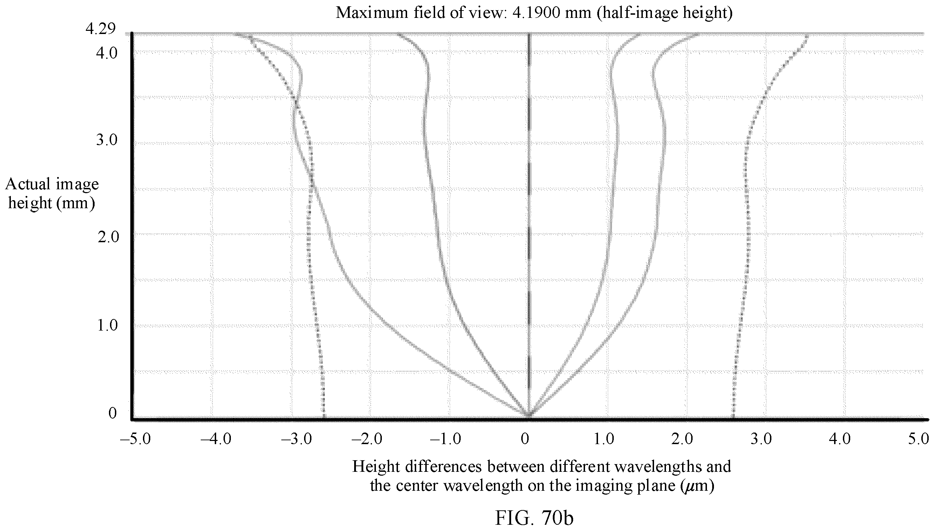

FIG. 70b shows lateral chromatic aberration curves of the zoom lens in the first intermediate focal length state M1. Five solid curves in FIG. 70b are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 70b that lateral chromatic aberrations of five light rays are basically within the diffraction limit range.

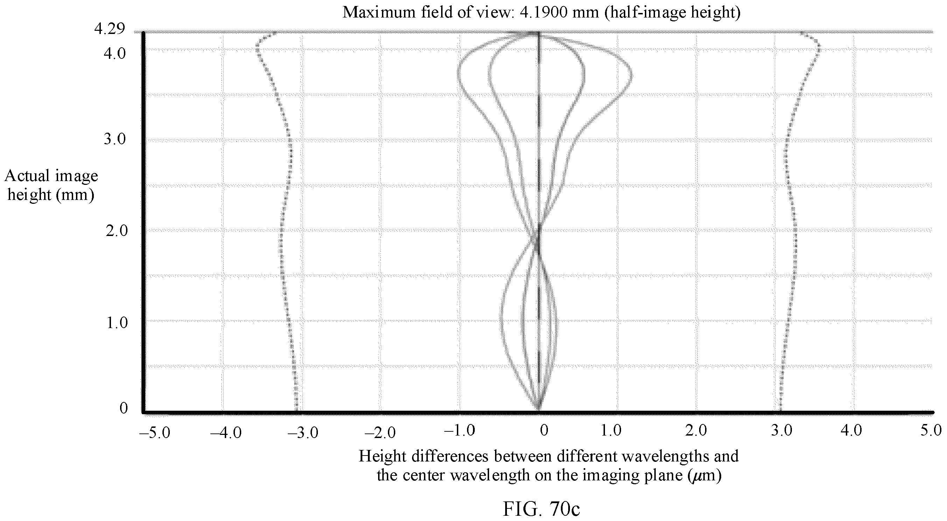

FIG. 70c shows lateral chromatic aberration curves of the zoom lens in the second intermediate focal length state M2. Five solid curves in FIG. 70c are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 70c that lateral chromatic aberrations of five light rays are all within the diffraction limit range.

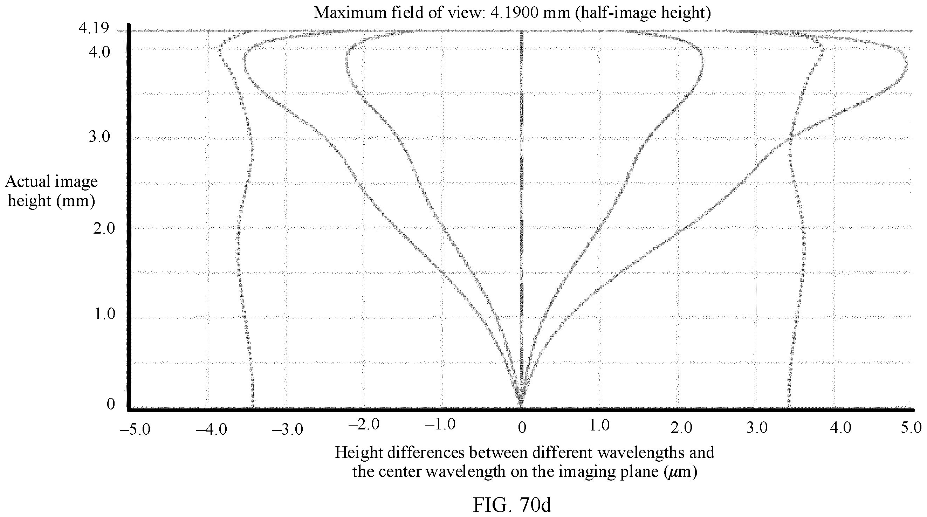

FIG. 70d shows lateral chromatic aberration curves of the zoom lens in the telephoto state T. Five solid curves in FIG. 70d are respectively simulation curves corresponding to colored light with wavelengths of 650 nm, 610 nm, 555 nm, 510 nm, and 470 nm. A maximum field of view is 3.0000 mm. Dotted lines indicate a diffraction limit range. It can be seen from FIG. 70d that lateral chromatic aberrations of five light rays are basically within the diffraction limit range.

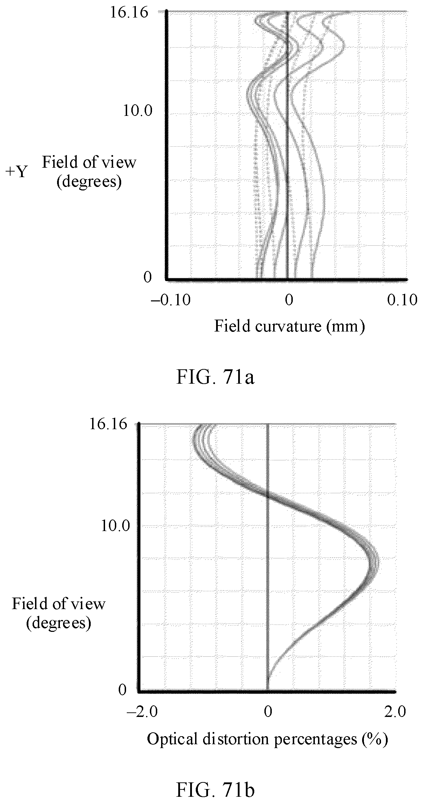

FIG. 71a shows optical distortion curves of the zoom lens in the wide-angle state W, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 71a that the differences between imaging deformations and ideal shapes are very small. FIG. 71b is obtained by calculating percentages of imaging deformations to ideal shapes of the light rays in FIG. 71a. It can be seen from FIG. 71b that optical distortions can be controlled within a range less than or equal to 3%.

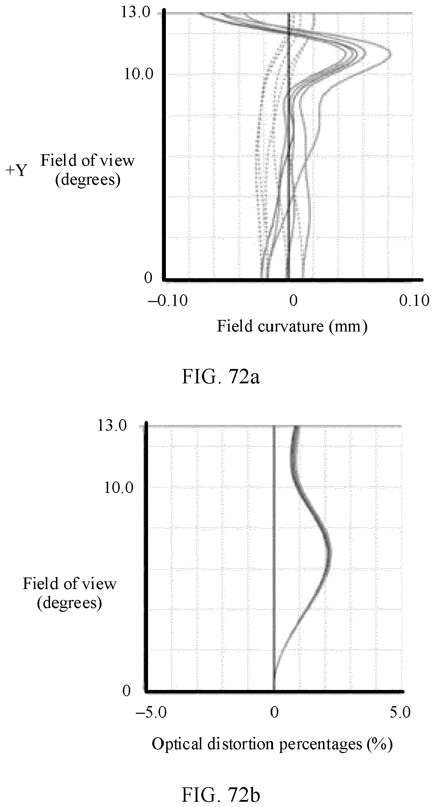

FIG. 72a shows optical distortion curves of the zoom lens in the first intermediate focal length state M1, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 72a that the differences between imaging deformations and ideal shapes are very small. FIG. 72b is obtained by calculating percentages of imaging deformations to ideal shapes of the light rays in FIG. 72a. It can be seen from FIG. 72b that optical distortions can be controlled within a range less than 2.0%.

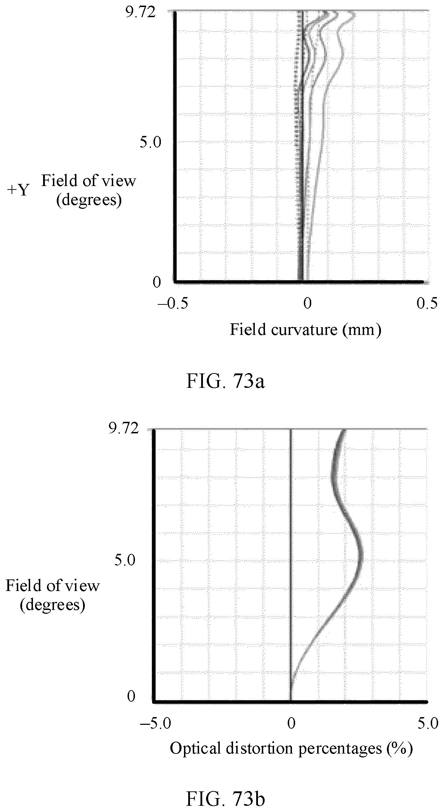

FIG. 73a shows optical distortion curves of the zoom lens in the second intermediate focal length state M2, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 73a that the differences between imaging deformations and ideal shapes are very small. FIG. 73b is obtained by calculating percentages of imaging deformations to ideal shapes of the light rays in FIG. 73a. It can be seen from FIG. 73b that optical distortions can be controlled within a range less than or equal to 3.0%.

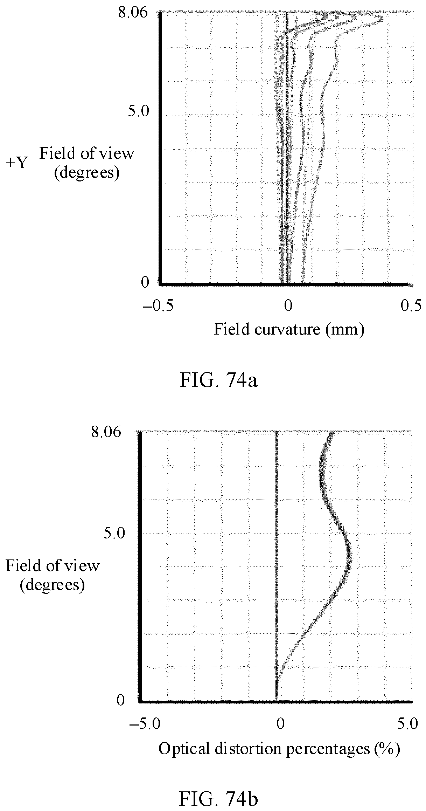

FIG. 74a shows optical distortion curves of the zoom lens in the telephoto state T, indicating differences between imaging deformations and ideal shapes. Five solid curves respectively correspond to colored light with wavelengths of 650 nm, 610 nm, 555 nm, 510 nm, and 470 nm. A dotted curve corresponding to each solid curve is an ideal shape corresponding to each light ray. It can be seen from FIG. 74a that the differences between imaging deformations and ideal shapes are very small. FIG. 74b is obtained by calculating percentages of imaging deformations to ideal shapes of the light rays in FIG. 74a. It can be seen from FIG. 74b that optical distortions can be controlled within a range less than 3.0%.

According to the five embodiments provided in FIG. 35 to FIG. 74b, a case in which the zoom lens includes three lens groups: the first lens group G1, the second lens group G2, the third lens group G3, and the fourth lens group G4 is described above as an example. A form of the zoom lens includes the form of four lens groups. However, this is not limited to the foregoing five embodiments.

A ratio of a focal length of each lens groups to the focal length ft at the telephoto end of the zoom lens is not limited to the values in the embodiments provided in FIG. 35 to FIG. 74b. Continuous zoom can be implemented as long as the focal length of each lens group and the focal length at the telephoto end of the zoom lens meet the following ratio relationship: For example, the focal length f1 of the first lens group G1 and the focal length ft at the **telephoto end of the zoom lens meet 0.2 $\leq$ |f1/ft| $\leq$ 0.9, the focal length f2 of the second** lens group G2 and ft meet **0.10 $\leq$ |f2/ft| $\leq$ 0.6, and the focal length f3 of the third lens group G3 and ft meet 0.10 $\leq$ |f3/ft| $\leq$ 0.7.**

A quantity of lenses included in each lens group in the four embodiments provided in FIG. 35 to FIG. 74b is merely an example. The quantity of lenses in each lens group is not specifically limited for the zoom lens provided in embodiments of this application, and only a total quantity N of lenses in the first lens group G1, the second lens group G2, the third lens group G3, and the fourth lens group G4 is limited. For example, each lens group may include one, two, or more lenses. The total quantity N of lenses in the first lens group G1, the second lens group G2, the third lens group G3, and the fourth lens group G4 needs to me**et 7 $\leq$ N $\leq$ 13, to ensure that the zoom lens** has a good continuous zoom capability and imaging effect. For example, N may be different positive integers such as 7, 8, 9, 10, 11, or 13. In addition, all lenses included in the first lens group G1, the second lens group G2, the third lens **group G3, and the fourth lens group G4 meet N $\leq$ quantity of aspheric surfaces $\leq$ 2N, where N is the total quantity of** lenses in the first lens group G1, the second lens group G2, the third lens group G3, and the fourth lens group G4, and the quantity of aspheric surfaces is a quantity of aspheric surfaces of all lenses included in the first lens group G1, the second lens group G2, the third lens group G3, and the fourth lens group G4. For example, the quantity of aspheric surfaces may be N, 1.2N, 1.5N, 1.7N, or 2N. The aspheric surface is a transparent surface of a lens.

In the five embodiments provided in FIG. 35 to FIG. 74b, in a sliding process of the second lens group G2 and the third lens group G3, the ratio |L1/TTL| of the movement stroke L1 of the second lens group G2 along the optical axis to the total length TTL of the zoom lens from the surface closest to the object side to the imaging plane, and the ratio |L2/TTL| of the movement stroke L2 of the third lens group G3 along the optical axis to the total length TTL of the zoom lens from the surface closest to the object side to the imaging plane are merely examples. Only the ratio of the movement stroke L1 of the second lens group G2 along the optical axis to the total length TTL of the zoom **lens from the surface closest to the object side to the imaging plane needs to meet 0.12 $\leq$ |L1/TTL| $\leq$ 0.35. For example,** the ratio may be 0.12, 0.16, 0.19, 0.20, 0.25, 0.30, 0.33, or 0.35. The ratio of the movement stroke L2 of the third lens group G3 along the optical axis to the total length TTL of the zoom lens from the surface closest to the object side to **the imaging plane meets 0.08 $\leq$ |L2/TTL| $\leq$ 0.35. For example, the ratio may be 0.08, 0.12, 0.16, 0.19, 0.20, 0.25, 0.30,** 0.33, or 0.35. In other words, the second lens group G2 and the third lens group G3 can cooperate with each other to achieve continuous zoom.

After the zoom lens of the foregoing structure is used, the ratio |TTL/ft| of the total length TTL of the zoom lens from the surface closest to the object side to the imaging plane to the effective focal length ft at the telephoto **end of the zoom lens meets 0.8 $\leq$ |TTL/ft| $\leq$ 1.2. This helps achieve a long focal length by using a short total optical** length. The ratio |IMH/ft| of the half-image height IMH to the effective focal length ft at the telephoto end of the zoom **lens meets 0.02 $\leq$ |IMH/ft| $\leq$ 0.20. For example, the ratio may be 0.02, 0.05, 0.07, 0.12, 0.15, 0.18, or 0.20. The** effective focal length ft at the telephoto end of the zoom lens and an effective focal length fw of the wide-angle end **of the zoom lens meet 1 $\leq$ |ft/fw| $\leq$ 3.7. For example, the ratio may be 1, 1.2, 1.6, 1.7, 1.9, 2.2, 2.5, 2.8, 3, 3.3, or 3.7,** to obtain better imaging quality during continuous zoom.

It can be learned from structures and simulation effect of the first specific zoom lens, the second specific zoom lens, the third specific zoom lens, the fourth specific zoom lens, the fifth specific zoom lens, the sixth specific zoom lens, the seventh specific zoom lens, the eighth specific zoom lens, and the ninth specific zoom lens that are described above that the zoom lens provided in embodiments of this application can implement continuous zoom, and an object distance of the zoom lens ranges from infinity to 40 mm. The object distance is a distance from an object to a surface of an object side of a first lens in the first lens group G1 of the zoom lens. It can be learned from simulation results that the zoom lens obtains better imaging quality than conventional hybrid optical zoom in a zoom process. In addition, a difference between a chief ray angle when the zoom lens is in the wide-angle state W and a chief ray angle when the zoom lens is in the telephoto state T is less than or equal to 6°. For example, the difference is 0.1°, 1°, 1.2°, 1.8°, 1.9°, 2.2°, 2.5°, 2.8°, 3.2°, 3.5°, 4°, 4.4°, 4.8°, 5.0°, 5.5°, or 6°.

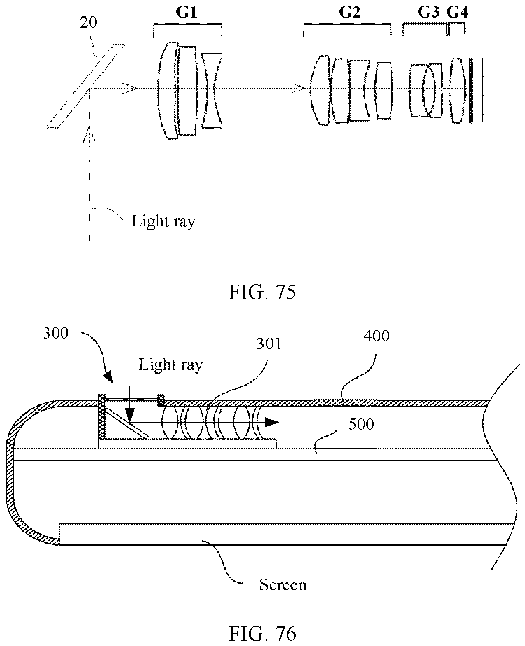

FIG. 75 shows another zoom lens according to an embodiment of this application. A manner of disposing a lens group of the zoom lens is not limited to the manner in FIG. 75. For details, refer to the foregoing embodiments. In addition, the zoom lens further includes a mirror reflector 20 located on an object side of a first lens group G1, to reflect a light ray to the first lens group G1. For example, an included angle between a mirror surface of the mirror reflector 20 and an optical axis of the zoom lens may be 45°, or the included angle may be adjusted as required. This can implement periscope photographing, so that both a position and an angle for placing the zoom lens are more flexible. For example, an optical axis direction of the zoom lens may be parallel to a surface of a mobile phone screen.

FIG. 76 shows an application scenario of the zoom lens in a mobile phone. When the zoom lens 300 is of a periscope type, an arrangement direction of a lens group 301 in the zoom lens 300 may be parallel to a length direction of a housing 400 of the mobile phone. The lens group 301 is disposed between the housing 300 of the mobile phone and a middle frame 500. It should be understood that FIG. 76 is only an example of a position and a manner of disposing the lens group 301, and the lens group 301 in FIG. 76 does not indicate an actual quantity of lenses of the lens group 301. It can be seen from FIG. 76 that when the zoom lens is of a periscope type, impact on a thickness of the mobile phone can be reduced.

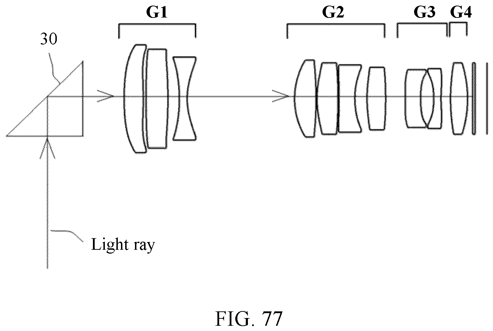

In addition, as shown in FIG. 77, the mirror reflector 20 in FIG. 75 may be replaced with a prism 30. The prism 30 may be a triangular prism. A surface of the prism 30 is used as a reflection surface. The reflection surface and the optical axis of the zoom lens form an angle of 45 degrees, and the angle may also be properly adjusted. Still refer to FIG. 77. For example, a light ray vertically passes through an incident surface of the prism 30, strikes the reflection surface of the prism 30, and is reflected to an emergent surface of the prism 30. The light ray vertically passes through the emergent surface and strikes the first lens group G1. A shape and an angle for placing the prism are not limited to the foregoing form, provided that an external light ray can be deflected to the first lens group G1.

An embodiment of this application further provides a camera module. The camera module includes a camera chip and the zoom lens provided in any one of the foregoing embodiments. A light ray passes through the zoom lens and strikes the camera chip. The camera module has a housing, the camera chip is fixed in the housing, and the zoom lens is also disposed in the housing. An existing known structure may be used for the housing and the chip of the camera module, and details are not described herein. The zoom lens implements continuous zoom of the zoom lens by using the second lens group as a zoom lens group and using the third lens group as a compensation lens group and by cooperating with the fixed first lens group. This can improve photographing quality of the zoom lens.

An embodiment of this application further provides a mobile terminal. The mobile terminal may be a mobile phone, a tablet computer, or the like. The mobile terminal includes a housing, and the zoom lens provided in any one of the foregoing embodiments and disposed in the housing. The periscope zoom lens shown in FIG. 76 is disposed in the mobile phone. Also refer to the zoom lens shown in FIG. 4. The zoom lens implements continuous zoom of the zoom lens by using one fixed lens group and two movable lens groups in cooperation with each other, and by using the disposed second lens group and the third lens group. This can improve photographing quality of the zoom lens.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A zoom lens, comprising: a first lens group, a second lens group, and a third lens group that are arranged from an object side to an image side, wherein

    the first lens group is a lens group with negative focal power;
    the second lens group is a lens group with positive focal power;
    the third lens group is a lens group with negative focal power; and
    the first lens group is a fixed lens group, the second lens group is a zoom lens group and slides along an optical axis on an image side of the first lens group, and the third lens group is a compensation lens group and slides along the optical axis on an image side of the second lens group.

2.  The zoom lens according to claim 1, wherein a total quantity N of lenses in the first lens group, the second lens group, and the third lens group meets:

$$7 \le N \le 11.$$

3.  The zoom lens according to claim 2, wherein lenses comprised in the zoom lens meet:
    $N \le$ **a quantity of aspheric surfaces** $\le$ **2N, wherein the quantity of aspheric surfaces is a quantity of aspheric**

surfaces of all lenses comprised in the zoom lens.

4.  The zoom lens according to claim 1, wherein the zoom lens further comprises a fourth lens group, and the fourth lens group is located on an image side of the third lens group;

    the fourth lens group is a lens group with positive focal power; and
    the fourth lens group is a fixed lens group.

5.  The zoom lens according to claim 4, wherein a total quantity N of lenses in the first lens group, the second lens group, the third lens group, and the fourth lens group meets:

$$7 \le N \le 13.$$

6.  The zoom lens according to claim 5, wherein lenses comprised in the zoom lens meet:
    **$N \le$ a quantity of aspheric surfaces $\le 2N$, wherein the quantity of aspheric surfaces is a quantity of aspheric** surfaces of all lenses comprised in the zoom lens.

7.  The zoom lens according to any one of claims 1 to 6, wherein a focal length f1 of the first lens group and a **focal length ft at a telephoto end of the zoom lens meet $0.2 \le$ |f1/ft| $\le 0.9$;**

    **a focal length f2 of the second lens group and the focal length ft meet $0.10 \le$ |f2/ft| $\le 0.6$; and**
    a focal length f3 of the third lens group and the focal length ft **meet $0.10 \le$ |f3/ft| $\le 0.7$.**

8.  The zoom lens according to any one of claims 1 to 7, wherein a movement stroke L1 of the second lens group along the optical axis and a total length TTL of the zoom lens from a surface closest to the object side to an imaging **plane meet $0.12 \le$ |L1/TTL| $\le 0.35$.**

9.  The zoom lens according to any one of claims 1 to 8, wherein a movement stroke L2 of the third lens group along the optical axis and the total length TTL of the zoom lens from the surface closest to the object side to the **imaging plane meet $0.08 \le$ |L2/TTL| $\le 0.3$.**

10. The zoom lens according to any one of claims 1 to 9, wherein a range of a ratio of a half-image height IMH **to an effective focal length ft at the telephoto end of the zoom lens meets $0.02 \le$ |IMH/ft| $\le 0.20$.**

11. The zoom lens according to any one of claims 1 to 10, wherein the effective focal length ft at the telephoto end and an effective focal length fw at a wide-**angle end of the zoom lens meet $1 \le$ |ft/fw| $\le 3.7$.**

12. The zoom lens according to any one of claims 1 to 11, wherein a difference between a chief ray angle when the zoom lens is in a wide-angle state and a chief ray angle when the zoom lens is in a telephoto state is less than or equal to 6°.

13. The zoom lens according to any one of claims 1 to 12, wherein the second lens group comprises at least one lens with negative focal power.

14. The zoom lens according to any one of claims 1 to 13, further comprising a prism or a mirror reflector, wherein

    the prism or the mirror reflector is located on an object side of the first lens group; and
    the prism or the mirror reflector is configured to deflect a light ray to the first lens group.

15. The zoom lens according to any one of claims 1 to 14, wherein each lens in the zoom lens has a cut for reducing a height of the lens.

16. The zoom lens according to claim 15, wherein a height h in a vertical direction of each lens comprised in the zoom lens meets:

$$4 \text{ mm} \le h \le 6 \text{ mm}.$$

17. The zoom lens according to claim 15 or 16, wherein a maximum aperture diameter d of each lens comprised in the zoom lens meets:

$$4 \text{ mm} \leq d \leq 12 \text{ mm}.$$

18. The zoom lens according to any one of claims 1 to 17, wherein an object distance of the zoom lens ranges from infinity to 40 mm.

19. A camera module, comprising a camera chip and the zoom lens according to any one of claims 1 to 18, wherein a light ray passes through the zoom lens and strikes the camera chip.

20. A mobile terminal, comprising a housing and the zoom lens according to any one of claims 1 to 18 and disposed in the housing.

FIG. 1

FIG. 2

FIG. 3

FIG. 4

FIG. 5

Half-aperture diameter: 2.2621 mm

FIG. 6a

FIG. 6b

Half-aperture diameter: 2.8011 mm

Normalized aperture coordinate

Defocus amount (mm)

FIG. 6c

Half-aperture diameter: 3.2830 mm

Normalized aperture coordinate

Defocus amount (mm)

FIG. 6d

FIG. 7a

Maximum field of view: 3.0000 mm (image height)

FIG. 7b

Maximum field of view: 3.0000 mm (image height)

Actual image height (mm)

Height differences between different wavelengths and the center wavelength on the imaging plane ($\mu m$)

FIG. 7c

FIG. 7d

14.9

10.0

+Y Field of view
(degrees)

0

−20.0          0          20.0

Field curvature (mm)

FIG. 8a

14.9

10.0

Field of view
(degrees)

0

−5.0          0          5.0

Optical distortion (%)

FIG. 8b

10.0

+Y Field of view
(degrees)

0

−20.0　　　　0　　　　20.0

Field curvature (mm)

FIG. 9a

10.0

Field of view
(degrees)

0

−0.10　　　　0　　　　0.10

Optical distortion (%)

FIG. 9b

7.09

5.0

+Y    Field of view
      (degrees)

0

−0.05          0          0.05

Field curvature (mm)

FIG. 10a

7.09

5.0

Field of view
(degrees)

0

−1.0          0          1.0

FIG. 10b

+Y Field of view
(degrees)

5.0

0

−20.0          0          20.0

Field curvature (mm)

FIG. 11a

Field of view
(degrees)

5.0

0

−1.0          0          1.0

FIG. 11b

FIG. 12

FIG. 13

Half-aperture diameter: 2.3651 mm

FIG. 14a

Half-aperture diameter: 2.3651 mm

Normalized aperture coordinate

Defocus amount (mm)

FIG. 14b

EP 4 099 076 A1

FIG. 14c

Half-aperture diameter: 3.5230 mm

FIG. 14d

Maximum field of view: 3.0000 mm (image height)

Actual image height (mm)

Height differences between different wavelengths and the center wavelength on the imaging plane ($\mu$m)

FIG. 15a

Maximum field of view: 3.0000 mm (image height)

Actual image
height (mm)

Height differences between different wavelengths and
the center wavelength on the imaging plane ($\mu$m)

FIG. 15b

Maximum field of view: 3.0000 mm (image height)

Actual image height (mm)

Height differences between different wavelengths and the center wavelength on the imaging plane (μm)

FIG. 15c

FIG. 15d

FIG. 16a

FIG. 16b

9.98

+Y   Field of view
        (degrees)    5.0

0

−20.0          0          20.0

Field curvature (mm)

FIG. 17a

9.98

Field of view
  (degrees)

5.0

0

−0.5          0          0.5

Optical distortion percentages (%)

FIG. 17b

7.08

5.0

Field of view
(degrees)

0

−20.0          0          20.0

Field curvature (mm)

FIG. 18a

7.08

5.0

Field of view
(degrees)

0

−1.0          0          1.0

Optical distortion percentages (%)

FIG. 18b

Field of view
(degrees)

5.0

0

−20.0　　　　　　0　　　　　20.0

Field curvature (mm)

FIG. 19a

Field of view
(degrees)

5.0

0

−1.0　　　　　　0　　　　　1.0

Optical distortion percentages (%)

FIG. 19b

FIG. 20

FIG. 21

Half-aperture diameter: 2.3023 mm

Normalized aperture coordinate

Defocus amount (mm)

FIG. 22a

80

Half-aperture diameter: 2.5116 mm

FIG. 22b

Half-aperture diameter: 2.8403 mm

Normalized
aperture
coordinate

FIG. 22c

Half-aperture diameter: 3.3048 mm

Normalized aperture coordinate

Defocus amount (mm)

FIG. 22d

Maximum field of view: 3.0000 mm (image height)

Actual image
height (mm)

Height differences between different wavelengths and
the center wavelength on the imaging plane (μm)

FIG. 23a

Maximum field of view: 3.0000 mm (image height)

Actual image height (mm)

Height differences between different wavelengths and the center wavelength on the imaging plane ($\mu$m)

FIG. 23b

Maximum field of view: 3.0000 mm (image height)

Height differences between different wavelengths and
the center wavelength on the imaging plane ($\mu$m)

FIG. 23c

Maximum field of view: 3.0000 mm (image height)

Actual image height (mm)

Height differences between different wavelengths and the center wavelength on the imaging plane ($\mu$m)

FIG. 23d

+Y  Field of view
(degrees)

14.8

10.0

0

−20.0                0                20.0
Field curvature (mm)

FIG. 24a

Field of view
(degrees)

14.8

10.0

0

−2.0                0                2.0
Optical distortion percentages (%)

FIG. 24b

Field of view (degrees)

Field curvature (mm)

FIG. 25a

Field of view (degrees)

Optical distortion percentages (%)

FIG. 25b

FIG. 26a

FIG. 26b

Field of view
(degrees)

−0.05          0          0.05

Field curvature (mm)

FIG. 27a

Field of view
(degrees)

−0.5          0          0.5

Optical distortion percentages (%)

FIG. 27b

FIG. 28

FIG. 29

Half-aperture diameter: 2.3931 mm

FIG. 30a

Half-aperture diameter: 2.8062 mm

Normalized
aperture
coordinate

Defocus amount (mm)

FIG. 30b

Half-aperture diameter: 3.1856 mm

Normalized aperture coordinate

Defocus amount (mm)

FIG. 30c

Maximum field of view: 4.0000 mm (half-image height)

Actual image height (mm)

Height differences between different wavelengths and the center wavelength on the imaging plane ($\mu$m)

FIG. 31a

Maximum field of view: 4.0000 mm (half-image height)

Actual image height (mm)

Height differences between different wavelengths and the center wavelength on the imaging plane ($\mu$m)

FIG. 31b

EP 4 099 076 A1

Maximum field of view: 4.0000 mm (half-image height)

Actual image
height (mm)

Height differences between different wavelengths and
the center wavelength on the imaging plane ($\mu$m)

FIG. 31c

EP 4 099 076 A1

15.52

10.0

+Y　Field of view
(degrees)

0

−0.05　　　0　　　0.05

Field curvature (mm)

FIG. 32a

10.0

Field of view
(degrees)

0

−2.0　　　0　　　2.0

Optical distortion percentages (%)

FIG. 32b

FIG. 33a

FIG. 33b

+Y   Field of view
     (degrees)

Field curvature (mm)

FIG. 34a

Field of view
(degrees)

Optical distortion percentages (%)

FIG. 34b

FIG. 35

FIG. 36

FIG. 37a

EP 4 099 076 A1

FIG. 37b

Half-aperture diameter: 2.8687 mm

FIG. 37c

FIG. 37d

Maximum field of view: 3.0000 mm (image height)

Height differences between different wavelengths and
the center wavelength on the imaging plane ($\mu$m)

FIG. 38a

EP 4 099 076 A1

Maximum field of view: 3.0000 mm (image height)

Actual image height (mm)

Height differences between different wavelengths and the center wavelength on the imaging plane ($\mu$m)

FIG. 38b

EP 4 099 076 A1

EP 4 099 076 A1

Maximum field of view: 3.0000 mm (image height)

FIG. 38c

Maximum field of view: 3.0000 mm (image height)

Actual image height (mm)

Height differences between different wavelengths and the center wavelength on the imaging plane ($\mu$m)

FIG. 38d

EP 4 099 076 A1

15.05

10.0

+Y   Field of view
(degrees)

0

−20.0              0              20.0

Field curvature (mm)

FIG. 39a

15.05

10.0

Field of view
(degrees)

0

−5.0              0              5.0

Optical distortion percentages (%)

FIG. 39b

FIG. 40a

FIG. 40b

+Y   Field of view
     (degrees)

Field curvature (mm)

FIG. 41a

Field of view
(degrees)

Optical distortion percentages (%)

FIG. 41b

+Y Field of view
(degrees)

5.0

0

−0.05         0         0.05

Field curvature (mm)

FIG. 42a

Field of view
(degrees)

5.0

0

−1.0         0         1.0

Optical distortion percentages (%)

FIG. 42b

FIG. 43

FIG. 44

Half-aperture diameter: 2.3197 mm

FIG. 45a

Half-aperture diameter: 2.5893 mm

FIG. 45b

Half-aperture diameter: 2.9403 mm

FIG. 45c

EP 4 099 076 A1

Half-aperture diameter: 3.4027 mm

Normalized aperture coordinate

Defocus amount (mm)

FIG. 45d

FIG. 46a

Maximum field of view: 3.0000 mm (image height)

Actual image height (mm)

3.0

2.0

1.0

0

-5.0  -4.0  -3.0  -2.0  -1.0  0  1.0  2.0  3.0  4.0  5.0

Height differences between different wavelengths and
the center wavelength on the imaging plane ($\mu m$)

FIG. 46b

EP 4 099 076 A1

Maximum field of view: 3.0000 mm (image height)

Height differences between different wavelengths and
the center wavelength on the imaging plane ($\mu$m)

FIG. 46c

Maximum field of view: 3.0000 mm (image height)

Actual image height (mm)

Height differences between different wavelengths and the center wavelength on the imaging plane ($\mu$m)

FIG. 46d

14.94

10.0

+Y  Field of view
(degrees)

0

−0.05                0                0.05

Field curvature (mm)

FIG. 47a

14.94

10.0

Field of view
(degrees)

0

−5.0                0                5.0

Optical distortion percentages (%)

FIG. 47b

FIG. 48a

FIG. 48b

FIG. 49a

FIG. 49b

5.0

+Y  Field of view
(degrees)

0

−0.10          0          0.10

Field curvature (mm)

FIG. 50a

5.0

Field of view
(degrees)

0

−2.0          0          2.0

Optical distortion percentages (%)

FIG. 50b

FIG. 51

FIG. 52

Half-aperture diameter: 2.4136 mm

FIG. 53a

EP 4 099 076 A1

Half-aperture diameter: 2.6755 mm

Normalized aperture coordinate

Defocus amount (mm)

FIG. 53b

FIG. 53c

EP 4 099 076 A1

FIG. 53d

FIG. 54a

Maximum field of view: 3.0000 mm (image height)

Actual image height (mm)

Height differences between different wavelengths and the center wavelength on the imaging plane (μm)

FIG. 54b

FIG. 54c

Maximum field of view: 3.0000 mm (image height)

Height differences between different wavelengths and
the center wavelength on the imaging plane ($\mu$m)

FIG. 54d

FIG. 55a

FIG. 55b

+Y  Field of view   5.0
      (degrees)

−0.05               0               0.05

Field curvature (mm)

FIG. 56a

Field of view
(degrees)

−5.0               0               5.0

Optical distortion percentages (%)

FIG. 56b

FIG. 57a

FIG. 57b

+Y Field of view
(degrees)

−0.10                0                0.10

Field curvature (mm)

FIG. 58a

Field of view
(degrees)

−2.0               0               2.0

Optical distortion percentages (%)

FIG. 58b

FIG. 59

FIG. 60

Half-aperture diameter: 2.0371 mm

Defocus amount (mm)

Normalized aperture coordinate

FIG. 61a

FIG. 61b

EP 4 099 076 A1

Half-aperture diameter: 2.7073 mm

Normalized
aperture
coordinate

Defocus amount (mm)

FIG. 61c

FIG. 61d

EP 4 099 076 A1

EP 4 099 076 A1

Maximum field of view: 3.0000 mm (image height)

Actual image
height (mm)

Height differences between different wavelengths and
the center wavelength on the imaging plane ($\mu$m)

FIG. 62a

Maximum field of view: 3.0000 mm (image height)

Actual image
height (mm)

Height differences between different wavelengths and
the center wavelength on the imaging plane ($\mu$m)

FIG. 62b

Maximum field of view: 3.0000 mm (image height)

Height differences between different wavelengths and
the center wavelength on the imaging plane ($\mu$m)

FIG. 62c

EP 4 099 076 A1

Maximum field of view: 3.0000 mm (image height)

Actual image
height (mm)

Height differences between different wavelengths and
the center wavelength on the imaging plane ($\mu$m)

FIG. 62d

15.05

10.0

+Y Field of view
(degrees)

0

−0.05          0          0.05

Field curvature (mm)

FIG. 63a

15.05

10.0

Field of view
(degrees)

0

−5.0          0          5.0

Optical distortion percentages (%)

FIG. 63b

FIG. 64a

FIG. 64b

FIG. 65a

FIG. 65b

5.0

+Y Field of view
(degrees)

0

−0.10     0     0.10

Field curvature (mm)

FIG. 66a

5.0

Field of view
(degrees)

0

−1.0     0     1.0

Optical distortion percentages (%)

FIG. 66b

FIG. 67

FIG. 68

Half-aperture diameter: 2.2614 mm

FIG. 69a

Half-aperture diameter: 2.4463 mm

FIG. 69b

Half-aperture diameter: 2.7589 mm

Normalized
aperture
coordinate

Defocus amount (mm)

FIG. 69c

FIG. 69d

FIG. 70a

FIG. 70b

FIG. 70c

Maximum field of view: 4.1900 mm (half-image height)

Actual image height (mm)

Height differences between different wavelengths and the center wavelength on the imaging plane ($\mu$m)

FIG. 70d

FIG. 71a

FIG. 71b

FIG. 72a

FIG. 72b

9.72

5.0

+Y  Field of view
(degrees)

0

−0.5                0                0.5

Field curvature (mm)

FIG. 73a

9.72

5.0

Field of view
(degrees)

0

−5.0                0                5.0

Optical distortion percentages (%)

FIG. 73b

8.06

5.0

+Y  Field of view
(degrees)

0

−0.5                    0                    0.5

Field curvature (mm)

FIG. 74a

8.06

5.0

Field of view
(degrees)

0

−5.0                    0                    5.0

Optical distortion percentages (%)

FIG. 74b

G1    G2    G3 G4

20

Light ray

FIG. 75

300

Light ray    301    400

500

Screen

FIG. 76

FIG. 77

## INTERNATIONAL SEARCH REPORT

International application No.

**PCT/CN2020/114566**

| A. | CLASSIFICATION OF SUBJECT MATTER |
|---|---|

G02B 15/16(2006.01)i

According to International Patent Classification (IPC) or to both national classification and IPC

| B. | FIELDS SEARCHED |
|---|---|

Minimum documentation searched (classification system followed by classification symbols)

G02B 15/-

Documentation searched other than minimum documentation to the extent that such documents are included in the fields searched

Electronic data base consulted during the international search (name of data base and, where practicable, search terms used)

CNPAT, CNKI, WPI, EPODOC: 透镜组, 第一, 第二, 第三, 第四, 正, 负, lens group, first, second, third, fourth, positive, negative

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2014238469 A (KONICA MINOLTA INC.) 18 December 2014 (2014-12-18) description, paragraphs [0076]-[0090], figure 10 | 1-20 |
| X | JP 2010060919 A (SHARP K. K.) 18 March 2010 (2010-03-18) description, paragraphs [0100]-[0112], figure 9 | 1,4-6,14,19.20 |
| A | CN 103797396 A (FUJI PHOTO FILM CO., LTD.) 14 May 2014 (2014-05-14) entire document | 1-20 |
| A | JP 2013218229 A (PANASONIC CORP.) 24 October 2013 (2013-10-24) entire document | 1-20 |
| A | JP 2015079229 A (KONICA MINOLTA INC.) 23 April 2015 (2015-04-23) entire document | 1-20 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 November 2020** | **01 December 2020** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/114566**

| Patent document cited in search report | | | Publication date (day/month/year) | Patent family member(s) | | | Publication date (day/month/year) |
|---|---|---|---|---|---|---|---|
| JP | 2014238469 | A | 18 December 2014 | None | | | |
| JP | 2010060919 | A | 18 March 2010 | JP | 5270267 | B2 | 21 August 2013 |
| CN | 103797396 | A | 14 May 2014 | US | 2014112651 | A1 | 24 April 2014 |
| | | | | US | 8712232 | B1 | 29 April 2014 |
| | | | | CN | 103797396 | B | 23 December 2015 |
| | | | | JP | 5766799 | B2 | 19 August 2015 |
| | | | | WO | 2013005376 | A1 | 10 January 2013 |
| JP | 2013218229 | A | 24 October 2013 | None | | | |
| JP | 2015079229 | A | 23 April 2015 | JP | 6237106 | B2 | 29 November 2017 |
| | | | | US | 9557536 | B2 | 31 January 2017 |
| | | | | US | 2015109485 | A1 | 23 April 2015 |

Form PCT/ISA/210 (patent family annex) (January 2015)

**EP 4 099 076 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010132392